# EUROPEAN PATENT APPLICATION

(11) **EP 4 510 501 A1**
(43) Date of publication of application: **19.02.2025**
(21) Application number: 23802706.4
(22) Date of filing: 28.04.2023
(51) Int. Cl.: H04L 9/32

(54) **COMMUNICATION METHOD, AND APPARATUS**

(30) Priority: 09.05.2022 CN 202210499938
(71) Applicant: Huawei Technologies Co., Ltd., Shenzhen, Guangdong 518129 (CN)
(72) Inventor: WU, Yizhuang, Shenzhen, Guangdong 518129 (CN)
(74) Representative: Goddar, Heinz J.
(86) International application number: PCT/CN2023/091681
(87) International publication number: WO 2023/216934

(57) **Abstract**

This application pertains to the field of communication technologies, and provides a communication method and apparatus, to ensure that a terminal and an application function can successfully complete authentication. In the method, the terminal may obtain, based on an authentication mechanism supported by the terminal, an authentication mechanism supported by each of at least one network, and a network in which the application function is located, an authentication mechanism supported by both the terminal and the network in which the application function is located, to determine a target authentication mechanism, so that the terminal and the application function can complete authentication with support of the network and establish a secure connection, thereby ensuring communication security.

## Description

This application claims priority to Chinese Patent Application No. 202210499938.7, filed with the China National Intellectual Property Administration on May 9, 2022 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

An architecture for enabling an edge application is an application layer architecture, and is used to enable user equipment (user equipment, UE) to use a deployed edge application. In this way, a user can access a nearby edge application, to optimize a resource access process of the user, for example, reduce a network transmission delay between the user and a computing resource, and improve user experience.

Currently, authentication needs to be performed between UE and an edge application, to establish a secure communication connection when the authentication succeeds, thereby ensuring communication security. Therefore, how to ensure that the UE and the edge application can successfully complete authentication and authorization is a problem worth studying currently.

### SUMMARY

Embodiments of this application provide a communication method and apparatus, to ensure that UE and an edge application can successfully complete authentication.

To achieve the foregoing objective, the following technical solutions are used in this application.

According to a first aspect, a communication method is provided. The method includes: A terminal obtains first information associated with at least one network, and obtains a target authentication mechanism based on an authentication mechanism supported by the terminal, the first information, and a network in which an application function AF is located, to establish a secure communication connection to the AF by using the target authentication mechanism. The first information includes an authentication mechanism supported by each of the at least one network, and the at least one network includes the network in which the AF is located.

It can be learned from the method according to the first aspect that the terminal may obtain, based on the authentication mechanism supported by the terminal, the authentication mechanism supported by each of the at least one network, and the network in which the AF is located, an authentication mechanism supported by both the terminal and the network in which the AF is located, to determine the target authentication mechanism, so that the terminal and the AF can complete authentication with support of the network and establish a secure connection, thereby ensuring communication security.

In a possible design solution, the network in which the AF is located is a home network of the terminal, and that a terminal obtains a target authentication mechanism based on an authentication mechanism supported by the terminal, the first information, and a network in which an AF is located includes: The terminal obtains the target authentication mechanism based on the authentication mechanism supported by the terminal and an authentication mechanism supported by the network in which the AF is located. In this case, the target authentication mechanism may be an authentication mechanism supported by both the terminal and the home network of the terminal. That is, if the AF is located in the home network of the terminal, whether the home network of the terminal supports the authentication mechanism needs to be considered, so that the terminal and the AF can complete authentication with support of the home network of the terminal.

Optionally, that the terminal obtains the target authentication mechanism based on the authentication mechanism supported by the terminal and an authentication mechanism supported by the network in which the AF is located includes: The terminal determines a candidate authentication mechanism based on the authentication mechanism supported by the terminal and the authentication mechanism supported by the network in which the AF is located, and sends the candidate authentication mechanism to the AF. In this way, the terminal can receive the target authentication mechanism from the AF. The candidate authentication mechanism is an authentication mechanism supported by both the terminal and the home network of the terminal. The candidate authentication mechanism includes a target authentication mechanism. The target authentication mechanism is an authentication mechanism supported by the AF, the terminal, and the home network of the terminal. That is, when the terminal does not know which authentication mechanism is supported by the AF, the terminal may consider only an authentication mechanism supported by the terminal and the network in which the AF is located, that is, the candidate authentication mechanism, and the AF determines the target authentication mechanism based on the authentication mechanism supported by the AF and the candidate authentication mechanism. In this case, because support of the AF is further considered in a process of determining the target authentication mechanism, a procedure failure caused by nonsupport of the AF can be avoided. Certainly, if the AF supports, by default, the authentication mechanism supported by each of the at least one network, support of the AF may not be considered. This is not limited herein.

Further, a client is deployed in the terminal, and that the terminal determines a candidate authentication mechanism based on the authentication mechanism supported by the terminal and the authentication mechanism supported by the network in which the AF is located includes: A non-access stratum NAS of the terminal sends a first authentication mechanism to the client, so that the client determines the candidate authentication mechanism based on the first authentication mechanism. The first authentication mechanism includes an authentication mechanism supported by both the terminal and the home network of the terminal. It may be understood that interaction between the terminal and the AF specifically includes interaction between the client of the terminal and the AF. For example, the client and the AF complete authentication, and establish a secure communication connection. In this case, the NAS needs to provide the client with the authentication mechanism supported by both the terminal and the home network of the terminal, so that the client determines the candidate authentication mechanism.

It may be understood, that the NAS provides the first authentication mechanism for the client is merely an example, and is not limited. For example, the NAS directly provides the candidate authentication mechanism for the client. Specifically, the NAS determines the candidate authentication mechanism based on an identifier of the network in which the AF is located, the first information, and the authentication mechanism supported by the terminal that are provided by the client. Optionally, the client may further provide an authentication mechanism supported by the client, so that the NAS determines the candidate authentication mechanism based on an identifier of the network in which the AF is located, the authentication mechanism supported by the client, the first information, and the authentication mechanism supported by the terminal that are provided by the client. Alternatively, the NAS provides the client with an authentication mechanism supported by the home network of the terminal, and the client determines the candidate authentication mechanism based on the authentication mechanism supported by the terminal and the authentication mechanism supported by the home network of the terminal. Alternatively, the NAS provides the client with the first information and the authentication mechanism supported by the terminal, so that the client determines the candidate authentication mechanism based on the first information, the authentication mechanism supported by the terminal, and the network in which the AF is located. Alternatively, there is any other possible implementation. This is not limited.

Further, that the client determines the candidate authentication mechanism based on the first authentication mechanism includes: The client determines the candidate authentication mechanism based on the authentication mechanism supported by the client and the first authentication mechanism. The candidate authentication mechanism is an authentication mechanism supported by the client, the terminal, and the home network of the terminal. That is, the client further considers support of the client in a process of determining the candidate authentication mechanism, so that a procedure failure caused by nonsupport of the client can be avoided. Certainly, if the client supports, by default, the authentication mechanism supported by each of the at least one network, support of the client may not be considered, that is, the client does not need to perform determining based on the authentication mechanism supported by the client. This is not limited.

Alternatively, further, that the client determines the candidate authentication mechanism based on the first authentication mechanism includes: The client determines the candidate authentication mechanism based on the authentication mechanism supported by the client, the network in which the AF is located, and the first authentication mechanism. The candidate authentication mechanism is an authentication mechanism supported by all of the client, the terminal, and the home network of the terminal.

Optionally, that the terminal obtains the target authentication mechanism based on the authentication mechanism supported by the terminal and an authentication mechanism supported by the network in which the AF is located includes: The terminal determines the target authentication mechanism based on an authentication mechanism supported by the AF, the authentication mechanism supported by the terminal, and the authentication mechanism supported by the network in which the AF is located. The target authentication mechanism is an authentication mechanism supported by all of the AF, the terminal, and the home network of the terminal. That is, when the terminal knows which authentication mechanism is supported by the AF, the terminal may directly determine the target authentication mechanism, to reduce a quantity of times of unnecessary interaction with the AF, thereby reducing overheads.

Further, that the terminal determines the target authentication mechanism based on an authentication mechanism supported by the AF, the authentication mechanism supported by the terminal, and the authentication mechanism supported by the network in which the AF is located includes: A NAS of the terminal sends a first authentication mechanism to a client, so that the client determines the target authentication mechanism based on the authentication mechanism supported by the AF and the first authentication mechanism. The first authentication mechanism includes an authentication mechanism supported by both the terminal and the home network of the terminal. It may be understood that interaction between the terminal and the AF specifically includes interaction between the client of the terminal and the AF. For example, the client and the AF complete authentication, and establish a secure communication connection. In this case, the NAS needs to provide the client with the authentication mechanism supported by both the terminal and the home network of the terminal, that is, the first authentication mechanism, so that the client determines the target authentication mechanism.

It may be understood that, that the NAS provides the first authentication mechanism for the client is merely an example, and is not limited. For example, the NAS directly provides the target authentication mechanism for the client. Specifically, the NAS determines the target authentication mechanism based on an identifier of the network in which the AF is located, the authentication mechanism supported by the AF, the first information, and the authentication mechanism supported by the terminal that are provided by the client. Optionally, the client may further provide an authentication mechanism supported by the client, so that the NAS determines the target authentication mechanism based on an identifier of the network in which the AF is located, the authentication mechanism supported by the AF, the authentication mechanism supported by the client, the first information, and the authentication mechanism supported by the terminal. Alternatively, the NAS provides the client with an authentication mechanism supported by the home network of the terminal, and the client determines the target authentication mechanism based on the authentication mechanism supported by the AF, the authentication mechanism supported by the terminal, and the authentication mechanism supported by the home network of the terminal. The NAS provides the client with the first information and the authentication mechanism supported by the terminal, so that the client determines the target authentication mechanism based on the first information, the authentication mechanism supported by the terminal, the network in which the AF is located, and the authentication mechanism supported by the AF. Alternatively, there is any other possible implementation. This is not limited.

Further, that the client determines the target authentication mechanism based on the authentication mechanism supported by the AF and the first authentication mechanism includes: The client determines the target authentication mechanism based on an authentication mechanism supported by the client, the authentication mechanism supported by the AF, and the first authentication mechanism. The target authentication mechanism is an authentication mechanism supported by all of the client, the AF, the terminal, and the home network of the terminal. That is, the client further considers support of the client in a process of determining the target authentication mechanism, so that a procedure failure caused by nonsupport of the client can be avoided. Certainly, if the client supports, by default, the authentication mechanism supported by each of the at least one network, support of the client may not be considered. This is not limited.

Alternatively, further, that the client determines the target authentication mechanism based on the authentication mechanism supported by the AF and the first authentication mechanism includes: The client determines the target authentication mechanism based on an authentication mechanism supported by the client, the network in which the AF is located, the authentication mechanism supported by the AF, and the first authentication mechanism. The target authentication mechanism is an authentication mechanism supported by all of the client, the AF, the terminal, and the home network of the terminal.

In another possible design solution, the network in which the AF is located is a network on which the terminal currently camps, the network on which the terminal currently camps is not a home network of the terminal, and the at least one network further includes the home network of the terminal; and that a terminal obtains a target authentication mechanism based on an authentication mechanism supported by the terminal, the first information, and a network in which an AF is located includes: The terminal obtains the target authentication mechanism based on the authentication mechanism supported by the terminal, an authentication mechanism supported by the network in which the AF is located, and an authentication mechanism supported by the home network of the terminal. In this case, the target authentication mechanism may be an authentication mechanism supported by all of the terminal, the network in which the AF is located, and the home network of the terminal. It may be understood that, because authentication between the terminal and the AF usually needs support of the home network of the terminal, when the network in which the AF is located is not the home network of the terminal, whether the network in which the AF is located supports the authentication mechanism and whether the home network of the terminal supports the authentication mechanism both need to be considered, so that the terminal and the AF can complete authentication with support of the network in which the AF is located and the home network of the terminal. In addition, when the network on which the terminal currently camps is not the home network of the terminal, the network in which the AF is located may also be the home network of the terminal. In this case, only the authentication mechanism supported by the home network of the terminal needs to be considered.

Optionally, that the terminal obtains the target authentication mechanism based on the authentication mechanism supported by the terminal, an authentication mechanism supported by the network in which the AF is located, and an authentication mechanism supported by the home network of the terminal includes: The terminal determines the candidate authentication mechanism based on the authentication mechanism supported by the terminal, the authentication mechanism supported by the network in which the AF is located, and the authentication mechanism supported by the home network of the terminal, and sends the candidate authentication mechanism to the AF. In this way, the terminal may receive the target authentication mechanism from the AF. The candidate authentication mechanism is an authentication mechanism supported by the terminal, the network on which the terminal currently camps, and the home network of the terminal. The candidate authentication mechanism includes the target authentication mechanism. The target authentication mechanism is an authentication mechanism supported by all of the AF, the terminal, the network on which the terminal currently camps, and the home network of the terminal. That is, when the terminal does not know which authentication mechanism is supported by the AF, the terminal may consider only the authentication mechanism supported by the terminal, the network in which the AF is located, and the home network of the terminal, that is, the candidate authentication mechanism, and the AF determines the target authentication mechanism based on the authentication mechanism supported by the AF and the candidate authentication mechanism. In this case, because support of the AF is further considered in a process of determining the target authentication mechanism, a procedure failure caused by nonsupport of the AF can be avoided. Certainly, if the AF supports, by default, the authentication mechanism supported by each of the at least one network, support of the AF may not be considered. This is not limited herein.

Further, that the terminal determines the candidate authentication mechanism based on the authentication mechanism supported by the terminal, the authentication mechanism supported by the network in which the AF is located, and the authentication mechanism supported by the home network of the terminal includes: A NAS of the terminal sends a first authentication mechanism to a client, so that the client determines the candidate authentication mechanism based on the first authentication mechanism. The first authentication mechanism includes an authentication mechanism supported by all of the terminal, the network on which the terminal currently camps, and the home network of the terminal. It may be understood that interaction between the terminal and the AF specifically includes interaction between the client of the terminal and the AF. For example, the client and the AF complete authentication, and establish a secure communication connection. In this case, the NAS needs to provide the client with the authentication mechanism supported by all of the terminal, the network on which the terminal currently camps, and the home network of the terminal, so that the client determines the candidate authentication mechanism.

It may be understood that, that the NAS provides the first authentication mechanism for the client is merely an example, and is not limited. For example, the NAS directly provides the candidate authentication mechanism for the client. Specifically, the NAS determines the candidate authentication mechanism based on an identifier of the network in which the AF is located, the first information, and the authentication mechanism supported by the terminal that are provided by the client. Optionally, the client may further provide an authentication mechanism supported by the client, so that the NAS determines the candidate authentication mechanism based on the identifier of the network in which the AF is located, the authentication mechanism supported by the client, the first information, and the authentication mechanism supported by the terminal that are provided by the client. Alternatively, the NAS provides the client with an authentication mechanism supported by both the network on which the terminal currently camps and the home network of the terminal, and the client determines the candidate authentication mechanism based on the authentication mechanism supported by the terminal and the authentication mechanism supported by both the network on which the terminal currently camps and the home network of the terminal. Alternatively, the NAS provides the client with the first information and the authentication mechanism supported by the terminal, so that the client determines the candidate authentication mechanism based on the first information, the authentication mechanism supported by the terminal, and the network in which the AF is located. Alternatively, there is any other possible implementation. This is not limited.

Further, that the client determines the candidate authentication mechanism based on the first authentication mechanism includes: The client determines the candidate authentication mechanism based on the authentication mechanism supported by the client and the first authentication mechanism. The candidate authentication mechanism is an authentication mechanism supported by all of the client, the terminal, the network on which the terminal currently camps, and the home network of the terminal. That is, the client further considers support of the client in a process of determining the candidate authentication mechanism, so that a procedure failure caused by nonsupport of the client can be avoided. Certainly, if the client supports, by default, the authentication mechanism supported by each of the at least one network, support of the client may not be considered. This is not limited.

Alternatively, further, that the client determines the candidate authentication mechanism based on the first authentication mechanism includes: The client determines the candidate authentication mechanism based on the network in which the AF is located, the authentication mechanism supported by the client, and the first authentication mechanism. The candidate authentication mechanism is an authentication mechanism supported by all of the client, the terminal, the network on which the terminal currently camps, and the home network of the terminal.

Optionally, that the terminal obtains the target authentication mechanism based on the authentication mechanism supported by the terminal, an authentication mechanism supported by the network in which the AF is located, and an authentication mechanism supported by the home network of the terminal includes: The terminal determines the target authentication mechanism based on an authentication mechanism supported by the AF, the authentication mechanism supported by the terminal, the authentication mechanism supported by the network in which the AF is located, and the authentication mechanism supported by the home network of the terminal. The target authentication mechanism is an authentication mechanism supported by all of the AF, the terminal, the network on which the terminal currently camps, and the home network of the terminal. That is, when the terminal knows which authentication mechanism is supported by the AF, the terminal may directly determine the target authentication mechanism, to reduce a quantity of times of unnecessary interaction with the AF, thereby reducing overheads.

Further, that the terminal determines the target authentication mechanism based on an authentication mechanism supported by the AF, the authentication mechanism supported by the terminal, the authentication mechanism supported by the network in which the AF is located, and the authentication mechanism supported by the home network of the terminal includes: A NAS of the terminal sends a first authentication mechanism to a client, so that the client determines the target authentication mechanism based on the authentication mechanism supported by the AF and the first authentication mechanism. The first authentication mechanism includes an authentication mechanism supported by all of the terminal, the network on which the terminal currently camps, and the home network of the terminal. It may be understood that interaction between the terminal and the AF specifically includes interaction between the client of the terminal and the AF. For example, the client and the AF complete authentication, and establish a secure communication connection. In this case, the NAS needs to provide the client with the authentication mechanism supported by all of the terminal, the network on which the terminal currently camps, and the home network of the terminal, so that the client determines the target authentication mechanism.

It may be understood that, that the NAS provides the first authentication mechanism for the client is merely an example, and is not limited. For example, the NAS directly provides the target authentication mechanism for the client. Specifically, the NAS determines the target authentication mechanism based on an identifier of the network in which the AF is located, the authentication mechanism supported by the AF, the first information, and the authentication mechanism supported by the terminal that are provided by the client. Optionally, the client may further provide an authentication mechanism supported by the client, so that the NAS determines the target authentication mechanism based on an identifier of the network in which the AF is located, the authentication mechanism supported by the AF, the authentication mechanism supported by the client, the first information, and the authentication mechanism supported by the terminal. Alternatively, the NAS provides the client with an authentication mechanism supported by the network on which the terminal currently camps and the home network of the terminal, and the client determines the target authentication mechanism based on the authentication mechanism supported by the AF, the authentication mechanism supported by the terminal, and the authentication mechanism supported by the network on which the terminal currently camps and the home network of the terminal. Alternatively, the NAS provides the client with the first information and the authentication mechanism supported by the terminal, so that the client determines the target authentication mechanism based on the first information, the authentication mechanism supported by the terminal, the network in which the AF is located, and the authentication mechanism supported by the AF. Alternatively, there is any other possible implementation. This is not limited.

Further, that the client determines the target authentication mechanism based on the authentication mechanism supported by the AF and the first authentication mechanism includes: The client determines the target authentication mechanism based on an authentication mechanism supported by the client, the authentication mechanism supported by the AF, and the first authentication mechanism. The target authentication mechanism is an authentication mechanism supported by all of the client, the AF, the terminal, the network on which the terminal currently camps, and the home network of the terminal. That is, the client further considers support of the client in a process of determining the target authentication mechanism, so that a procedure failure caused by nonsupport of the client can be avoided. Certainly, if the client supports, by default, the authentication mechanism supported by each of the at least one network, support of the client may not be considered. This is not limited.

Alternatively, further, that the client determines the target authentication mechanism based on the authentication mechanism supported by the AF and the first authentication mechanism includes: The client determines the target authentication mechanism based on an authentication mechanism supported by the client, the network in which the AF is located, the authentication mechanism supported by the AF, and the first authentication mechanism. The target authentication mechanism is an authentication mechanism supported by all of the client, the AF, the terminal, the network on which the terminal currently camps, and the home network of the terminal.

In a possible design solution, the method according to the first aspect may further include: The terminal obtains an authentication mechanism supported by the AF, so that the terminal can subsequently directly determine the target authentication mechanism based on the authentication mechanism supported by the AF.

Optionally, the AF is an edge enabler server EES, and that the terminal obtains an authentication mechanism supported by the AF includes: The terminal receives second information from an edge configuration server ECS. The ECS is associated with the EES. For example, the EES is managed by the ECS, and the ECS stores configuration information of the EES. The second information includes an authentication mechanism supported by the EES. That is, the terminal may obtain, from the ECS, the authentication mechanism supported by the EES, and does not need to interact with the EES, to reduce a quantity of times of unnecessary interaction with the EES, thereby reducing overheads.

Optionally, that the terminal receives second information from an ECS includes: The terminal receives the second information from the ECS through a secure communication connection between the terminal and the ECS. In this way, communication security can be ensured, and information leakage can be avoided.

Optionally, the second information includes an identifier of a network in which the EES is located, so that the terminal determines the network in which the EES is located.

In a possible design solution, the method according to the first aspect may further include: the AF is an ECS in a home network of the terminal, and that the terminal obtains an authentication mechanism supported by the AF includes: The terminal receives second information from the home network of the terminal. The second information includes an authentication mechanism supported by the ECS in the home network of the terminal. That is, the terminal may obtain, from the home network of the terminal, the authentication mechanism supported by the ECS in the home network, and does not need to interact with the ECS, to reduce a quantity of times of unnecessary interaction with the ECS, thereby reducing overheads.

It may be understood that, that the terminal obtains, from the home network of the terminal, the authentication mechanism supported by the ECS in the home network is merely an example, and is not limited. For example, the AF is the ECS in the home network of the terminal, and a network on which the terminal currently camps is not the home network of the terminal. In this case, the terminal may also obtain, from the network on which the terminal currently camps, the authentication mechanism supported by the ECS in the home network of the terminal. Alternatively, the AF is an ECS in a network on which the terminal currently camps, and the network on which the terminal currently camps is not the home network of the terminal. In this case, the terminal may also obtain, from the network on which the terminal currently camps, an authentication mechanism supported by the ECS in the network on which the terminal currently camps. Alternatively, there is any other possible implementation. This is not limited.

Optionally, the second information includes an identifier of the home network of the terminal, so that the terminal determines a network in which the ECS is located.

Optionally, the AF is an ECS in a network on which the terminal currently camps, the network on which the terminal currently camps is not a home network of the terminal, and that the terminal obtains an authentication mechanism supported by the AF includes: The terminal receives second information from the ECS in the home network of the terminal. The second information includes an authentication mechanism supported by the ECS in the network on which the terminal currently camps, and the ECS in the network on which the terminal currently camps is associated with the ECS in the home network of the terminal. That is, the terminal may obtain, from the ECS in the home network of the terminal, the authentication mechanism supported by the ECS in the network on which the terminal currently camps, and does not need to interact with the ECS in the network on which the terminal currently camps, to reduce a quantity of times of unnecessary interaction with the ECS, thereby reducing overheads.

Optionally, that the terminal receives second information from the ECS in the home network of the terminal includes: The terminal receives the second information from the ECS in the home network of the terminal through a secure communication connection between the terminal and the ECS in the home network of the terminal. In this way, communication security can be ensured, and information leakage can be avoided.

Optionally, the second information includes an identifier of the network on which the terminal currently camps, so that the terminal determines a network in which the ECS is located.

In a possible design solution, that a terminal obtains first information associated with at least one network includes: The terminal sends a registration request to a first network. The registration request is used by the terminal to request to register with the first network. In this way, the terminal may receive the first information from the first network in a process of registering with the first network or after registering with the first network. That is, the terminal may obtain the first information by using a registration procedure or by reusing a registration procedure, to reduce implementation difficulty of the solution. When the first network and the network in which the AF is located are different networks, the at least one network further includes the first network.

It may be understood that, that the terminal obtains the first information by using the registration procedure is merely an example, and is not limited. For example, the terminal may also obtain the first information by using a handover procedure or a reselection procedure. In addition, after the terminal registers with the first network, the first network may be understood as the network on which the terminal currently camps. Subsequently, if the terminal roams to another network, the another network may be understood as the network on which the terminal currently camps.

Optionally, that the terminal receives the first information from the first network in a process of registering with the first network or after registering with the first network includes: The terminal receives, from the first network in the process of registering with the first network, a registration accept message that carries the first information. Alternatively, after registering with the first network, the terminal receives, from the first network, at least one of the following messages that carry the first information: a user equipment UE configuration update command message, a downlink non-access stratum transport message, or a session management message. That is, the first information may be carried in existing signaling, or may be implemented by reusing existing signaling. In this way, implementation difficulty of the solution can be reduced. In addition, the signaling may be encrypted and integrity-protected signaling, to ensure communication security.

In a possible design solution, the at least one network includes a network on which the terminal currently camps, and the network on which the terminal currently camps is a home network of the terminal. That is, the terminal may obtain an authentication mechanism supported by the home network of the terminal. Alternatively, the at least one network includes a network on which the terminal currently camps, the network on which the terminal currently camps is not a home network of the terminal, and the at least one network further includes the home network of the terminal. That is, the terminal may obtain an authentication mechanism supported by the network on which the terminal currently camps and the home network of the terminal. That is, the first information may include only an authentication mechanism associated with the network on which the terminal currently camps. This can avoid obtaining an authentication mechanism corresponding to an unrelated network, thereby reducing communication overheads.

Optionally, when the network on which the terminal currently camps is not the home network of the terminal, the first information further includes an authentication mechanism supported by the home network of the terminal. It may be understood that, because authentication between the terminal and the AF usually needs support of the home network of the terminal, when the network in which the AF is located is not the home network of the terminal, whether the network in which the AF is located supports the authentication mechanism and whether the home network of the terminal supports the authentication mechanism both need to be considered, so that the terminal and the AF can complete authentication with support of the network in which the AF is located and the home network of the terminal. In addition, when the network on which the terminal currently camps is not the home network of the terminal, the network in which the AF is located may also be the home network of the terminal. In this case, only the authentication mechanism supported by the home network of the terminal needs to be considered.

In a possible design solution, that a terminal obtains first information associated with at least one network includes: The terminal obtains the first information from an access network device. That is, if the terminal expects to access a network, the terminal may obtain the first information through the access network device in the network, to implement on-demand obtaining.

Optionally, that the terminal obtains, from the access network device, an authentication mechanism supported by a network in which the access network device is located includes: The terminal receives a system information block SIB from the access network device, where the SIB includes the first information. That is, the authentication mechanism supported by the network in which the access network device is located may be carried in existing signaling, or may be implemented by reusing existing signaling. In this way, implementation difficulty of the solution can be reduced.

In a possible design solution, the first information includes an identifier of each of the at least one network, so that the terminal identifies each network.

In a possible design solution, the authentication mechanism supported by each of the at least one network includes one or more of the following: an authentication and key management for applications AKMA mechanism, a generic bootstrapping architecture GBA mechanism, or any other possible authentication mechanism. This is not limited. Optionally, the GBA mechanism may include a mobile equipment-based GBA mechanism, a universal integrated circuit card-based GBA mechanism, a GBA digest, or the like. The network may support all GBA mechanisms, or only one or more of the GBA mechanisms.

It may be understood that an example in which the authentication mechanism supported by the terminal is considered is used above. This is not limited. For example, when the terminal supports, by default, the authentication mechanism supported by each of the at least one network, the authentication mechanism supported by the terminal may not be considered. In this case, the terminal may obtain the target authentication mechanism based on the first information and the network in which the application function AF is located. For a specific implementation, refer to the foregoing related descriptions. Details are not described again.

According to a second aspect, a communication method is provided. The method includes: A first network element obtains an authentication mechanism supported by each of at least one network, and sends, to a terminal, first information associated with the at least one network. The first information includes the authentication mechanism supported by each of the at least one network.

It can be learned from the method according to the second aspect that the first network element may provide, by using the first information, the terminal with the authentication mechanism supported by each of the at least one network. For example, the first network element may directly send the first information to the terminal, or send the first information to the terminal through another network element, so that the terminal can complete authentication between the terminal and an application function AF with support of the network and establish a secure connection, thereby ensuring communication security.

In a possible design solution, that a first network element obtains an authentication mechanism supported by each of at least one network includes: The first network element obtains an authentication mechanism supported by a network on which the terminal currently camps. The terminal is associated with the first network element. For example, the terminal and the first network element may communicate with each other. The at least one network includes the network on which the terminal currently camps.

Optionally, the network on which the terminal currently camps is a home network of the terminal, and that the first network element obtains an authentication mechanism supported by a network on which the terminal currently camps includes: The first network element obtains an authentication mechanism supported by the home network of the terminal.

Optionally, the network on which the terminal currently camps is not the home network of the terminal, and the at least one network further includes the home network of the terminal. That the first network element obtains an authentication mechanism supported by a network on which the terminal currently camps includes: The first network element obtains an authentication mechanism supported by both the network on which the terminal currently camps and the home network of the terminal.

Further, the method according to the second aspect may further include: The first network element obtains the authentication mechanism supported by the home network of the terminal.

In a possible design solution, the first network element is a data management network element, and that a first network element obtains an authentication mechanism supported by each of at least one network includes: The data management network element obtains, from subscription data of the terminal, the authentication mechanism supported by each of the at least one network.

It may be understood that an authentication mechanism supported by each of a plurality of networks may be stored in the subscription data of the terminal, and the at least one network is one or more of the plurality of networks. That is, the first network element may selectively obtain, from the subscription data of the terminal, an authentication mechanism supported by each of the one or more networks, to avoid obtaining an authentication mechanism corresponding to an unrelated network, thereby reducing communication overheads. In addition, the authentication mechanism supported by each of the at least one network may also be stored in common information of the data management network element. This is not limited.

Optionally, that the data management network element obtains, from subscription data of the terminal, the authentication mechanism supported by each of the at least one network includes: The data management network element receives a subscription data obtaining request message from a mobility management network element, and obtains, from the subscription data of the terminal based on the subscription data obtaining request message, the authentication mechanism supported by each of the at least one network. Based on this, that the first network element sends, to a terminal, first information associated with the at least one network includes: The data management network element sends a subscription data obtaining response message to the mobility management network element corresponding to the terminal, where the subscription data obtaining response message includes the first information. That is, the data management network element may reuse a subscription data procedure, and when providing the subscription data of the terminal for the mobility management network element, also provide the authentication mechanism supported by each of the at least one network. In this way, a quantity of times of unnecessary interaction between the mobility management network element and the data management network element can be reduced, thereby reducing overheads.

Optionally, the subscription data obtaining request message includes an identifier of the network on which the terminal currently camps, and that the data management network element receives a subscription data obtaining request message from a mobility management network element, and obtains, from the subscription data of the terminal based on the subscription data obtaining request message, the authentication mechanism supported by each of the at least one network includes: The data management network element obtains, from the subscription data of the terminal based on the identifier of the network on which the terminal currently camps, the authentication mechanism supported by each of the at least one network. If the identifier of the network on which the terminal currently camps indicates that the network on which the terminal currently camps is the home network of the terminal, the data management network element obtains an authentication mechanism supported by the home network of the terminal. If the identifier of the network on which the terminal currently camps indicates that the network on which the terminal currently camps is not the home network of the terminal, the data management network element obtains an authentication mechanism supported by the home network of the terminal and the network on which the terminal currently camps.

In a possible design solution, the first network element is a mobility management network element, and that a first network element obtains an authentication mechanism supported by each of at least one network includes: The mobility management network element obtains, from a data management network element, the authentication mechanism supported by each of the at least one network.

It may be understood that the mobility management network element may obtain, from the data management network element, an authentication mechanism supported by each of a plurality of networks, and obtain, from the authentication mechanism supported by each of the plurality of networks, the authentication mechanism supported by each of the at least one network, to avoid obtaining an authentication mechanism corresponding to an unrelated network, thereby reducing communication overheads. For example, the mobility management network element obtains, from the authentication mechanism supported by each of the plurality of networks and based on an identifier of a network on which the terminal currently camps, the authentication mechanism supported by each of the at least one network. If the identifier of the network on which the terminal currently camps indicates that the network on which the terminal currently camps is a home network of the terminal, the mobility management network element obtains an authentication mechanism supported by the home network of the terminal. If the identifier of the network on which the terminal currently camps indicates that the network on which the terminal currently camps is not a home network of the terminal, the mobility management network element obtains an authentication mechanism supported by the home network of the terminal and the network on which the terminal currently camps.

Optionally, that the mobility management network element obtains, from a data management network element, the authentication mechanism supported by each of the at least one network includes: The mobility management network element receives a registration request message from the terminal, and obtains subscription data of the terminal from the data management network element based on the registration request message, where the registration request message is used by the terminal to request to register with a network in which the mobility management network element is located, and the subscription data of the terminal includes the authentication mechanism supported by each of the at least one network. That is, the mobility management network element may reuse a subscription data procedure, and when obtaining the subscription data of the terminal from the data management network element, also obtain the authentication mechanism supported by each of the at least one network. In this way, a quantity of times of unnecessary interaction between the mobility management network element and the data management network element can be reduced, thereby reducing overheads.

Further, that a first network element sends, to a terminal, first information associated with the at least one network includes: In a process in which the terminal registers with a network in which the mobility management network element is located, the mobility management network element sends, to the terminal, a registration accept message that carries the first information. Alternatively, after the terminal registers with a network in which the mobility management network element is located, the mobility management network element obtains, from the data management network element or another network element, the authentication mechanism supported by each of the at least one network, and sends the first information to the terminal by using any one of the following messages: a user equipment UE configuration update command message, a downlink non-access stratum transport message, or a session management message.

In addition, for other technical effects of the communication method according to the second aspect, refer to the technical effects of the communication method according to the first aspect. Details are not described herein again.

According to a third aspect, a communication method is provided. The method includes: An application function AF obtains first information associated with at least one network, and obtains a target authentication mechanism based on an authentication mechanism supported by the AF, the first information, and a network in which the AF is located, to establish a secure communication connection to a terminal by using the target authentication mechanism. The first information includes an authentication mechanism supported by each of the at least one network, and the at least one network includes the network in which the AF is located.

It can be learned from the method according to the third aspect that the AF may obtain, based on the authentication mechanism supported by the AF, the authentication mechanism supported by each of the at least one network, and the network in which the AF is located, an authentication mechanism supported by both the AF and the network in which the AF is located, that is, the target authentication mechanism, so that the AF and the terminal can complete authentication with support of the network and establish a secure connection, thereby ensuring communication security.

In a possible design solution, the network in which the AF is located is a home network of the terminal. That the AF obtains a target authentication mechanism based on an authentication mechanism supported by the AF, the first information, and a network in which the AF is located includes: The AF obtains the target authentication mechanism based on the authentication mechanism supported by the AF and an authentication mechanism supported by the home network of the terminal. The target authentication mechanism is an authentication mechanism supported by both the AF and the home network of the terminal.

Optionally, the method according to the third aspect may include: The AF receives an identifier of the home network of the terminal. That is, the network in which the AF is located is the home network of the terminal, and the AF obtains the target authentication mechanism based on the authentication mechanism supported by the AF, the first information, and the identifier of the home network of the terminal.

Optionally, the method according to the third aspect may further include: The AF receives a first message from the terminal, to determine, based on the first message, that the network in which the AF is located is the home network of the terminal. The first message includes the identifier of the home network of the terminal. That is, the AF may determine, by using the home network of the terminal as a reference, a relationship between the network in which the AF is located and the home network of the terminal, to determine that the network in which the AF is located is the home network of the terminal. Certainly, the AF may also know, by default, that the AF is located in the home network of the terminal. For example, the AF allows only a user of a non-roaming terminal to access the AF. This is not limited.

Optionally, the first message may directly provide an identifier of the network in which the AF is located.

Optionally, a client is deployed on the terminal, and that the AF obtains the target authentication mechanism based on the authentication mechanism supported by the AF and an authentication mechanism supported by the home network of the terminal includes: The AF obtains the target authentication mechanism based on an authentication mechanism supported by the client, the authentication mechanism supported by the AF, and the authentication mechanism supported by the home network of the terminal. The target authentication mechanism is an authentication mechanism supported by all of the client, the AF, and the home network of the terminal.

Further, the method according to the third aspect may further include: The AF receives a first message from the terminal. The first message includes an authentication mechanism supported by a client. It may be understood that because the client is usually deployed on the terminal, the AF may obtain, from the terminal, the authentication mechanism supported by the client. This is not limited.

Further, there are a plurality of authentication mechanisms supported by the client, and the first message includes priority information of the plurality of authentication mechanisms supported by the client, so that the AF can determine a target authentication mechanism with a high priority. Alternatively, the AF may be locally configured with priority information of a plurality of authentication mechanisms. When a plurality of available authentication mechanisms are determined, the AF may determine an authentication mechanism with a highest priority as the target authentication mechanism. Alternatively, when an authentication mechanism is determined, whether the authentication mechanism meets the foregoing condition (and the authentication mechanism supported by all of the client, the AF, and the network) is determined in descending order of configured priorities of authentication mechanisms. If the authentication mechanism meets the foregoing condition (and the authentication mechanism supported by all of the client, the AF, and the network), the authentication mechanism is used as the target authentication mechanism, and determining is stopped. This is not specifically limited.

Further, the first message may be carried in a protocol data unit PDU session of the terminal.

Optionally, that the AF obtains the target authentication mechanism based on an authentication mechanism supported by the client, the authentication mechanism supported by the AF, and the authentication mechanism supported by the home network of the terminal includes: The AF obtains the target authentication mechanism based on an authentication mechanism supported by the terminal and the client, the authentication mechanism supported by the AF, and the authentication mechanism supported by the home network of the terminal. The target authentication mechanism is an authentication mechanism supported by all of the terminal, the client, the AF, and the home network of the terminal.

Further, the method according to the third aspect may further include: The AF receives a first message from the terminal. The first message includes an authentication mechanism supported by the terminal and the client.

Further, there are a plurality of authentication mechanisms supported by the terminal and the client, and the first message includes priority information of the plurality of authentication mechanisms supported by the terminal and the client, so that the AF can determine a target authentication mechanism with a high priority.

Further, the first message is carried in a PDU session of the terminal.

In another possible design solution, the network in which the AF is located is a network on which the terminal currently camps, and the network on which the terminal currently camps is not a home network of the terminal; and that the AF obtains a target authentication mechanism based on an authentication mechanism supported by the AF, the first information, and a network in which the AF is located includes: The AF obtains the target authentication mechanism based on the authentication mechanism supported by the AF, an authentication mechanism supported by the network on which the terminal currently camps, and an authentication mechanism supported by the home network of the terminal, where the target authentication mechanism is an authentication mechanism supported by all of the AF, the network on which the terminal currently camps, and the home network of the terminal.

Optionally, the method according to the third aspect may include: The AF receives an identifier of the home network of the terminal. That is, the AF obtains the target authentication mechanism based on the authentication mechanism supported by the AF, the first information, and the identifier of the home network of the terminal.

Optionally, the method according to the third aspect may include: The AF receives an identifier of the home network of the terminal and an identifier of the network in which the AF is located. That is, the AF obtains the target authentication mechanism based on the authentication mechanism supported by the AF, the first information, the identifier of the home network of the terminal, and the identifier of the network in which the AF is located. The network in which the AF is located is not the home network of the terminal.

Optionally, the method according to the third aspect may further include: The AF receives a first message from the terminal, to determine, based on the first message, that the network in which the AF is located is a network on which the terminal currently camps, and the network on which the terminal currently camps is not a home network of the terminal. The first message includes an identifier of the home network of the terminal. That is, the AF may determine, by using the home network of the terminal as a reference, a relationship between the network in which the AF is located and the home network of the terminal, to determine that the network in which the AF is located is not the home network of the terminal.

Further, the first message includes an identifier of the network on which the terminal currently camps, so that the AF learns that the AF is located in the network on which the terminal currently camps. Certainly, the AF may also know, by default, that the AF is located in the network on which the terminal currently camps. For example, the AF allows only a user of a non-roaming terminal to access the AF. This is not limited.

Further, the first message is carried in a PDU session of the terminal.

Optionally, the first message may directly provide an identifier of the network in which the AF is located.

Optionally, a client is deployed on the terminal, and that the AF obtains the target authentication mechanism based on the authentication mechanism supported by the AF, an authentication mechanism supported by the network on which the terminal currently camps, and an authentication mechanism supported by the home network of the terminal includes: The AF obtains the target authentication mechanism based on an authentication mechanism supported by the client, the authentication mechanism supported by the AF, the authentication mechanism supported by the network on which the terminal currently camps, and the authentication mechanism supported by the home network of the terminal. The target authentication mechanism is an authentication mechanism supported by all of the client, the AF, the home network of the terminal, and the network on which the terminal currently camps.

Further, the method according to the third aspect may further include: The AF receives a first message from the terminal. The first message includes an authentication mechanism supported by a client.

Further, there are a plurality of authentication mechanisms supported by the client, and the first message includes priority information of the plurality of authentication mechanisms supported by the client.

Further, the first message is carried in a PDU session of the terminal.

Optionally, a client is deployed on the terminal, and that the AF obtains the target authentication mechanism based on the authentication mechanism supported by the AF, an authentication mechanism supported by the network on which the terminal currently camps, and an authentication mechanism supported by the home network of the terminal includes: The AF obtains the target authentication mechanism based on an authentication mechanism supported by the terminal and the client, the authentication mechanism supported by the AF, the authentication mechanism supported by the network on which the terminal currently camps, and the authentication mechanism supported by the home network of the terminal, where the target authentication mechanism is an authentication mechanism supported by all of the terminal, the client, the AF, the home network of the terminal, and the network on which the terminal currently camps.

Further, the method according to the third aspect may further include: The AF receives a first message from the terminal. The first message includes an authentication mechanism supported by the terminal and the client.

Further, there are a plurality of authentication mechanisms supported by the terminal and the client, and the first message includes priority information of the plurality of authentication mechanisms supported by the terminal and the client.

Further, the first message is carried in a PDU session of the terminal.

In a possible design solution, the AF is a first ECS, and the method according to the third aspect may further include: The first ECS receives a second message from the terminal. The second message may be used to discover an EES associated with the first ECS, for example, an available EES managed by the first ECS. When the available EES is not discovered, the first ECS sends a third message to the terminal. The third message includes a first target authentication mechanism, the first target authentication mechanism is an authentication mechanism associated with a second ECS, and the second ECS is associated with the first ECS and the EES. That is, when the EES is not discovered, the first ECS may provide the terminal with the authentication mechanism associated with the second ECS, so that the terminal can complete authentication with the second ECS by using the authentication mechanism, thereby discovering the EES through the second ECS.

Optionally, the method according to the third aspect may further include: The first ECS obtains the first target authentication mechanism based on an authentication mechanism supported by the second ECS, the first information, and a network in which the second ECS is located. That is, when knowing in advance the authentication mechanism supported by the second ECS, the first ECS may independently determine the first target authentication mechanism, and does not need to interact with the second ECS, to reduce a quantity of times of unnecessary interaction, thereby reducing overheads.

Further, a network in which the first ECS is located is a home network of the terminal, the network in which the second ECS is located is a network on which the terminal currently camps, and the home network of the terminal is different from the network on which the terminal currently camps. That the first ECS obtains the first target authentication mechanism based on an authentication mechanism supported by the second ECS, the first information, and a network in which the second ECS is located includes: The first ECS obtains the first target authentication mechanism based on the authentication mechanism supported by the second ECS, an authentication mechanism supported by the network on which the terminal currently camps, and an authentication mechanism supported by the home network of the terminal. The first target authentication mechanism is an authentication mechanism supported by all of the second ECS, the network on which the terminal currently camps, and the home network of the terminal.

Further, a client is deployed on the terminal, and that the first ECS obtains the first target authentication mechanism based on the authentication mechanism supported by the second ECS, an authentication mechanism supported by the network on which the terminal currently camps, and an authentication mechanism supported by the home network of the terminal includes: The first ECS obtains the first target authentication mechanism based on an authentication mechanism supported by the client, the authentication mechanism supported by the second ECS, the authentication mechanism supported by the network on which the terminal currently camps, and the authentication mechanism supported by the home network of the terminal. The first target authentication mechanism is an authentication mechanism supported by all of the client, the second ECS, the network on which the terminal currently camps, and the home network of the terminal.

Further, that the first ECS obtains the first target authentication mechanism based on an authentication mechanism supported by the client, the authentication mechanism supported by the second ECS, the authentication mechanism supported by the network on which the terminal currently camps, and the authentication mechanism supported by the home network of the terminal includes: The first ECS obtains the first target authentication mechanism based on an authentication mechanism supported by the terminal and the client, the authentication mechanism supported by the second ECS, the authentication mechanism supported by the network on which the terminal currently camps, and the authentication mechanism supported by the home network of the terminal, where the first target authentication mechanism is an authentication mechanism supported by all of the terminal, the client, the second ECS, the network on which the terminal currently camps, and the home network of the terminal.

Optionally, the method according to the third aspect may further include: The first ECS obtains the first target authentication mechanism from the second ECS. That is, the first ECS does not need to independently determine the first target authentication mechanism, to reduce overheads of the first ECS and improve running efficiency.

Further, before the first ECS obtains the first target authentication mechanism from the second ECS, the method according to the third aspect may further include: The first ECS sends an identifier of the home network of the terminal to the second ECS, so that the second ECS can determine the first target authentication mechanism based on the authentication mechanism supported by the home network of the terminal. Certainly, if the second ECS knows the home network of the terminal by default, the first ECS may not provide the identifier of the home network of the terminal. This is not limited.

Further, the method according to the third aspect may further include: The first ECS sends an identifier of the network on which the terminal currently camps to the second ECS, so that the second ECS can determine the first target authentication mechanism based on an authentication mechanism supported by both the network on which the terminal currently camps and the home network of the terminal. Certainly, if the second ECS knows, by default, that the network on which the terminal currently camps is not the home network of the terminal, the first ECS may not provide the identifier of the network on which the terminal currently camps. This is not limited.

It may be understood that, in a process of determining the first target authentication mechanism, if the first ECS determines that a plurality of authentication mechanisms can be used as the first target authentication mechanism, the first ECS may determine the first target authentication mechanism based on priority information of the plurality of authentication mechanisms, for example, use an authentication mechanism with a highest priority as the first target authentication mechanism.

In another possible design solution, the AF is a first ECS, and the method according to the third aspect may further include: The first ECS receives a second message from the terminal. The second message is used to discover an EES associated with the first ECS, for example, an available EES managed by the first ECS. In this way, when the available EES is discovered, the first ECS sends a third message to the terminal. The third information includes a second target authentication mechanism, and the second target authentication mechanism is an authentication mechanism associated with the EES. That is, when the EES is discovered, the first ECS may provide the terminal with the authentication mechanism associated with the EES, so that the terminal can complete authentication with the EES by using the authentication mechanism and establish a secure connection, thereby ensuring communication security.

Optionally, the method according to the third aspect may further include: The first ECS obtains the second target authentication mechanism based on an authentication mechanism supported by the EES, the first information, and a network in which the EES is located.

Further, the network in which the EES is located is a network on which the terminal currently camps, and a home network of the terminal is not the network on which the terminal currently camps. That the first ECS obtains the second target authentication mechanism based on an authentication mechanism supported by the EES, the first information, and a network in which the EES is located includes: The first ECS obtains the second target authentication mechanism based on the authentication mechanism supported by the EES, an authentication mechanism supported by the network on which the terminal currently camps, and an authentication mechanism supported by the home network of the terminal. The second target authentication mechanism is an authentication mechanism supported by all of the EES, the network on which the terminal currently camps, and the home network of the terminal.

Further, a client is deployed on the terminal, and that the first ECS obtains the second target authentication mechanism based on the authentication mechanism supported by the EES, an authentication mechanism supported by the network on which the terminal currently camps, and an authentication mechanism supported by the home network of the terminal includes: The first ECS obtains the second target authentication mechanism based on an authentication mechanism supported by the client, the authentication mechanism supported by the EES, the authentication mechanism supported by the network on which the terminal currently camps, and the authentication mechanism supported by the home network of the terminal. The second target authentication mechanism is an authentication mechanism supported by all of the client, the EES, the network on which the terminal currently camps, and the home network of the terminal.

Further, that the first ECS obtains the second target authentication mechanism based on an authentication mechanism supported by the client, the authentication mechanism supported by the EES, the authentication mechanism supported by the network on which the terminal currently camps, and the authentication mechanism supported by the home network of the terminal includes: The first ECS obtains the second target authentication mechanism based on an authentication mechanism supported by the terminal and the client, the authentication mechanism supported by the EES, the authentication mechanism supported by the network on which the terminal currently camps, and the authentication mechanism supported by the home network of the terminal. The second target authentication mechanism is an authentication mechanism supported by all of the terminal, the client, the EES, the network on which the terminal currently camps, and the home network of the terminal.

Optionally, the method according to the third aspect may further include: The first ECS obtains the second target authentication mechanism from a second ECS, where the second ECS is an ECS associated with the EES.

Further, a network in which the first ECS is located is a home network of the terminal, a network in which the second ECS is located is a network on which the terminal currently camps, and the home network of the terminal is not the network on which the terminal currently camps.

Further, before the first ECS obtains the second target authentication mechanism from the second ECS, the method according to the third aspect may further include: The first ECS sends an identifier of the home network of the terminal to the second ECS.

Further, the method according to the third aspect may further include: The first ECS sends an identifier of the network on which the terminal currently camps to the second ECS.

Optionally, the method according to the third aspect may further include: The first ECS obtains the second target authentication mechanism from the EES.

Further, a network in which the first ECS is located and a network in which the EES is located are a home network of the terminal, or a network in which the first ECS is located and a network in which the EES is located are a network on which the terminal currently camps, and the home network of the terminal is not the network on which the terminal currently camps.

Further, before the first ECS obtains the second target authentication mechanism from the EES, the method according to the third aspect may further include: The first ECS sends an identifier of the home network of the terminal to the EES.

Further, the method according to the third aspect may further include: The first ECS sends an identifier of the network on which the terminal currently camps to the EES.

It may be understood that for descriptions of related technical effects of the second target authentication mechanism, refer to the related descriptions of the first target authentication mechanism. Details are not described again.

In addition, for other technical effects of the communication method according to the third aspect, refer to the technical effects of the communication method according to the first aspect. Details are not described herein again.

According to a fourth aspect, a communication apparatus is provided. The apparatus includes modules configured to perform the method according to the first aspect, for example, a transceiver module and a processing module. The transceiver module may be configured to implement a function of receiving and sending a message by the apparatus. The processing module may be configured to implement a function of the apparatus other than receiving and sending a message.

Optionally, the transceiver module may include a sending module and a receiving module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus is enabled to perform the communication method according to the first aspect.

It should be noted that the communication apparatus according to the fourth aspect may be a terminal, may be a chip (system) or another part or component that may be disposed in a terminal, or may be an apparatus including a terminal. This is not limited in this application.

In addition, for technical effects of the communication apparatus according to the fourth aspect, refer to the technical effects of the communication method according to the first aspect. Details are not described herein again.

According to a fifth aspect, a communication apparatus is provided. The method includes modules configured to perform the method according to the second aspect, for example, a transceiver module and a processing module. The transceiver module may be configured to implement a function of receiving and sending a message by the apparatus. The processing module may be configured to implement a function of the apparatus other than receiving and sending a message.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus is enabled to perform the communication method according to the second aspect.

It should be noted that, the communication apparatus according to the fifth aspect may be a network device, may be a chip (system) or another part or component that may be disposed in a network device, or may be an apparatus including a network device. This is not limited in this application.

In addition, for technical effects of the communication apparatus according to the fifth aspect, refer to the technical effects of the communication method according to the second aspect. Details are not described herein again.

According to a sixth aspect, a communication apparatus is provided. The apparatus includes modules configured to perform the method according to the second aspect, for example, a transceiver module and a processing module. The transceiver module may be configured to implement a function of receiving and sending a message by the apparatus. The processing module may be configured to implement a function of the apparatus other than receiving and sending a message.

Optionally, the transceiver module may include a sending module and a receiving module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a storage module. The storage module stores a program or instructions. When the processing module executes the program or the instructions, the communication apparatus is enabled to perform the communication method according to the third aspect.

It should be noted that, the communication apparatus according to the sixth aspect may be a network device, may be a chip (system) or another part or component that may be disposed in a network device, or may be an apparatus including a network device. This is not limited in this application.

In addition, for technical effects of the communication apparatus according to the sixth aspect, refer to the technical effects of the communication method according to the third aspect. Details are not described herein again.

According to a seventh aspect, a communication apparatus is provided. The communication apparatus includes a processor, and the processor is configured to perform the communication method according to any one of the possible implementations of the first aspect to the third aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In a possible design solution, the communication apparatus according to the seventh aspect may further include a memory. The memory and the processor may be integrated together, or may be disposed separately. The memory may be configured to store a computer program and/or data related to the communication method according to any one of the first aspect to the third aspect.

In this application, the communication apparatus according to the seventh aspect may be a terminal or a network device, may be a chip (system) or another part or component that may be disposed in a terminal or a network device, or may be an apparatus including a terminal or a network device.

In addition, for technical effects of the communication apparatus according to the seventh aspect, refer to the technical effects of the communication method according to any one of the implementations of the first aspect to the third aspect. Details are not described herein again.

According to an eighth aspect, a communication apparatus is provided. The communication apparatus includes a processor. The processor is coupled to a memory, and the processor is configured to execute a computer program stored in the memory, so that the communication apparatus performs the communication method according to any one of the possible implementations of the first aspect to the third aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a terminal or a network device, may be a chip (system) or another part or component that may be disposed in a terminal or a network device, or may be an apparatus including a terminal or a network device.

In addition, for technical effects of the communication apparatus according to the eighth aspect, refer to the technical effects of the communication method according to any one of the possible implementations of the first aspect to the third aspect. Details are not described herein again.

According to a ninth aspect, a communication apparatus is provided, and includes a processor and a memory. The memory is configured to store a computer program, and when the processor executes the computer program, the communication apparatus is enabled to perform the communication method according to any one of the implementations of the first aspect to the third aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be a terminal or a network device, may be a chip (system) or another part or component that may be disposed in a terminal or a network device, or may be an apparatus including a terminal or a network device.

In addition, for technical effects of the communication apparatus according to the ninth aspect, refer to the technical effects of the communication method according to any one of the implementations of the first aspect to the third aspect. Details are not described herein again.

According to a tenth aspect, a communication apparatus is provided, and includes a processor. The processor is configured to: be coupled to a memory; and after reading a computer program in the memory, perform, based on the computer program, the communication method according to any one of the implementations of the first aspect to the third aspect.

In a possible design solution, the communication apparatus according to the tenth aspect may further include a transceiver. The transceiver may be a transceiver circuit or an interface circuit. The transceiver may be used by the communication apparatus according to the tenth aspect to communicate with another communication apparatus.

In this application, the communication apparatus according to the tenth aspect may be a terminal or a network device, may be a chip (system) or another part or component that may be disposed in a terminal or a network device, or may be an apparatus including a terminal or a network device.

In addition, for technical effects of the communication apparatus according to the tenth aspect, refer to the technical effects of the communication method according to any one of the implementations of the first aspect to the third aspect. Details are not described herein again.

According to an eleventh aspect, a communication system is provided. The communication system includes the terminal according to the first aspect and the network device according to the second aspect, or includes the network device according to the third aspect.

According to a twelfth aspect, a computer-readable storage medium is provided, and includes a computer program or instructions. When the computer program or the instructions are run on a computer, the computer is enabled to perform the communication method according to any one of the possible implementations of the first aspect to the third aspect.

According to a thirteenth aspect, a computer program product is provided, and includes a computer program or instructions. When the computer program or the instructions are run on a computer, the computer is enabled to perform the communication method according to any one of the possible implementations of the first aspect to the third aspect.

### BRIEF DESCRIPTION OF DRAWINGS

FIG. 1 is a diagram of a non-roaming architecture of a 5GS;
FIG. 2 is a diagram of a roaming architecture of a 5GS;
FIG. 3 is a diagram of an architecture for enabling an edge application;
FIG. 4 is a diagram of an EAS discovery procedure;
FIG. 5 is a diagram of an architecture of a communication system according to an embodiment of this application;
FIG. 6 is a schematic flowchart 1 of a communication method according to an embodiment of this application;
FIG. 7 is a schematic flowchart 2 of a communication method according to an embodiment of this application;
FIG. 8 is a schematic flowchart 3 of a communication method according to an embodiment of this application;
FIG. 9 is a schematic flowchart 4 of a communication method according to an embodiment of this application;
FIG. 10 is a schematic flowchart 5 of a communication method according to an embodiment of this application;
FIG. 11 is a schematic flowchart 6 of a communication method according to an embodiment of this application;
FIG. 12 is a schematic flowchart 7 of a communication method according to an embodiment of this application;
FIG. 13 is a schematic flowchart 8 of a communication method according to an embodiment of this application;
FIG. 14 is a schematic flowchart 9 of a communication method according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (briefly referred to as 5G system (5G system, 5GS)):

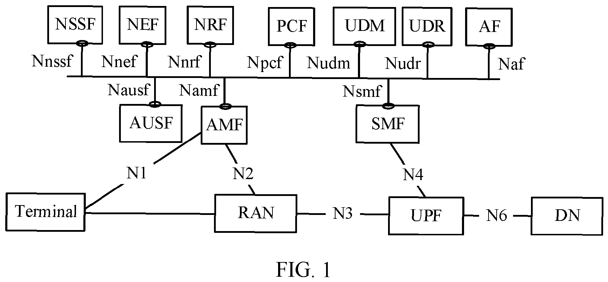

FIG. 1 is a diagram of a non-roaming architecture of a 5GS. As shown in FIG. 1, the 5GS includes an access network (access network, AN) and a core network (core network, CN), and may further include a terminal.

The terminal may be a terminal having receiving and sending functions, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a remote station, a remote terminal, mobile equipment, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, or the like. Alternatively, the terminal in this application may be a vehicle-mounted module, a vehicle-mounted assembly, a vehicle-mounted part, a vehicle-mounted chip, or a vehicle-mounted unit that is built in a vehicle as one or more parts or units.

The foregoing AN is used to implement an access-related function, may provide a network access function for an authorized user in a specific area, and can determine transmission links with different quality based on a user level, a service requirement, and the like, to perform transmission of user data. The AN forwards a control signal and user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

As shown in FIG. 1, UE accesses a 5G network through a RAN device, and the UE communicates with the AMF network element through an N1 interface (N1 for short). The RAN network element communicates with the AMF network element through an N2 interface (N2 for short). The RAN network element communicates with the UPF network element through an N3 interface (N3 for short). The SMF communicates with the UPF network element through an N4 interface (N4 for short), and the UPF network element accesses a data network (data network, DN) through an N6 interface (N6 for short). In addition, the control plane functions such as the AUSF network element, the AMF network element, the SMF network element, the NSSF network element, the NEF network element, the NRF network element, the PCF network element, the UDM network element, the UDR network element, and the AF shown in FIG. 1 interact with each other through a service-based interface. For example, a service-based interface exhibited by the AUSF network element is Nausf, a service-based interface exhibited by the AMF network element is Namf, a service-based interface exhibited by the SMF network element is Nsmf, a service-based interface exhibited by the NSSF is Nnssf, a service-based interface exhibited by the NEF network element is Nnef, a service-based interface exhibited by the NRF network element is Nnrf, a service-based interface exhibited by the PCF network element is Npcf, a service-based interface exhibited by the UDM network element is Nudm, a service-based interface exhibited by the UDR network element is Nudr, and a service-based interface exhibited by the AF is Naf.

The RAN device may be a device that provides access for the terminal. For example, the RAN device may include a next-generation mobile communication system, for example, a 6G access network device such as a 6G base station. Alternatively, in the next-generation mobile communication system, the network device may alternatively be named in another manner, which falls within the protection scope of embodiments of this application. This is not limited in this application. Alternatively, the RAN device may include a gNB in 5G, for example, a new radio (new radio, NR) system, or one or a group (including a plurality of antenna panels) of antenna panels of a base station in 5G, or may be a network node that forms a gNB, a transmission point (transmission and reception point, TRP, or transmission point, TP), or a transmission measurement function (transmission measurement function, TMF), for example, a baseband unit (building baseband unit, BBU), a central unit (central unit, CU) or a distributed unit (distributed unit, DU), an RSU having a base station function, a wired access gateway, or a 5G core network element. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The UPF network element is mainly responsible for user data processing (forwarding, receiving, charging, and the like). For example, the UPF network element may receive user data from a data network (data network, DN), and forward the user data to the terminal via the access network device. The UPF network element may also receive the user data from the terminal via the access network device, and forward the user data to the DN. The DN network element is an operator network that provides a data transmission service for a user, for example, an internet protocol (internet protocol, IP) multi-media service (IP multi-media service, IMS), and the internet (internet). The DN may be an external network of an operator, or may be a network controlled by an operator, and is configured to provide a service for the terminal device.

The AUSF network element is mainly configured to perform security authentication on the terminal.

The AMF network element is mainly used for mobility management in the mobile network, such as user location update, registration of a user to a network, and user handover.

The SMF network element is mainly used for session management in the mobile network, for example, session establishment, modification, and release. A specific function is, for example, allocating an internet protocol (internet protocol, IP) address to a user, or selecting a UPF network element that provides a data packet forwarding function.

The PCF network element mainly supports providing a unified policy framework to control network behavior, and providing a policy rule for a control layer network function, and is responsible for obtaining policy-related subscription information of the user. The PCF network element may provide a policy such as a quality of service (quality of service, QoS) policy or a slice selection policy to the AMF network element and the SMF network element.

The NSSF network element is mainly configured to select a network slice for the terminal.

The NEF network element is mainly used for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

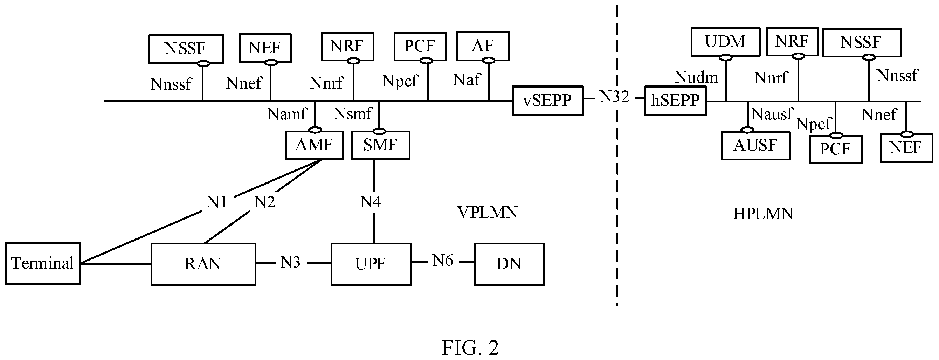

FIG. 2 is a diagram of a roaming architecture of a 5GS. The 5G network includes an HPLMN and a VPLMN. The HPLMN is a home network of UE, the VPLMN is a visited network of the UE, and the VPLMN and the HPLMN communicate with each other through vSEPP and hSEPP. In the scenario shown in FIG. 2, a service may be deployed in the HPLMN, that is, a DN is in the HPLMN (not shown in the figure), and a terminal establishes a session of a home route to communicate with the DN. Optionally, a service may alternatively be located in the V-PLMN, that is, a DN is in the V-PLMN, and a terminal establishes a local session to communicate with the DN in the V-PLMN. Optionally, in a scenario of the session of the home route, an intermediate UPF may be inserted into the session, so that the terminal can access the service in the data network in the V-PLMN. For a specific architecture, refer to TS (technical specification, technical specification) 23.548.

As shown in FIG. 2, in the VPLMN, UE accesses a 5G network through a RAN device, and the UE communicates with an AMF network element through an N1 interface (N1 for short). The RAN device communicates with the AMF network element through an N2 interface (N2 for short). The RAN device communicates with a UPF network element through an N3 interface (N3 for short). An SMF network element communicates with the UPF network element through an N4 interface (N4 for short). In the HPLMN, a UPF network element accesses a DN through an N6 interface (N6 for short). The UPF network element communicates with an SMF network element through an N4 interface (N4 for short). In addition, the UPF network element in the VPLMN communicates with the UPF network element in the HPLMN through an N9 interface (N2 for short). In addition, control plane functions such as an NSSF network element, an NEF network element, an AMF network element, an SMF network element, an NRF network element, and a PCF network element in the VPLMN shown in FIG. 2 interact with each other through service-based interfaces. For example, a service-based interface exhibited by the AMF network element is Namf, a service-based interface exhibited by the SMF network element is Nsmf, a service-based interface exhibited by the NSSF network element is Nnssf, a service-based interface exhibited by the NEF network element is Nnef, a service-based interface exhibited by the NRF network element is Nnrf, and a service-based interface exhibited by the PCF network element is Npcf. Control plane functions such as a UDM network element, an AUSF network element, a PCF network element, an NRF network element, an NSSF network element, an AF, and an NEF network element in the HPLMN shown in FIG. 2 also interact with each other through service-based interfaces. For example, a service-based interface exhibited by the AUSF network element is Nausf, a service-based interface exhibited by the UDM network element is Nudm, and a service-based interface exhibited by the AF is Naf. "Nxx" between two network elements shown in FIG. 2 represents an interface between the two network elements. Details are not described one by one.

### 2. Architecture for enabling an edge application:

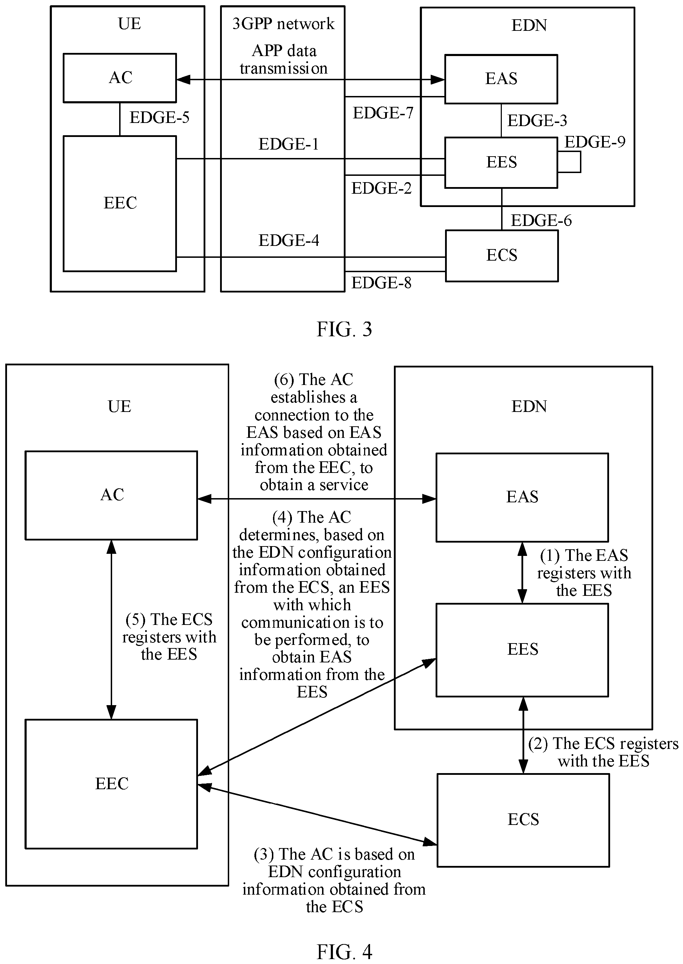

The architecture for enabling the edge application is an application layer architecture, and is used to enable UE to use a deployed edge application, to optimize a resource access process of a user, for example, reduce a network transmission delay between the user and a computing resource. As shown in FIG. 3, the 3rd generation partnership project (3rd generation partnership project, 3GPP) service and system aspects (Service and System Aspects, SA) working group 6 (Working Group 6) defines an architecture for enabling an edge application. The architecture includes at least the following functional network elements:

Edge data network (edge data network, EDN) is a local data network. The EDN includes an edge enabler function (edge enabler server, EES) and an edge application server (edge application server, EAS).

The EAS is an application server deployed in the EDN. An application provider can dynamically instantiate EASs in different EDNs based on a requirement. The EAS is specifically an instance (instance) in which a server application (for example, social media software, augmented reality (augmented reality, AR), or virtual reality (virtual reality, VR)) is deployed in the EDN. One or more EASs may be deployed for one application in one or more EDNs. EASs deployed in different EDNs may be considered as different EASs of one application. These EASs may share one domain name, and use a same IP address or different IP addresses. The EAS may also be referred to as an edge application (server), an application instance, an edge application instance, mobile edge computing (mobile edge computing, MEC) (server), an EAS function, or the like. This is not specifically limited herein.

The EES can provide required functions for the EAS and an edge configuration server (edge configuration server, ECS). For example, the EES may provide management capabilities for the EAS, may support registration of the edge application server EAS (refer to the following descriptions), and may provide EES information for the ECS (refer to the following descriptions). Usually, an EAS registers with an EES, or information about an EAS is configured in an EES by using a management system. The EES is referred to as an EES associated with the EAS. For example, the EES may control, manage, register with, or configure the EAS associates with the EES.

The ECS may be used to provide a function of enabling an edge enabler client (edge enabler client, EEC) to connect to the EES. For example, the EES registers with the ECS, and the EES provides EES information for the EEC (refer to the following descriptions). The ECS can be deployed by an operation or a third party.

An application client (application client, AC) is a peer entity of an EAS on a terminal device side. The AC is used by an application user (user) to obtain an application service from an application server. The AC is a client program of an application on the terminal device, and may be connected to an application server on a cloud to obtain an application service, or may be connected to an EAS deployed and run in one or more EDNs to obtain an application service. For example, the AC may be a Tencent client, an iQIYI client, a vehicle-to-everything (vehicle-to-everything, V2X) client, a mission critical (mission critical, MC) client, or the like installed on the terminal device.

The EEC is a peer entity of an EES on the terminal device side, and is used to discover an available EAS in the EDN.

The application user may sign a service agreement with an application provider, to obtain a service provided by a server of the application provider. The application user can log in to the AC on the terminal device and perform communication through a connection between the AC and the EAS, to use the service provided by the server of the application provider. An enabler client (for example, the EEC) may be a middleware layer, and is usually located in an operating system, or located between an AC and an operating system, or may be implemented in the AC. The AC can obtain an edge enabler service from the enabler client through an application programming interface (application programming interface, API).

As shown in FIG. 4, in the architecture for enabling an edge application, an EEC can discover an available EAS in an EDN. Details are as follows:
(1) An edge service provider dynamically deploys an EDN based on a requirement, deploys an EES in the EDN, and dynamically instantiates a specific EAS based on a requirement of an application provider. The EAS sends a registration procedure to the EES, to provide EAS information for the EES. For example, the EAS information may include an EAS identity, endpoint information (for example, a fully qualified domain name (fully qualified domain name, FQDN), an IP address, or a uniform resource identifier (uniform resource identifier, URI)), and an application client identifier (application client identifier, AC ID). The EAS information may be used by the EES to provide an available EAS for an EEC based on a request of the EEC.
(2) The EES in the EDN initiates a registration procedure to the ECS, to provide EES information for the ECS. The EES information may be used by the ECS to provide an available EES to the EEC based on a request of the EEC. For example, the EES information may include an identifier of the EES, for example, an IP address of the EES, for example, an internet protocol version 4 (internet protocol version 4, IPv4) address and/or an internet protocol version 6 (internet protocol version 6, IPv6) address, a URI, or an FQDN. Optionally, the EES may further provide, in the registration procedure, the ECS with EAS information of the EAS registered on the EES.
(3) Based on the registration procedure, the EEC can request the ECS to provide an edge service, to obtain the available EES through the ECS. Specifically, the EEC may send a service provisioning request (service provisioning request) message to the ECS based on a configured ECS address or a discovered ECS address. The service provisioning request message is used to request the ECS to provide the available EES. The service provisioning request message may include an identifier of UE, a location of the UE, and an application client profile, for example, an AC ID and an edge server provider. The ECS may determine, based on information such as the identifier of the UE, the location of the UE, and the application client profile, an EES corresponding to the information, that is, the available EES. There may be one or more available EESs. This is not limited. The ECS may send a service provisioning response (service provisioning request) message to the EEC. The service provisioning response message may be used to provide the EEC with the available EES, for example, include EES information of the available EES. Optionally, the service provisioning response message may further include EDN information, for example, an identifier of the EDN and a service area of the EDN, indicating that the EES information is available in the service area.
(4) The EEC determines, based on the EES information of the available EES, an EES with which communication is to be performed, and establishes a connection to the EES, to obtain, through the EES, an EAS that provides an edge application service, that is, an available EAS. Specifically, the EEC sends an EAS discovery request (EAS discovery request) message to the EES. The EAS discovery request message may be used to search for an available EAS. For example, the EAS discovery request message may include an identifier of the EEC and an EAS discovery filter. The EAS discovery filter may indicate a service level (such as a test version or a gold card level) requested by the EEC, an application feature (such as a multi-player game or a multi-party conference) required by the EEC, or a region restriction of the EEC (such as use in a specific location or use in a specific region). The EES may search, based on the EAS discovery filter, for an EAS that meets a condition, that is the available EAS. The EES sends an EAS discovery response (EAS discovery response) message to the EEC. The EAS discovery response message may be used to provide the EEC with an available EAS, for example, include EAS information of the available EAS.
(5) The EEC sends EAS information corresponding to the AC to the AC based on the EAS information of the available EAS.
(6) The AC establishes a connection to the EAS based on the EAS information obtained from the EEC, to obtain a corresponding service.

### 3. Security in an edge application architecture:

To ensure communication security between an EEC and an ECS/EES, authentication and authorization need to be performed between the EEC and ECS/EES.

The EEC and the ECS may use a transport layer security (transport layer security, TLS) authentication mechanism, for example, a client certificate, an authentication and key management for applications (authentication and key management for applications, AKMA) mechanism, or a generic bootstrapping architecture (generic bootstrapping architecture, GBA) mechanism. For a specific procedure of the AKMA mechanism, refer to technical specification (technical specification, TS) 33.535. Details are not described. For a specific procedure of the GBA mechanism, refer to TS 33.220. Details are not described. After authentication between the EEC and ECS succeeds, the ECS may be used to perform authorization check on the EEC. For example, an authenticated EEC may be stored in an authorized EEC list. The ECS can determine whether an EEC is in the authorized EEC list. If the EEC is not in the authorized EEC list, it indicates that the authorization check fails. If the EEC is in the authorized EEC list, it indicates that the authorization check succeeds.

The EEC and EES may also use a TLS authentication mechanism. After authentication between the EEC and EES succeeds, the EES may be used to perform authorization check on the EEC. For example, an authenticated EEC may be stored in an authorized EEC list. The EES may determine whether an EEC is in the authorized EEC list. If the EEC is not in the authorized EEC list, it indicates that the authorization check fails. If the EEC is in the authorized EEC list, it indicates that the authorization check succeeds. For another example, when an EEC initiates access to the EES, the EES may check whether the EEC provides an access token of the EES. If the EEC provides the access token of the EES, it indicates that the authorization check succeeds. If the EEC does not provide the access token of the EES, it indicates that the authorization check fails. The access token of the EES may be obtained when the EEC obtains EES information from the ECS, that is, the EES access token may be provided by the ECS, or may be carried in the EES information.

Further, 3GPP SA3 defines a related implementation of performing authentication between the EEC and the EES/ECS.

### Implementation 1:

UE may negotiate with an application about which authentication mechanism, for example, an AKMA mechanism or a GBA mechanism, is to be used. If the UE supports the GBA mechanism, the UE sends a request message to a network application function (network application function, NAF), where the request message indicates that the UE supports the GBA mechanism. If the NAF determines to use the GBAmechanism, the NAF sends a response message to the UE, where the response message is used to trigger the UE to initiate a GBA procedure, to complete authentication between the UE and the NAF by using the GBA procedure. If the UE supports the AKMA mechanism, the UE sends a request message to an AF, where the request message indicates that the UE supports the AKMA mechanism. If the AF determines to use the AKMA mechanism, the AF sends a response message to the UE, where the response message is used to trigger the UE to initiate an AKMA procedure, to complete authentication between the UE and the AF by using the AKMA procedure. In addition, if the UE supports a GBA digest (digest) mechanism and the AKMA mechanism, the AF may preferentially select the AKMA mechanism. The EEC and the EES/ECS may negotiate about a to-be-used authentication mechanism by using the foregoing mechanism, where the EES/ECS is the AF or NAF, and the EEC is a client installed on the UE.

However, when the UE negotiates with the application about an authentication mechanism, a capability of a 3GPP network accessed by the UE is not considered. If the capability of the 3GPP network does not support the negotiated authentication mechanism, that is, an operator network is not upgraded to support the AKMA mechanism, for example, an AKMA anchor function (AKMA anchor function, AAnF) is not deployed to support the AKMA mechanism, or an AUSF network element is not upgraded to support the AKMA mechanism, for example, the AUSF network element does not support derivation of an AKMA key in an authentication process or interaction with an AAnF, or a UDM network element is not upgraded to support the AKMA mechanism, for example, the UDM network element provides an AKMA indication for the AUSF network element, so that the AUSF network element derives an AKMA key based on the AKMA indication, or an operator does not support the GBA mechanism, for example, a bootstrapping service function (bootstrapping server function, BSF) network element is not deployed to support the GBA mechanism, or a home subscriber server (home subscriber server, HSS) is not upgraded to support the GBA mechanism, even if the EES and ECS/EES support the AKMA mechanism or the GBA mechanism, if the network does not provide the AKMA key or the GBA key, the EEC and ECS/EES cannot use the AKMA or GBA mechanism to obtain a required shared key, and consequently cannot establish a secure connection based on the shared key.

### Implementation 2:

For an architecture for enabling an edge application that is defined in 3GPP SA6, it is assumed that UE and an EEC support an AKMA mechanism and/or a GBA mechanism, and an EES and an ECS also support the AKMA mechanism and/or the GBA mechanism. A capability of an HPLMN is preconfigured on the ECS and the EES, for example, information about the AKMA mechanism and/or the GBA mechanism supported by the HPLMN. Based on the foregoing assumption, the negotiation procedure in Implementation 1 may be reused, and an AF/NEF determines the authentication mechanism.

However, in a roaming scenario, if the EES/ECS is located in a visited network (V-PLMN), the EES/ECS may provide a service for a user in an H-PLMN that has a roaming agreement with the V-PLMN, that is, a roaming user. In this case, H-PLMNs of different roaming users may be different. How the EES/ECS configures respective capabilities of the different H-PLMNs is not defined in Implementation 2. When the EES/ECS serves a plurality of PLMNs, respective capabilities of the plurality of PLMNs need to be configured on the EES/ECS. However, because the EES/ECS does not perceive different PLMNs, for example, does not perceive which PLMN is an H-PLMN of the UE and which PLMN is a V-PLMN of the UE, the EES/ECS cannot finally determine an authentication mechanism, and an authentication procedure fails. In addition, in the roaming scenario, the AF may be located in the visited network. In this scenario, the authentication mechanism may need support of the V-PLMN. However, for a same authentication mechanism, if the H-HPLMN supports the authentication mechanism but the V-PLMN does not support the authentication mechanism, authentication may also fail, and communication security between the EEC and the ECS/EES cannot be ensured.

### Implementation 3:

A 5GC pre-stores ECS information, where the ECS information may include a capability of an ECS, for example, an authentication mechanism of the ECS, for example, an AKMA mechanism and/or a GBA mechanism. After UE registers with the 5GC, the 5GC may send a non-access stratum (non-access stratum, NAS) message to the UE, where the NAS message carries an identifier of the ECS and the capability of the ECS. When an EEC communicates with the ECS, the EEC may determine, based on the capability of the ECS, an authentication mechanism used between the EEC and the ECS, to complete authentication between the EEC and the ECS. Subsequently, the EEC sends a service provisioning request message to the ECS (refer to the foregoing descriptions), and the ECS may provide an EES capability for the EEC by using a service provisioning response message (refer to the foregoing descriptions), for example, an authentication mechanism of the EES, for example, an AKMA mechanism and/or a GBA mechanism. When the EEC communicates with the EES, the EEC may determine, based on the capability of the EES, an authentication mechanism used between the EEC and the EES, to complete authentication between the EEC and the EES.

However, similar to Implementation 1, when the UE negotiates with the ECS/EES about an authentication mechanism, a capability of a 3GPP network of the UE (which may include a home network and/or a visited network of the UE) is not considered. If the capability of the 3GPP network does not support the negotiated authentication mechanism, authentication fails, and communication security between the EEC and the ECS/EES cannot be ensured.

### Implementation 4:

An EEC may directly negotiate with an ECS about an authentication algorithm between the EEC and the ECS. Specifically, the EEC sends an authentication algorithm selection request (authentication algorithm selection request) message to the ECS, where the authentication algorithm selection message includes an authentication algorithm of the EEC. The ECS determines, based on a local algorithm configuration, whether to support the authentication algorithm of the EEC. If the ECS supports the authentication algorithm of the EEC, the ECS sends an authentication algorithm selection complete (authentication algorithm selection complete) message to the EEC. If the ECS does not support the authentication algorithm of the EEC, the ECS sends an authentication algorithm selection failure (authentication algorithm selection failure) message to the EEC.

The EEC may negotiate about an authentication algorithm between the EEC and the EES through the ECS. Specifically, the EEC sends an authentication algorithm selection request message to the ECS, where the authentication algorithm selection message includes the authentication algorithm of the EEC. The ECS can assist the EES in determining the authentication algorithm between the EEC and EES. For example, if the ECS stores an authentication algorithm of the EES, the ECS determines whether the authentication algorithm of the EES matches the authentication algorithm of the EEC. If the authentication algorithm of the EES matches the authentication algorithm of the EEC, the ECS sends an authentication algorithm selection complete message to the EEC. If the authentication algorithm of the EES does not match the authentication algorithm of the EEC, the ECS sends an authentication algorithm selection failure message to the EEC. If the ECS does not store an authentication algorithm of the EES, the ECS sends an authentication algorithm selection request message to the EES. The EES determines, based on a local algorithm configuration, whether to support the authentication algorithm of the EEC. If the EES supports the authentication algorithm of the EEC, the EES sends an authentication algorithm selection complete message to the EEC through the ECS; or if the ECS does not support the authentication algorithm of the EEC, the EES sends an authentication algorithm selection failure message to the EEC through the ECS. The authentication algorithm mentioned in Implementation 4 may be replaced with the authentication mechanism mentioned above.

However, similar to Implementation 1, when the EEC negotiates with the ECS/EES about an authentication mechanism, a capability of a 3GPP network accessed by the UE is not considered. If the capability of the 3GPP network does not support the authentication mechanism negotiated between the EEC and the ECS/EES, authentication fails, and communication security between the EEC and the ECS/EES cannot be ensured.

In conclusion, for the foregoing technical problem, embodiments of this application provide the following technical solutions, to resolve a problem that authentication cannot be completed between the EEC and the ECS/EES without support of the 3GPP network, thereby ensuring communication security between the EEC and the ECS/EES.

The following describes technical solutions of this application with reference to accompanying drawings.

The technical solutions in embodiments of this application may be applied to various communication systems such as a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, 5G, for example, a new radio (new radio, NR) system, and a future communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, "information (information)", "signal (signal)", "message (message)", "channel (channel)", and "signaling (signaling)" may be interchangeably used sometimes. It should be noted that meanings expressed by the terms are consistent when differences of the terms are not emphasized. The terms "of (of)", "corresponding (corresponding, related)", and "corresponding (corresponding)" may be interchangeably used sometimes. It should be noted that meanings expressed by the terms are consistent when differences of the terms are not emphasized. In addition, "/" mentioned in embodiments of this application may indicate an "or" relationship. "#1", "#2", "#3", ..., "#x", and the like mentioned in embodiments of this application are merely used for description differentiation, and meanings should not be specially understood.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and emergence of a new service scenario, the technical solutions provided in embodiments of this application are also applicable to a similar technical problem.

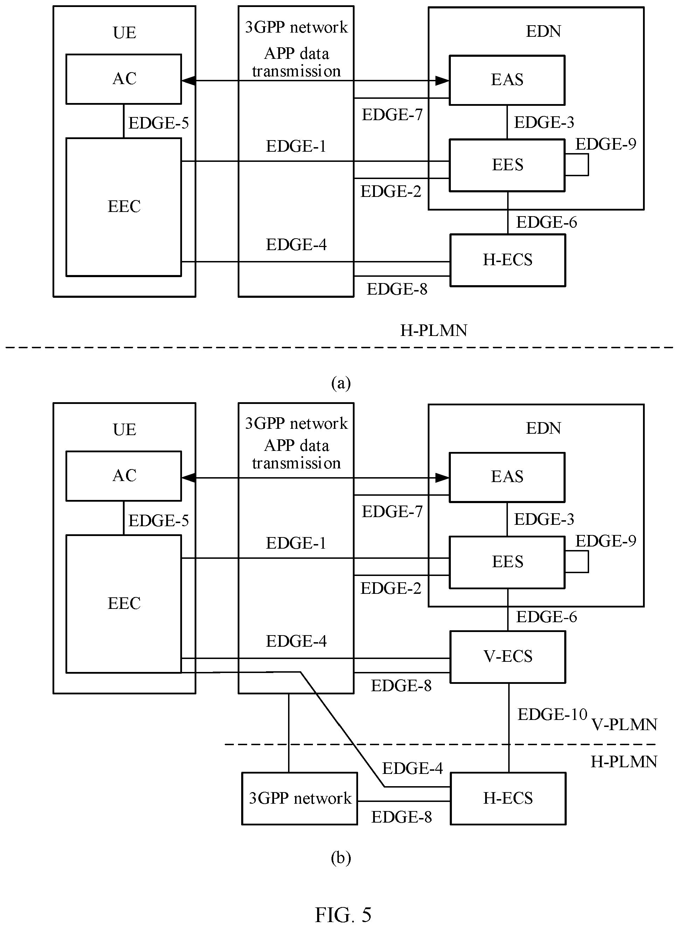

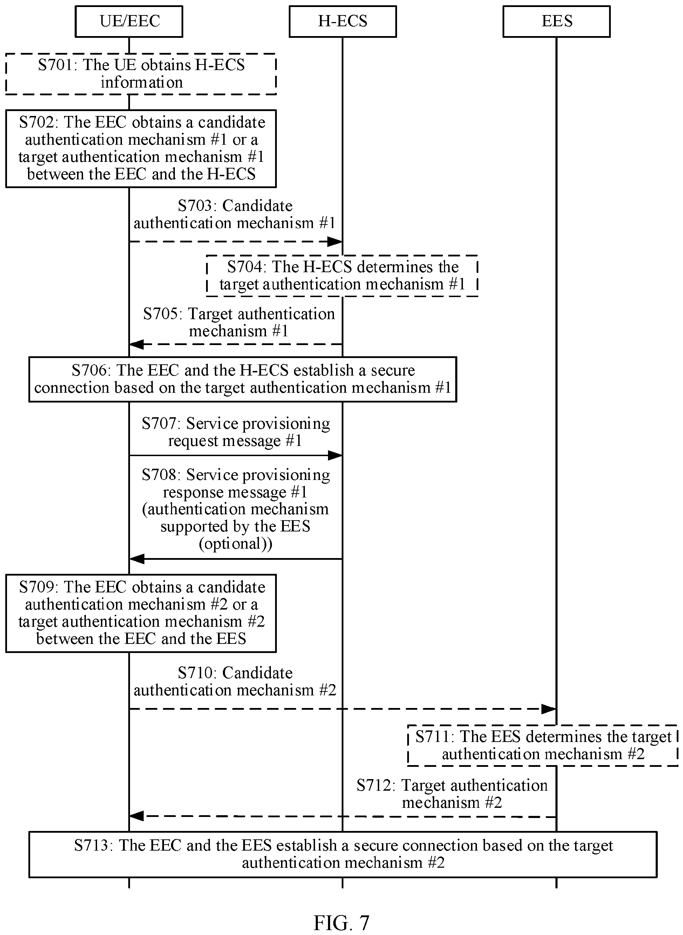

For ease of understanding of embodiments of this application, a communication system applicable to embodiments of this application is first described in detail by using a communication system shown in FIG. 5 as an example. For example, FIG. 7 is a diagram of an architecture of a communication system to which a communication method is applicable according to an embodiment of this application. The communication system may be applied to the foregoing 5GS and an architecture for enabling an edge application.

Specifically, as shown in (a) in FIG. 5, the communication system may be applied to a non-roaming scenario. UE (including an AC and an EEC), an EDN (including an EAS and an EES), and an ECS are all located in an H-PLMN of the UE, and the ECS may be referred to as an H-ECS. The EDN and the ECS may communicate with the UE through a 3GPP network in the H-PLMN. As shown in (b) in FIG. 5, the communication system may be applied to a roaming scenario. UE is located in a V-PLMN, an EDN is located in the V-PLMN, and a V-ECS is located in the V-PLMN. An H-ECS is located in an H-PLMN. The EDN and the V-ECS may communicate with the UE through a 3GPP network in the V-PLMN. The H-ECS and the UE may communicate with each other through a network in the V-PLMN and a 3GPP network in the H-PLMN.

It may be understood that the 3GPP network may also be referred to as an operator network. For ease of description, the 3GPP network is briefly referred to as a network below. Unless otherwise specified, the network mentioned below may be understood as an H-PLMN and/or a V-PLMN. The H-PLMN may also be referred to as a home network of the UE or a home network of the UE, which is briefly referred to as a home network. The V-PLMN may be a network that can be accessed by the UE other than the home network, and may also be referred to as a visited network of the UE, which is briefly referred to as a visited network. In addition, the network may also be understood as a private network. This is not limited. Unless otherwise specified, a network element/function in the network mentioned below may be understood as a network element/function in the home network or a network element/function in the visited network. For example, an AMF network element may be understood as an H-AMF network element/V-AMF network element, and an SMF network element may be understood as an H-SMF network element/V-SMF network element. Unless otherwise specified, an ECS mentioned below may be considered as a V-ECS/H-ECS. An EEC is deployed on the UE. Unless otherwise specified, a function of the EEC may also be understood as a function of the UE. For example, an EEC sending/receiving message may be understood as a UE sending/receiving message. An authentication mechanism between the EEC and the ECS/EES may be understood as an authentication mechanism between the UE and the ECS/EES. Communication between the EEC and the ECS/EES may be understood as communication between the UE and the ECS/EES. Establishing a secure connection between the EEC and the ECS/EES may be understood as establishing a secure connection between the UE and the ECS/EES.

In this embodiment of this application, the network may provide the UE with an authentication mechanism supported by the network, or the ECS/EES may store an authentication mechanism supported by the network, so that the EEC and the ECS/EES can complete authentication with support of the network and establish the secure connection. In this way, a problem that authentication cannot be completed between the EEC and the ECS/EES without support of the network can be resolved, thereby ensuring communication security between the EEC and the ECS/EES.

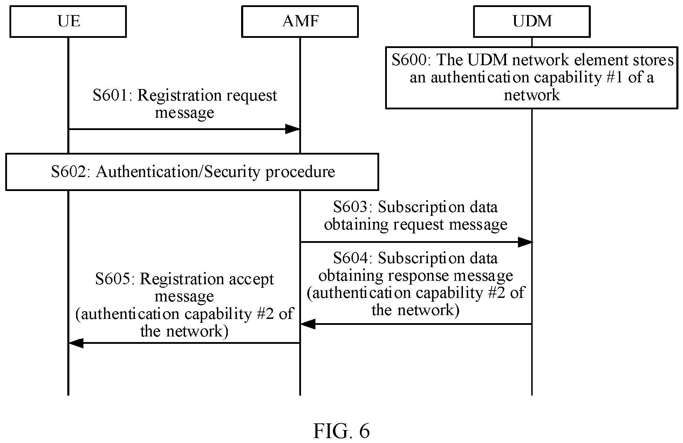

For ease of understanding, the following describes in detail an interaction procedure between network elements or functions in the foregoing communication system by using the method embodiments with reference to FIG. 6 to FIG. 14.

The communication method provided in embodiments of this application is applicable to the foregoing communication system, and is specifically applied to various scenarios mentioned in the foregoing communication system. Details are described below.

### Embodiment 1

In Embodiment 1, a network may provide UE with an authentication mechanism supported by the network. For example, if an ECS is in a home network, and an EES is usually also in the home network, authentication between the EEC and the ECS/EES may need support of the home network. In this case, the network may provide the UE with an authentication mechanism supported by the home network, so that the EEC and the ECS/EES complete authentication with support of the home network and establish a secure connection. If the ECS is in a visited network, and the EES is usually also in the visited network, authentication between the EEC and the ECS/EES may need support of the visited network and the home network. In this case, the network may provide the UE with an authentication mechanism supported by the home network and the visited network, so that the EEC and the ECS/EES complete authentication with support of the visited network and the home network and establish a secure connection.

For example, as shown in FIG. 6, the communication method relates to interaction between the UE, the AMF network element, and the UDM network element. A specific procedure is as follows:

S600: The UDM network element stores an authentication capability #1 of a network.

The authentication capability #1 of the network may represent an authentication mechanism supported by the network. The authentication capability #1 of the network may include an authentication capability of each of a plurality of networks. The plurality of networks may include a home network and a visited network. An authentication capability of the home network may represent an authentication mechanism supported by the home network. An authentication capability of the visited network may represent an authentication mechanism supported by the visited network. Further, the authentication capability #1 of the network may be used to establish a secure connection between the UE and the AF, for example, between the EEC and the ECS/EES. The authentication capability of the home network may include the authentication mechanism supported by the home network and an identifier of the home network (optional).

The authentication mechanism supported by the home network may be understood as an authentication mechanism supported by the network when the network serves as a home network of the UE. The authentication mechanism supported by the home network may also be understood as an authentication mechanism that can or is allowed to be used by the UE in the home network. Alternatively, the authentication mechanism supported by the home network may be an authentication mechanism supported by the network when the network serves as a home network of the UE (which may include a roaming scenario or a non-roaming scenario). The authentication mechanism supported by the home network may be specifically at least one of the following: an AKMA mechanism, a GBA mechanism, or any other authentication mechanism that needs to be supported by the network during evolution. The GBA mechanism may specifically include at least one of the following: a mobile equipment (mobile equipment, ME)-based (based) GBA, a universal integrated circuit card (universal integrated circuit card, UICC)-based GBA, or a GBA digest. The ME-based GBA means that a GBA is in ME, that is, all GBA-specific functions are performed in the ME. The UICC is unaware of the GBA. The UICC-based GBA is a UICC-based enhanced GBA. In the UICC-based GBA, a GBA-specific function is split between the ME and the UICC, that is, executed by the ME and the UICC separately. The GBA digest is to extend the GBA to an environment in which the UICC is unavailable to a user. The UE and a GBA client on a bootstrapping service function (bootstrapping server function, BSF) communicate with each other by using hypertext transfer protocol (hypertext transfer protocol, HTTP) and session initiation protocol (session initiation protocol, SIP) digest credentials (such as shared keys or passwords). These credentials are used for identity authentication, and are not credentials stored in a subscriber identity module (subscriber identity module, SIM), a universal subscriber identity module (universal subscriber identity module, USIM), or a multimedia service identity module (IP multimedia service identity module, ISIM).

The identifier of the home network usually has a correspondence with the authentication mechanism supported by the home network, and indicates that the authentication mechanism is the authentication mechanism supported by the home network. The identifier of the home network may be a public network identifier (PLMN ID), also referred to as an H-PLMN ID, a network identifier (network identifier, NID), or a combination of an H-PLMN ID and an NID. This is not limited. The identifier of the home network is optional information. If there is no identifier of the home network, a corresponding authentication mechanism is considered, by default, as the authentication mechanism supported by the home network. In addition, the identifier of the home network may alternatively be information indicating the identifier of the home network. This is not limited.

The authentication capability of the visited network may include the authentication mechanism supported by the visited network and an identifier of the visited network.

The authentication mechanism supported by the visited network may be understood as an authentication mechanism supported by the network when the network serves as a visited network of the UE or the UE roams to the network. The authentication mechanism supported by the visited network may also be understood as an authentication mechanism that can or is allowed to be used by the UE in the visited network. Alternatively, the authentication mechanism supported by the visited network may be an authentication mechanism supported by the network when the network serves as a visited network of the UE. The authentication mechanism supported by the visited network may be an authentication mechanism supported by a visited network that has a roaming agreement with the home network. Alternatively, the authentication mechanism supported by the visited network may be an authentication mechanism supported by a visited network to which the UE in a group can roam, or the authentication mechanism supported by the visited network may still be an authentication mechanism supported by a visited network that has a roaming agreement with the home network. This is not limited. Alternatively, the authentication mechanism supported by the visited network may be an authentication mechanism supported by a visited network to which the UE can roam, or the authentication mechanism supported by the visited network may be an authentication mechanism supported by a visited network that has a roaming agreement with the home network. This is not limited. In addition, the authentication mechanism supported by the visited network may be only an authentication mechanism supported by the visited network, or the authentication mechanism supported by the visited network may be an authentication mechanism supported by both the visited network and the home network. For example, both the UE and the ECS/EES are located in the visited network. If a secure connection between the UE and the ECS/EES is established, the procedure usually needs support of the home network and the visited network. In this case, the authentication mechanism supported by the visited network is the authentication mechanism supported by both the visited network and the home network. The authentication mechanism supported by the visited network may be specifically at least one of the following: an AKMA mechanism, a GBA mechanism, or any other authentication mechanism that needs to be supported by the network during evolution. For a specific implementation, refer to the foregoing descriptions. Details are not described again.

The identifier of the visited network usually has a correspondence with the authentication mechanism supported by the visited network, and indicates that the authentication mechanism is the authentication mechanism supported by the visited network. The identifier of the visited network may be a public network identifier (PLMN ID), also referred to as a V-PLMN ID, a NID, or a combination of a V-PLMN ID and a NID. This is not limited. In addition, the identifier of the visited network may also be information indicating the identifier of the visited network or implicit indication information. For example, if the terminal perceives that the terminal is in the visited network, the terminal indicates the visited network based on a rank of a received authentication mechanism or an indication indicating that an authentication mechanism is the authentication capability of the visited network. A specific implementation is not limited.

In a possible design solution, the authentication capability #1 of the network may be stored in common information of the UDM network element. In this case, in the authentication capability #1 of the network, the authentication mechanism supported by the visited network may be an authentication mechanism supported by a visited network that has a roaming agreement with the home network.

For example, a network identifier 1 is an identifier of a home network, a network identifier 2 is an identifier of a visited network 1, and a network identifier 3 is an identifier of a visited network 2. The common information may include a network identifier 1 {authentication mechanism 1, authentication mechanism 2}, a network identifier 2 {authentication mechanism 1, authentication mechanism 3}, and a network identifier 3 {authentication mechanism 2, authentication mechanism 3, authentication mechanism 4}. Alternatively, the common information may include an authentication mechanism 1 {network identifier 1, network identifier 2}, an authentication mechanism 2 {network identifier 1, network identifier 3}, an authentication mechanism 3 {network identifier 2, network identifier 3}, and an authentication mechanism 4 {network identifier 3}. Alternatively, the common information may include {authentication mechanism 1, authentication mechanism 2}, a network identifier 2 {authentication mechanism 1, authentication mechanism 3}, and a network identifier 3 {authentication mechanism 2, authentication mechanism 3, authentication mechanism 4}. In this case, {authentication mechanism 1, authentication mechanism 2} is considered, by default, the authentication mechanism supported by the home network. A specific implementation is not limited.

In another possible design solution, the authentication capability #1 of the network may be stored in subscription data of a group. In this case, in the authentication capability #1 of the network, the authentication mechanism supported by the visited network may be an authentication mechanism supported by a visited network to which the UE in the group can roam, or may still be an authentication mechanism supported by a visited network that has a roaming agreement with the home network. This is not limited.

For example, a network identifier 1 is an identifier of a home network, a network identifier 2 is an identifier of a visited network 1, and a network identifier 3 is an identifier of a visited network 2. UE in a group 1 can roam to the visited network 1, and UE in a group 2 can roam to the visited network 2. Based on this, subscription data of the group 1 may include a network identifier 1 {authentication mechanism 1, authentication mechanism 2} and a network identifier 2 {authentication mechanism 1, authentication mechanism 3}. Subscription data of the group 2 may include a network identifier 1 {authentication mechanism 1, authentication mechanism 2} and a network identifier 3 {authentication mechanism 2, authentication mechanism 3, authentication mechanism 4}. A specific implementation is not limited.

In still another possible design solution, the authentication capability #1 of the network may be stored in subscription data of the UE. In this case, in the authentication capability #1 of the network, the authentication mechanism supported by the visited network may be an authentication mechanism supported by a visited network to which the UE can roam, or may still be an authentication mechanism supported by a visited network that has a roaming agreement with the home network. This is not limited.

For example, a network identifier 1 is an identifier of a home network, a network identifier 2 is an identifier of a visited network 1, and a network identifier 3 is an identifier of a visited network 2. UE 1 can roam to the visited network 1, and UE 2 can roam to the visited network 2. Based on this, subscription data of the UE 1 may include a network identifier 1 {authentication mechanism 1, authentication mechanism 2} and a network identifier 2 {authentication mechanism 1, authentication mechanism 3}. Subscription data of the UE 2 may include a network identifier 1 {authentication mechanism 1, authentication mechanism 2} and a network identifier 3 {authentication mechanism 2, authentication mechanism 3, authentication mechanism 4}. A specific implementation is not limited.

It may be understood that the authentication capability of the network may be further implemented in different manners. In one case, authentication capabilities of different networks may be further stored in different information. For example, the authentication capability of the visited network may be stored in common information of the UDM network element. The authentication capability of the home network may be stored in subscription data of the UE. Optionally, the subscription data of the UE may further include an identifier of a visited network to which the UE can roam, so that the UDM network element determines, from the common information, an authentication mechanism supported by the visited network to which the UE can roam.

It may be understood that the authentication capability of the network is merely an example name, and may be replaced with any possible name, for example, authentication capability information of the network or capability information of the network. The authentication mechanism supported by the network is merely an example name, and may be replaced with any possible name, for example, authentication mechanism information supported by the network, an authentication mechanism of the network, or authentication mechanism information of the network.

It may be further understood that an authentication mechanism may be applied only to a non-roaming architecture, that is, may be applied only to a scenario in which the UE is in the home network, and may also be referred to as an authentication mechanism supported by the home network. An authentication mechanism may be applied only to a roaming architecture, that is, may be applied only to a scenario in which the UE is in the visited network, and may also be referred to as an authentication mechanism supported by the visited network. An authentication mechanism may also be applied to a non-roaming architecture and a roaming architecture, that is, may be applied to a scenario in which the UE is in the visited network and/or the home network, and may also be referred to as an authentication mechanism supported by both the visited network and/or the home network. In addition, the authentication mechanism may be applied to a procedure in the non-roaming architecture or a network element or function required for completing the procedure that may be different from a procedure in the roaming architecture or a network element or function required for completing the procedure.

S601: The UE sends a registration request (registration request) message to the AMF network element, and correspondingly, the AMF network element receives the registration request message from the UE.

The AMF network element may be referred to as a serving AMF network element of the UE. The UE may request to register with the network by sending the registration request message to the AMF network element. For a specific implementation, refer to related descriptions of a registration procedure in 3GPP technical specification (technical specification, TS) 23.502. Details are not described again.

S602: Authentication/security procedure.

The AMF network element may trigger the authentication procedure of the UE based on the registration request message from the UE, to establish a secure connection to the UE. For a specific implementation, refer to related descriptions in 3GPP TS 33.501. Details are not described again.

S603: The AMF network element sends a subscription data obtaining request (Nudm_SDM_Get request) message to the UDM network element, and correspondingly, the UDM network element receives the subscription data obtaining request message from the AMF network element.

The subscription data obtaining request message may be used to obtain an authentication capability #2 of the network. For details of the authentication capability #2 of the network, refer to related descriptions in S604. That is, the AMF network element may obtain the authentication capability #2 of the network by reusing the subscription data obtaining request message. For example, the subscription data obtaining request message may carry an identifier of the UE, for example, an SUPI of the UE or any other possible identifier, an identifier of a group to which the UE belongs (optional), and an identifier of a network on which the UE currently camps (optional).

It may be understood that S603 is optional. The AMF network element may determine whether the AMF network element stores the authentication capability #2 of the network. For example, the AMF network element may directly determine whether the AMF network element stores the authentication capability #2 of the network. Alternatively, the AMF network element may indirectly determine, by determining whether the AMF network element stores subscription data, whether the AMF network element stores the authentication capability #2 of the network. Alternatively, the AMF network element may determine, by determining whether a context (which may be from another network element or stored in the AMF network element) of the UE includes the authentication capability #2 of the network, whether the AMF network element stores the authentication capability #2 of the network. If the AMF network element determines that the AMF network element does not store the authentication capability #2 of the network, S603 and S604 are performed, to obtain the authentication capability #2 of the network. If the AMF network element determines that the AMF network element stores the authentication capability #2 of the network, S603 to S604 are skipped, and S605 is performed, to provide the authentication capability of the network for the UE.

S604: The UDM network element sends a subscription data obtaining response (Nudm_SDM_Get response) message to the AMF network element, and correspondingly, the AMF network element receives the subscription data obtaining response message from the UDM network element.

The subscription data obtaining response message may be used to respond to the subscription data obtaining request message. The subscription data obtaining response message may carry the authentication capability #2 of the network. The authentication capability #2 of the network may include an authentication capability of each of at least one of the plurality of networks, that is, an authentication capability of each of one or more of the plurality of networks.

In a possible manner, the authentication capability #2 of the network includes an authentication capability of each of the plurality of networks. That is, the authentication capability #2 of the network is the same as the authentication capability #1 of the network, or the UDM network element directly provides the authentication capability #1 of the network for the AMF network element.

For example, the UDM network element may obtain the authentication capability #1 of the network from the common information by default, and encapsulate the authentication capability #1 of the network into the subscription data obtaining response message. Alternatively, the UDM network element may obtain, based on the identifier of the group to which the UE belongs, subscription data of the group that includes the authentication capability #1 of the network, and encapsulate the authentication capability #1 of the network in the subscription data of the group into the subscription data obtaining response message. Alternatively, the UDM network element may obtain, based on the identifier of the UE, subscription data of the UE that includes the authentication capability #1 of the network, and encapsulate the authentication capability #1 of the network in the subscription data of the UE into the subscription data obtaining response message. Then, the UDM network element sends the subscription data obtaining response message to the AMF network element.

In another possible manner, the authentication capability #2 of the network includes an authentication capability of each of one or more of the plurality of networks. That is, the authentication capability #2 of the network is different from the authentication capability #1 of the network. In this case, the UDM network element may determine the authentication capability #2 of the network based on the authentication capability #1 of the network.

For example, the authentication capability #1 of the network includes an authentication mechanism supported by the home network, an identifier of the home network (optional), an authentication mechanism supported by a visited network that has a roaming agreement with the home network, and an identifier of the visited network. The UDM network element may determine the authentication capability #2 of the network from the authentication capability #1 of the network based on the identifier of the group to which the UE belongs. The authentication capability #2 of the network may include an authentication mechanism supported by the home network, an identifier of the home network (optional), an authentication mechanism supported by a visited network that has a roaming agreement with the home network, and an identifier of the visited network. For example, the authentication mechanism supported by the visited network that has the roaming agreement with the home network includes an authentication mechanism 1, an authentication mechanism 2, and an authentication mechanism 3, and the authentication mechanism supported by the visited network to which the UE in the group can roam may include an authentication mechanism 1 and an authentication mechanism 2. That is, the UE in the group cannot roam to a visited network that supports the authentication mechanism 3. Therefore, the authentication mechanism 3 is not provided to avoid sending redundant information. In this way, the UDM network element may encapsulate the authentication capability #2 of the network into the subscription data obtaining response message, and then send the subscription data obtaining response message to the AMF network element.

For another example, the authentication capability #1 of the network includes an authentication mechanism supported by the home network, an identifier of the home network (optional), an authentication mechanism supported by a visited network that has a roaming agreement with the home network, and an identifier of the visited network. Alternatively, the authentication capability #1 of the network includes an authentication mechanism supported by the home network, an identifier of the home network (optional), an authentication mechanism supported by a visited network to which the UE in the group can roam, and an identifier of the visited network. In this case, the UDM network element may determine the authentication capability #2 of the network from the authentication capability #1 of the network based on the identifier of the UE. The authentication capability #2 of the network may include an authentication mechanism supported by the home network, an identifier of the home network (optional), an authentication mechanism supported by a visited network to which the UE can roam, and an identifier of the visited network. For example, the authentication mechanism supported by the visited network to which the UE in the group can roam includes an authentication mechanism 1 and an authentication mechanism 2, and the authentication mechanism supported by the visited network to which the UE can roam may include an authentication mechanism 1. That is, the UE cannot roam to a visited network that supports the authentication mechanism 2. Therefore, the authentication mechanism 2 is not provided to avoid sending redundant information. In this way, the UDM network element may encapsulate the authentication capability #2 of the network into the subscription data obtaining response message, and then send the subscription data obtaining response message to the AMF network element.

For another example, the UDM network element may determine the authentication capability #2 of the network from the authentication capability #1 of the network based on the identifier of the network on which the UE currently camps. The authentication capability #2 of the network may include an authentication mechanism supported by the network on which the UE currently camps and an identifier of the network on which the UE currently camps (optional). If the network on which the UE currently camps is the home network, the authentication capability #2 of the network may include an authentication capability of the home network. That is, when the UE currently camps on the home network, authentication between the UE and the ECS/EES may need only support of the home network. Therefore, only the authentication capability of the home network can be provided. If the network on which the UE currently camps is not the home network, that is, the UE currently camps on the visited network, the authentication capability #2 of the network may include the authentication capability of the home network and the authentication capability of the visited network. That is, when the UE currently camps on the visited network, the ECS/EES may be located in the visited network, or the ECS may be located in the home network, or the like. When the ECS/EES is located in the visited network, authentication between the UE and the ECS/EES not only needs support of the visited network, but also may need support of the home network. Therefore, an authentication mechanism supported by both the home network and the visited network needs to be provided. If the ECS is located in the home network, only the authentication mechanism supported by the home network needs to be provided. Certainly, when the UE currently camps on the visited network, if authentication between the UE and the ECS/EES does not need support of the home network, the UDM network element may also provide only the authentication capability of the visited network. In this way, the UDM network element may encapsulate the authentication capability #2 of the network into the subscription data obtaining response message, and then send the subscription data obtaining response message to the AMF network element.

In addition, when authentication between the UE and the ECS/EES needs support of the visited network, the authentication further needs support of the home network. Therefore, when determining the authentication mechanism supported by the visited network in the authentication capability #2 of the network, the UDM network element may further determine that the authentication mechanism supported by the visited network is an authentication mechanism supported by both the visited network and the home network. That is, the UDM network element may actively select the authentication mechanism supported by the visited network, to avoid sending redundant information and improve communication efficiency. In this case, the terminal may directly use the provided authentication mechanism supported by the visited network to perform determining, thereby simplifying determining logic of the terminal. Certainly, if the authentication mechanism supported by the visited network in the authentication capability #1 of the network is the authentication mechanism supported by both the visited network and the home network, the UDM network element does not need to determine the authentication mechanism.

It may be understood that specific authentication mechanisms provided by the UDM network element for the AMF network element may be predefined in a protocol, or may be determined based on a service requirement. This is not limited.

S605: The AMF network element sends a registration accept (registration accept) message to the UE, and correspondingly, the UE receives the registration accept message from the AMF network element.

The registration accept message may be used to respond to the registration request message, indicating that the UE is successfully registered. The registration accept message may be an encrypted and integrity-protected message, to ensure communication security. The registration accept message may carry the authentication capability #2 of the network, that is, the authentication capability #2 of the network is provided for the UE by reusing the registration accept message. However, this is not limited. The authentication capability #2 of the network may also be carried in any possible NAS message.

For the AMF network element, if the AMF network element receives the authentication capability #2 of the network from the UDM network element, the AMF network element may encapsulate the authentication capability #2 of the network into the registration accept message, and then send the registration accept message to the UE. If the UDM network element directly provides the authentication capability #1 of the network for the AMF network element, the AMF network element may further determine the authentication capability #2 of the network based on the authentication capability #1 of the network, then encapsulate the authentication capability #2 of the network into the registration accept message, and send the registration accept message to the UE. Determining the authentication capability #2 of the network by the AMF network element based on the authentication capability #1 of the network is similar to determining the authentication capability #2 of the network by the UDM network element based on the authentication capability #1 of the network. For details, refer to the foregoing related descriptions in S604. The details are not described again.

It may be understood that S601 to S605 may occur for a plurality of times. For example, when the network on which the UE currently camps is the home network, the authentication capability #2 of the network that is provided in S601 to S605 may include the authentication capability of the home network. Subsequently, the UE roams from the home network to the visited network, and initiates registration in the visited network. In this case, the authentication capability #2 of the network that is provided in S601 to S605 again may include the authentication capability of the visited network, but no longer includes the authentication capability of the home network. In addition, the UE may further obtain the authentication capability #2 of the network in another manner. For example, the UDM network element may store only the authentication capability of the home network. The RAN device may store an authentication capability of a network in which the RAN device is located, and system information broadcast (system information broadcast, SIB) that is broadcast by the RAN device may carry the authentication capability of the network in which the RAN device is located. In this case, when the UE is in the home network, the UE obtains the authentication capability of the home network still through S601 to S605. Subsequently, the UE roams from the home network to the visited network, and the UE obtains the authentication capability of the visited network by receiving the SIB that is broadcast by the RAN device in the visited network.

It may be understood that, that the UE obtains the authentication capability of the network from the AMF network element by using the registration procedure is merely an example. The UE may also obtain the authentication capability of the network by using any other possible procedure. For example, the UE may obtain the authentication capability of the network through a UE parameter update (UE parameter update, UPU) procedure or a UE configuration update (UE configuration update, UCU) procedure. The AMF network element may also be replaced with any other possible network element, for example, an SMF network element. The UDM network element may also be replaced with any other possible network element, for example, a UDR network element or a PCF network element.

In this embodiment of this application, after obtaining the authentication capability #2 of the network, the UE may initiate interaction with the ECS/EES. Details are described below.

Case 1: A network on which the UE currently camps is a home network. In this case, the UE initiates interaction with the H-ECS/EES.

As shown in FIG. 7, an interaction procedure between the UE and the H-ECS/EES is as follows:

S701: The UE obtains H-ECS information.

The H-ECS information may include an identifier of the H-ECS and a capability of the H-ECS (optional), for example, an authentication mechanism supported by the H-ECS. The identifier of the H-ECS may be at least one of the following: an IP address of the H-ECS, for example, an IPv4 address and/or an IPv6 address, or an FQDN of the H-ECS. The UE may obtain the H-ECS information from the H-SMF network element in a session establishment process, for example, a protocol data unit (protocol data unit, PDU) session establishment process. The UE may determine, in a process of obtaining the H-ECS information, that the H-ECS is located in a home network. For example, the UE may determine, by obtaining the H-ECS information from the H-SMF network element, that the H-ECS is located in the home network. For another example, the H-ECS information may further include an identifier of the home network, so that the UE determines that the H-ECS is located in the home network. For another example, the UE is located in the home network, and the home network usually provides the H-ECS information. In this case, the UE knows that the UE obtains information about the H-ECS in the home network, that is, knows that the H-ECS is located in the home network.

It may be understood that S701 is optional. For example, the H-ECS information may be preconfigured on the UE, and specifically, may be preconfigured on the EEC. In addition, for a specific implementation of the H-ECS information, refer to the foregoing related descriptions of "Implementation 3". Details are not described again.

S702: The EEC obtains a candidate authentication mechanism #1 or a target authentication mechanism #1 between the EEC and the H-ECS.

The candidate authentication mechanism #1 may be an authentication mechanism supported by the home network. That is, the EEC and the UE support, by default, the authentication mechanism supported by the home network, or the EEC and the UE support, by default, all possible authentication mechanisms. Alternatively, the candidate authentication mechanism #1 may be an authentication mechanism supported by both the UE and the home network. That is, the EEC supports, by default, the authentication mechanism supported by both the UE and the home network, or the EEC supports, by default, all possible authentication mechanisms. Alternatively, the candidate authentication mechanism #1 may be an authentication mechanism supported by both the EEC and the home network. That is, the UE supports, by default, the authentication mechanism supported by both the EEC and the home network, or the UE supports, by default, all possible authentication mechanisms. Alternatively, the candidate authentication mechanism #1 may be an authentication mechanism supported by all of the EEC, the UE, and the home network. The candidate authentication mechanism #1 may be specifically at least one of the following: 3gpp-gba, 3gpp-gba-uicc, 3gpp-gba-digest, 3gpp-akma, or the like, or may be any other possible authentication mechanism. This is not limited.

The target authentication mechanism #1 may be an authentication mechanism supported by both the H-ECS and the home network. That is, the EEC and the UE support, by default, the authentication mechanism supported by both the H-ECS and the home network, or the EEC and the UE support, by default, all possible authentication mechanisms. Alternatively, the target authentication mechanism #1 may be an authentication mechanism supported by all of the UE, the H-ECS, and the home network. That is, the EEC supports, by default, the authentication mechanism supported by all of the UE, the H-ECS, and the home network, or the EEC supports, by default, all possible authentication mechanisms. The target authentication mechanism #1 may be an authentication mechanism supported by all of the EEC, the H-ECS, and the home network. That is, the UE supports, by default, the authentication mechanism supported by all of the EEC, the H-ECS, and the home network, or the UE supports, by default, all possible authentication mechanisms. Alternatively, the target authentication mechanism #1 may be an authentication mechanism supported by all of the UE, the EEC, the H-ECS, and the home network. The target authentication mechanism #1 may be specifically at least one of the following: 3gpp-gba, that is, an ME-based GBA, 3gpp-gba-uicc, that is, a UICC-based GBA, 3gpp-gba-digest, that is, a GBA digest, 3gpp-akma, that is, AKMA, or the like, or may be any other possible authentication mechanism. This is not limited.

The target authentication mechanism #1 may be determined based on the candidate authentication mechanism #1. For example, the target authentication mechanism #1 may be determined from the candidate authentication mechanism #1, that is, the candidate authentication mechanism #1 may include the target authentication mechanism #1.

Specifically, the EEC is usually located at an application layer of the UE. A function/software layer below the application layer of the UE may further include an operating system layer, a middleware layer, a NAS, and the like. Because an authentication capability #2 of a network is carried in a NAS message, for example, a registration accept message, after the UE receives the NAS message, the authentication capability #2 of the network may be correspondingly stored at the NAS of the UE, or stored at a location at which the authentication capability #2 can be obtained from the NAS. Therefore, the EEC may request the NAS to provide an authentication capability of a related network, so that the EEC determines the candidate authentication mechanism #1 or the target authentication mechanism #1 based on the authentication capability.

In a possible manner, after the NAS receives a request from the EEC, the NAS may directly provide an authentication capability #2 of the network for the EEC, that is, the authentication capability of the related network is the authentication capability #2 of the network. Alternatively, the NAS may determine the authentication capability of the related network based on that the network on which the UE currently camps is the home network and based on the authentication capability #2 of the network. The authentication capability of the related network may include an authentication mechanism supported by the home network and an identifier of the home network (optional). In this case, the authentication mechanism supported by the UE is not considered, that is, the UE supports, by default, the authentication mechanism supported by the home network.

In another possible manner, after the NAS receives a request from the EEC, the NAS may determine the authentication capability of the related network based on the authentication mechanism supported by the UE and the authentication capability #2 of the network. The authentication mechanism supported by the UE may be specifically at least one of the following: 3gpp-gba, 3gpp-gba-uicc, 3gpp-gba-digest, 3gpp-akma, or the like, or may be any other possible authentication mechanism. This is not limited.

For example, the authentication capability #2 of the network includes an authentication mechanism supported by the home network, an identifier of the home network (optional), an authentication mechanism supported by a visited network that has a roaming agreement with the home network, and an identifier of the visited network. Based on this, the authentication capability of the related network may include an authentication mechanism supported by both the UE and the home network, an identifier of the home network (optional), an authentication mechanism supported by both a visited network that has a roaming agreement with the home network and the UE, and an identifier of the visited network. For example, the home network is used as an example. For the visited network, reference may be made for understanding. The authentication mechanism supported by the home network includes an authentication mechanism 1, an authentication mechanism 2, and an authentication mechanism 3. The authentication mechanism supported by the UE includes the authentication mechanism 1, the authentication mechanism 2, and an authentication mechanism 4. The authentication mechanism supported by both the UE and the home network includes the authentication mechanism 1 and the authentication mechanism 2.

For another example, the authentication capability #2 of the network may include an authentication mechanism supported by the home network, an identifier of the home network (optional), an authentication mechanism supported by a visited network to which the UE in a group can roam, and an identifier of the visited network. Based on this, the authentication capability of the related network may include an authentication mechanism supported by both the UE and the home network, the identifier of the home network (optional), an authentication mechanism supported by both the visited network to which the UE in the group can roam and the UE, and the identifier of the visited network.

For another example, the authentication capability #2 of the network may include an authentication mechanism supported by the home network, an identifier of the home network (optional), an authentication mechanism supported by a visited network to which the UE can roam, and an identifier of the visited network. Based on this, the authentication capability of the related network may include an authentication mechanism supported by both the UE and the home network, the identifier of the home network (optional), an authentication mechanism supported by both the visited network to which the UE can roam and the UE, and the identifier of the visited network.

For another example, the authentication capability #2 of the network may include an authentication mechanism supported by the home network and an identifier of the home network (optional). Based on this, the authentication capability of the related network may include an authentication mechanism supported by both the UE and the home network and the identifier of the home network (optional).

Alternatively, after the NAS receives a request from the EEC, the NAS may determine the authentication capability of the related network based on an authentication mechanism supported by the UE, a network (home network) on which the UE currently camps, and the authentication capability #2 of the network. The authentication capability of the related network may include an authentication mechanism supported by both the UE and the home network and an identifier of the home network (optional).

It may be understood that the NAS may determine the authentication capability of the related network based on the request of the EEC, and provide the authentication capability of the related network for the EEC. Alternatively, after receiving a NAS message, the NAS may independently determine the authentication capability of the related network, so that the NAS provides the authentication capability of the related network for the EEC when the EEC initiates a request. This is not limited herein.

The EEC may determine the candidate authentication mechanism #1 based on the authentication capability of the related network and a network in which the H-ECS is located. It may be understood that, because the H-ECS is located in the home network, authentication between the EEC and the H-ECS usually needs support of the home network, but does not need support of the visited network. Therefore, regardless of whether the UE is located in the home network or the visited network, the EEC may determine, as the candidate authentication mechanism #1, the authentication mechanism supported by the home network in the authentication capability of the related network. In this case, it is determined that the candidate authentication mechanism #1 may be the authentication mechanism supported by the home network, or an authentication mechanism supported by both the UE and the home network. Alternatively, the EEC may determine the candidate authentication mechanism #1 based on the authentication capability of the related network, an authentication mechanism supported by the EEC, and the network in which the H-ECS is located. In this case, similar to the foregoing descriptions, the EEC may determine, as the candidate authentication mechanism #1, an authentication mechanism supported by both the home network and the EEC in the authentication capability of the related network. That is, the candidate authentication mechanism #1 may be an authentication mechanism supported by all of the EEC, the UE, and the home network.

It may be further understood that the foregoing interaction manner between the EEC and the NAS is merely an example, and is not limited. The NAS may also provide the candidate authentication mechanism #1. For example, the NAS may determine the candidate authentication mechanism #1 based on the network in which the H-ECS is located, the authentication capability #2 of the network, and the authentication mechanism supported by the UE that are provided by the EEC, and then provide the candidate authentication mechanism #1 for the EEC. Optionally, the EEC may further provide an authentication mechanism supported by the EEC, so that the NAS determines the candidate authentication mechanism #1 based on the network in which the H-ECS is located, the authentication mechanism supported by the EEC, the authentication capability #2 of the network, and the authentication mechanism supported by the UE that are provided by the EEC. Alternatively, the NAS provides the EEC with the authentication mechanism supported by the home network of the UE, and the EEC determines the candidate authentication mechanism #1 based on the authentication mechanism supported by the UE and the authentication mechanism supported by the home network of the UE. Alternatively, the NAS provides the EEC with the authentication capability #2 of the network and the authentication mechanism supported by the UE, so that the EEC determines the candidate authentication mechanism #1 based on the authentication capability #2 of the network, the authentication mechanism supported by the UE, and the network in which the H-ECS is located. Alternatively, there is any other possible implementation. This is not limited.

Alternatively, the EEC may determine the target authentication mechanism #1 based on the candidate authentication mechanism #1 and the authentication mechanism supported by the H-ECS. Alternatively, the NAS may provide the target authentication mechanism #1. For example, the NAS determines the target authentication mechanism #1 based on the network in which the H-ECS is located, the authentication mechanism supported by the H-ECS, the authentication capability #2 of the network, and the authentication mechanism supported by the UE that are provided by the EEC, and then provides the target authentication mechanism #1 for the NAS. Optionally, the EEC may further provide an authentication mechanism supported by the EEC, so that the NAS determines the target authentication mechanism #1 based on the network in which the H-ECS is located, the authentication mechanism supported by the H-ECS, the authentication mechanism supported by the EEC, the authentication capability #2 of the network, and the authentication mechanism supported by the UE. Alternatively, the NAS may provide the foregoing parameters used to determine the target authentication mechanism #1, so that the EEC determines the target authentication mechanism #1 based on these parameters and the authentication mechanism supported by the H-ECS. For example, the NAS provides the EEC with the authentication mechanism supported by the home network of the UE, and the EEC determines the target authentication mechanism #1 based on the authentication mechanism supported by the H-ECS, the authentication mechanism supported by the UE, and the authentication mechanism supported by the home network of the UE. Alternatively, the NAS provides the EEC with the authentication capability #2 of the network and the authentication mechanism supported by the UE, so that the EEC determines the target authentication mechanism #1 based on the authentication capability #2 of the network, the authentication mechanism supported by the UE, the network in which the H-ECS is located, and the authentication mechanism supported by the H-ECS. Alternatively, there is any other possible implementation. This is not limited. In a process of determining the target authentication mechanism #1, if a plurality of authentication mechanisms can be used as the target authentication mechanism #1, the EEC may further determine, according to a priority policy, an authentication mechanism with a highest priority in the plurality of authentication mechanisms as the target authentication mechanism #1. The priority policy may be preconfigured on the EEC, or the EEC obtains the priority policy from the H-ECS in advance. This is not limited.

In addition, the candidate authentication mechanism #1 or the target authentication mechanism #1 may also be an authentication mechanism that does not need to be supported by a network. For example, the EEC is preconfigured with a certificate, and the EEC may also determine that a certificate authentication manner is the candidate authentication mechanism #1 or the target authentication mechanism #1.

It should be noted that S702 may be triggered by an operation of a user. For example, the user taps to start an AC corresponding to the EEC, and the AC responds to the operation of the user to trigger the EEC to perform S702. Alternatively, S702 may be independently triggered by the EEC. For example, the EEC independently triggers execution of S702 periodically. This is not limited.

S703: The EEC provides the candidate authentication mechanism #1 for the H-ECS.

The candidate authentication mechanism #1 may be carried in a first message, for example, a communication request message. HTTP is used as an example. The communication request message may be specifically an HTTP request message. Alternatively, the candidate authentication mechanism #1 may be carried in a newly defined first message. This is not specifically limited.

S704: The H-ECS determines the target authentication mechanism #1.

The H-ECS may determine the target authentication mechanism #1 based on the candidate authentication mechanism #1 and the authentication mechanism supported by the H-ECS. A specific implementation is similar to that in S702. For details, reference may be made for understanding. The details are not described again.

S705: The H-ECS provides the target authentication mechanism #1 for the EEC.

The target authentication mechanism #1 may be carried in a second message. The second message may be a response message of the first message, for example, a communication response message. HTTP is used as an example. The communication response message may be specifically an HTTP response message. The target authentication mechanism #1 may also be carried in a newly defined second message. This is not specifically limited herein.

It may be understood that S703 to S705 are optional. If the EEC independently determines the target authentication mechanism #1, S703 to S705 may not be performed.

S706: The EEC and the H-ECS establish a secure connection based on the target authentication mechanism #1.

If the target authentication mechanism #1 is AKMA, the secure connection may be an AKMA-based secure connection. For a specific implementation, refer to the foregoing related descriptions of AKMA. Details are not described again. Alternatively, if the target authentication mechanism #1 is GBA, the secure connection may be a GBA-based secure connection. For a specific implementation, refer to the foregoing related descriptions of GBA. Details are not described again. Certainly, the target authentication mechanism #1 may alternatively be any other possible mechanism, and the secure connection may alternatively be any other possible connection. This is not limited.

S707: The EEC sends a service provisioning request message #1 to the H-ECS, and correspondingly, the H-ECS receives the service provisioning request message #1 from the EEC.

The service provisioning request message #1 may be a message protected based on the secure connection. In addition, for a specific principle of S707, refer to the foregoing related descriptions of "2. Architecture for enabling an edge application" and "Implementation 3". Details are not described again.

S708: The H-ECS sends a service provisioning response message #1 to the EEC, and correspondingly, the EEC receives the service provisioning response message #1 from the H-ECS.

The service provisioning response message #1 may be a message protected based on the secure connection. The service provisioning response message #1 may be used to provide EES information of an available EES, for example, carry the EES information. The EES information may include an EES address. Optionally, the EES information may include at least one of the following: an access token of the EES, a capability of the EES, for example, an authentication mechanism supported by the EES, or identification information of a network in which the EES is located. The H-ECS may determine the available EES based on the service provisioning request message #1, for example, an EES located in the home network and near the UE. In addition, for a specific principle of S708, refer to the foregoing related descriptions of "2. Architecture for enabling an edge application" and "Implementation 3". Details are not described again.

S709: The EEC obtains a candidate authentication mechanism #2 or a target authentication mechanism #2 between the EEC and the EES.

The candidate authentication mechanism #2 may be the same as the candidate authentication mechanism #1. In this case, the EEC may re-determine the candidate authentication mechanism #2. A specific implementation is similar to that of the candidate authentication mechanism #1. Details are not described again. Alternatively, the EEC may reuse the candidate authentication mechanism #1 as the candidate authentication mechanism #2, to reduce overheads. For example, after determining the candidate authentication mechanism #1, the EEC may store the candidate authentication mechanism #1, to reuse the candidate authentication mechanism #1.

The target authentication mechanism #2 may be an authentication mechanism supported by both the EES and the home network. That is, the EEC and the UE support, by default, the authentication mechanism supported by both the EES and the home network, or the EEC and the UE support, by default, all possible authentication mechanisms. Alternatively, the target authentication mechanism #2 may be an authentication mechanism supported by all of the UE, the EES, and the home network. That is, the EEC supports, by default, the authentication mechanism supported by all of the UE, the H-ECS, and the home network, or the EEC supports, by default, all possible authentication mechanisms. Alternatively, the target authentication mechanism #2 may be an authentication mechanism supported by all of the EEC, the EES, and the home network. That is, the UE supports, by default, the authentication mechanism supported by all of the EEC, the H-ECS, and the home network, or the UE supports, by default, all possible authentication mechanisms. Alternatively, the target authentication mechanism #2 may be an authentication mechanism supported by all of the UE, the EEC, the EES, and the home network. The target authentication mechanism #2 may be specifically at least one of the following: gpp-gba, 3gpp-gba-uicc, 3gpp-gba-digest, 3gpp-akma, or the like, or may be any other possible authentication mechanism. This is not limited.

The target authentication mechanism #2 may be determined based on the candidate authentication mechanism #2. For example, the target authentication mechanism #2 may be determined from the candidate authentication mechanism #2, that is, the candidate authentication mechanism #2 may include the target authentication mechanism #2. For a specific implementation, refer to the foregoing related descriptions in S702. Details are not described again.

S710: The EEC provides the candidate authentication mechanism #2 for the EES.

The candidate authentication mechanism #2 may be carried in a third message, for example, a communication request message. HTTP is used as an example. The communication request message may be specifically an HTTP request message. Alternatively, the candidate authentication mechanism #2 may be carried in a newly defined first message. This is not specifically limited.

S711: The EES determines the target authentication mechanism #2.

The EES may determine the target authentication mechanism #2 based on the candidate authentication mechanism #2 and the authentication mechanism supported by the EES. A specific implementation is similar to that in S709. For details, reference may be made for understanding. The details are not described again.

S712: The EES provides the target authentication mechanism #2 for the EEC.

The target authentication mechanism #2 may be carried in a fourth message. The fourth message may be a response message of the third message, for example, a communication response message. HTTP is used as an example. The communication response message may be specifically an HTTP response message. The target authentication mechanism #2 may also be carried in a newly defined fourth message. This is not specifically limited herein.

It may be understood that S710 to S712 are optional. If the EEC independently determines the target authentication mechanism #2, S710 to S712 are not performed.

S713: The EEC and the EES establish a secure connection based on the target authentication mechanism #2.

If the target authentication mechanism #1 is AKMA, the secure connection may be an AKMA-based secure connection. For a specific implementation, refer to the foregoing related descriptions of AKMA. Details are not described again. Alternatively, if the target authentication mechanism #1 is GBA, the secure connection may be a GBA-based secure connection. For a specific implementation, refer to the foregoing related descriptions of GBA. Details are not described again. Certainly, the target authentication mechanism #2 may alternatively be any other possible mechanism, and the secure connection may alternatively be any other possible connection. This is not limited.

In conclusion, the AMF network element provides the UE with an authentication mechanism supported by the network, so that the EEC and the H-ECS/EES can complete authentication with support of the network and establish a secure connection. In this way, a problem that authentication cannot be completed between the EEC and the H-ECS/EES without support of the network can be resolved, thereby ensuring communication security between the EEC and the H-ECS/EES.

Case 2: A network on which the UE currently camps is not a home network, that is, the network on which the UE currently camps is a visited network. In this case, the UE initiates interaction with the V-ECS/EES.

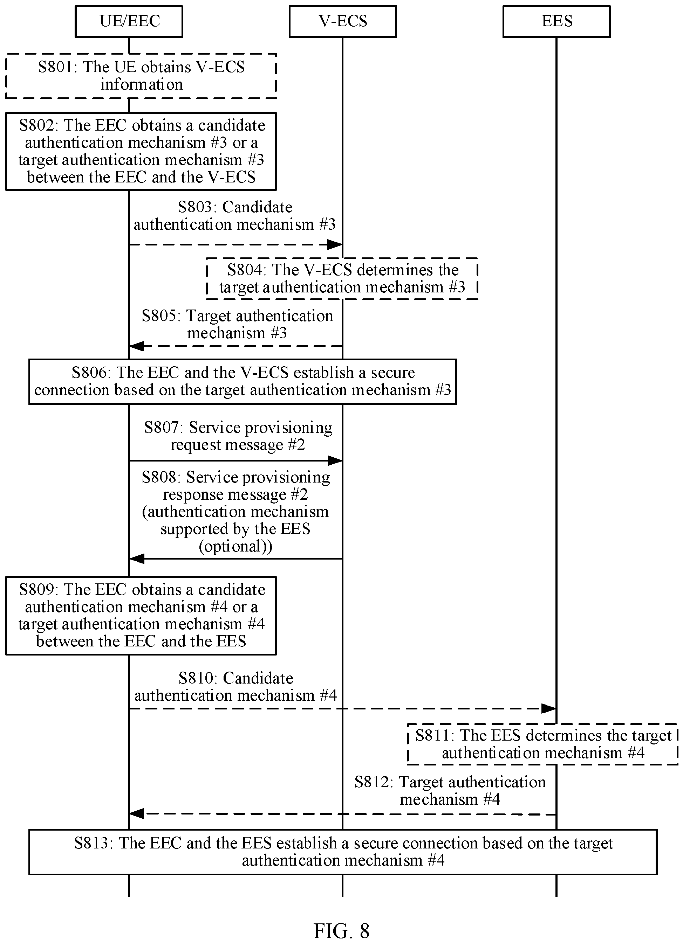

As shown in FIG. 8, an interaction procedure between the UE and the V-ECS/EES is as follows:

S801: The UE obtains V-ECS information.

A specific implementation of S801 is similar to that of S701. For details, reference may be made for understanding. The details are not described again.

S802: The EEC obtains a candidate authentication mechanism #3 or a target authentication mechanism #3 between the EEC and the V-ECS.

The candidate authentication mechanism #3 may be an authentication mechanism supported by both the visited network and the home network. That is, the EEC and the UE support, by default, the authentication mechanism supported by both the visited network and the home network, or the EEC and the UE support all possible authentication mechanisms by default. Alternatively, the candidate authentication mechanism #3 may be an authentication mechanism supported by all of the UE, the visited network, and the home network. That is, the EEC supports, by default, the authentication mechanism supported by all of the UE, the visited network, and the home network, or the EEC supports all possible authentication mechanisms by default. Alternatively, the candidate authentication mechanism #3 may be an authentication mechanism supported by all of the ECC, the visited network, and the home network. That is, the UE supports, by default, an authentication mechanism supported by all of the EEC, the visited network, and the home network, or the UE supports all possible authentication mechanisms by default. Alternatively, the candidate authentication mechanism #3 may be an authentication mechanism supported by all of the EEC, the UE, the visited network, and the home network. The candidate authentication mechanism #3 may be specifically at least one of the following: 3gpp-gba, 3gpp-gba-uicc, 3gpp-gba-digest, 3gpp-akma, or the like, or may be any other possible authentication mechanism. This is not limited.

The target authentication mechanism #3 may be an authentication mechanism supported by all of the V-ECS, the visited network, and the home network. That is, the EEC and the UE support, by default, an authentication mechanism supported by all of the V-ECS, the visited network, and the home network, or the EEC and the UE support all possible authentication mechanisms by default. Alternatively, the target authentication mechanism #3 may be an authentication mechanism supported by all of the UE, the V-ECS, the visited network, and the home network. That is, the EEC supports, by default, the authentication mechanism supported by all of the UE, the V-ECS, the visited network, and the home network, or the EEC supports all possible authentication mechanisms by default. Alternatively, the target authentication mechanism #3 may be an authentication mechanism supported by all of the EEC, the V-ECS, the visited network, and the home network. That is, the UE supports, by default, the authentication mechanism supported by all of the EEC, the V-ECS, the visited network, and the home network, or the UE supports all possible authentication mechanisms by default. Alternatively, the target authentication mechanism #3 may be an authentication mechanism supported by all of the UE, the EEC, the V-ECS, the visited network, and the home network. The target authentication mechanism #3 may be specifically at least one of the following: gpp-gba, 3gpp-gba-uicc, 3gpp-gba-digest, 3gpp-akma, or the like, or may be any other possible authentication mechanism. This is not limited.

The target authentication mechanism #3 may be determined based on the candidate authentication mechanism #3. For example, the target authentication mechanism #3 may be determined from the candidate authentication mechanism #3, that is, the candidate authentication mechanism #3 may include the target authentication mechanism #3.

Specifically, similar to S702, the EEC may request a NAS to provide an authentication capability of a related network, so that the EEC determines the candidate authentication mechanism #3 or the target authentication mechanism #3 based on the authentication capability.

In a possible manner, after the NAS receives a request from the EEC, the NAS may directly provide an authentication capability #2 of the network for the EEC, that is, the authentication capability of the related network is the authentication capability #2 of the network. Alternatively, the NAS may determine the authentication capability of the related network based on that the network on which the UE currently camps is the visited network and based on the authentication capability #2 of the network. In this case, because the UE is located in the visited network, authentication between the EEC and the V-ECS may need support of the home network and the visited network. Therefore, the authentication capability of the related network may include an authentication mechanism supported by both the home network and the visited network and an identifier of the visited network. In this case, for an authentication mechanism, the home network needs to implement a function of the authentication mechanism that may be different from a function of the authentication mechanism that needs to be implemented by the visited network. That is, the home network and the roaming network need to cooperate to complete a procedure of the authentication mechanism. In addition, in this case, the authentication mechanism supported by the UE is not considered, that is, the UE supports, by default, an authentication mechanism supported by the home network and the visited network. Certainly, if authentication between the EEC and the V-ECS does not need support of the home network, the authentication mechanism in the authentication capability of the related network may also be an authentication mechanism supported by the visited network, regardless of whether the home network supports the authentication mechanism. Alternatively, if authentication between the EEC and the V-ECS does not need support of the visited network, the authentication mechanism in the authentication capability of the related network may also be an authentication mechanism supported by the home network, regardless of whether the visited network supports the authentication mechanism.

In another possible manner, after the NAS receives a request from the EEC, the NAS may determine the authentication capability of the related network based on the authentication mechanism supported by the UE and the authentication capability #2 of the network. For a specific implementation, refer to the foregoing related descriptions in S702. Details are not described again. In addition, a difference from S702 lies in that if the authentication capability #2 of the network may include an authentication mechanism supported by both the home network and the visited network and an identifier of the visited network, the authentication capability of the related network may include an authentication mechanism supported by all of the UE, the home network, and the visited network and the identifier of the visited network. Alternatively, after the NAS receives a request from the EEC, the NAS may determine the authentication capability of the related network based on an authentication mechanism supported by the UE, a network (visited network) on which the UE currently camps, and the authentication capability #2 of the network. The authentication capability of the related network may include an authentication mechanism supported by all of the UE, the home network, and the visited network and an identifier of the visited network.

Subsequently, the EEC may determine the candidate authentication mechanism #3 based on the authentication capability of the related network and a network in which the V-ECS is located. It may be understood that, because the V-ECS is located in the visited network, authentication between the EEC and the V-ECS usually needs support of the home network and the visited network. Therefore, the EEC may determine, as the candidate authentication mechanism #3, an authentication mechanism supported by both the home network and the visited network in the authentication capability of the related network. In this case, it is determined that the candidate authentication mechanism #3 may be the authentication mechanism supported by the home network and the visited network, or an authentication mechanism supported by all of the UE, the home network, and the visited network. Alternatively, the EEC may determine the candidate authentication mechanism #1 based on the authentication capability of the related network, an authentication mechanism supported by the EEC, and a network in which the V-ECS is located. In this case, similar to the foregoing descriptions, the EEC may determine, as the candidate authentication mechanism #3, authentication mechanisms of the EEC, the home network, and the visited network in the authentication capability of the related network. That is, the candidate authentication mechanism #3 may be an authentication mechanism supported by all of the EEC, the UE, the home network, and the visited network.

It may be further understood that the foregoing interaction manner between the EEC and the NAS is merely an example, and is not limited. The NAS may also provide the candidate authentication mechanism #3. For example, the NAS may determine the candidate authentication mechanism #3 based on the network in which the V-ECS is located, the authentication capability #2 of the network, and the authentication mechanism supported by the UE that are provided by the EEC, and then provide the candidate authentication mechanism #3 for the NAS. Optionally, the EEC may further provide an authentication mechanism supported by the EEC, so that the NAS determines the candidate authentication mechanism #3 based on the network in which the V-ECS is located, the authentication mechanism supported by the EEC, the authentication capability #2 of the network, and the authentication mechanism supported by the UE that are provided by the EEC. Alternatively, the NAS provides the EEC with an authentication mechanism supported by both the visited network of the UE and the home network of the UE, and the EEC determines the candidate authentication mechanism #3 based on the authentication mechanism supported by the UE and the authentication mechanism supported by both the visited network of the UE and the home network of the UE. Alternatively, the NAS provides the EEC with the authentication capability #2 of the network and an authentication mechanism supported by the UE, so that the EEC determines the candidate authentication mechanism #3 based on the authentication capability #2 of the network, the authentication mechanism supported by the UE, and the network in which the V-ECS is located. Alternatively, there is any other possible implementation. This is not limited.

Alternatively, the EEC may further determine the target authentication mechanism #3 based on the candidate authentication mechanism #3 and the authentication mechanism supported by the V-ECS. Alternatively, the NAS may provide the target authentication mechanism #3. For example, the NAS determines the target authentication mechanism #3 based on the network in which the V-ECS is located, the authentication mechanism supported by the V-ECS, the authentication capability #2 of the network, and the authentication mechanism supported by the UE that are provided by the EEC, and then provides the target authentication mechanism #3 for the NAS. Optionally, the EEC may further provide an authentication mechanism supported by the EEC, so that the NAS determines the target authentication mechanism #3 based on the network in which the V-ECS is located, the authentication mechanism supported by the V-ECS, the authentication mechanism supported by the EEC, the authentication capability #2 of the network, and the authentication mechanism supported by the UE. Alternatively, the NAS may provide the foregoing parameters used to determine the target authentication mechanism #3, so that the EEC determines the target authentication mechanism #3 based on these parameters and the authentication mechanism supported by the V-ECS. For example, the NAS provides the EEC with an authentication mechanism supported by both the visited network of the UE and the home network of the UE, and the EEC determines the target authentication mechanism #3 based on the authentication mechanism supported by the V-ECS, the authentication mechanism supported by the UE, and the authentication mechanism supported by both the visited network of the UE and the home network of the UE. Alternatively, the NAS provides the EEC with the authentication capability #2 of the network and an authentication mechanism supported by the UE, so that the EEC determines the target authentication mechanism #3 based on the authentication capability #2 of the network, the authentication mechanism supported by the UE, the network in which the V-ECS is located, and the authentication mechanism supported by the V-ECS. Alternatively, there is any other possible implementation. This is not limited. In a process of determining the target authentication mechanism #3, if a plurality of authentication mechanisms can be used as the target authentication mechanism #3, the EEC may further determine, according to a priority policy, an authentication mechanism with a highest priority in the plurality of authentication mechanisms as the target authentication mechanism #3. The priority policy may be preconfigured on the EEC, or the EEC obtains the priority policy from the V-ECS in advance. This is not limited.

In addition, for a specific implementation of S802, refer to the foregoing related descriptions in S702. Details are not described again.

S803: The EEC provides the candidate authentication mechanism #3 for the V-ECS.

The candidate authentication mechanism #3 may be carried in a first message. For a specific implementation, refer to the related descriptions in S703. Details are not described again.

S804: The V-ECS determines a target authentication mechanism #3.

The V-ECS may determine the target authentication mechanism #3 based on the candidate authentication mechanism #3 and the authentication mechanism supported by the V-ECS. A specific implementation is similar to that in S802. For details, reference may be made for understanding. The details are not described again.

S805: The V-ECS provides the target authentication mechanism #3 for the EEC.

The target authentication mechanism #3 may be carried in a second message. For a specific implementation, refer to the foregoing related descriptions in S705. Details are not described again.

S806: The EEC and the V-ECS establish a secure connection based on the target authentication mechanism #3.

If the target authentication mechanism #3 is AKMA, the secure connection may be an

AKMA-based secure connection. For a specific implementation, refer to the foregoing related descriptions of AKMA. Details are not described again. Alternatively, if the target authentication mechanism #3 is GBA, the secure connection may be a GBA-based secure connection. For a specific implementation, refer to the foregoing related descriptions of GBA. Details are not described again. Certainly, the target authentication mechanism #3 may alternatively be any other possible mechanism, and the secure connection may alternatively be any other possible connection. This is not limited.

S807: The EEC sends a service provisioning request message #2 to the V-ECS, and correspondingly, the V-ECS receives the service provisioning request message #2 from the EEC.

The service provisioning request message #2 may be a message protected based on the secure connection. In addition, for a specific principle of S807, refer to the foregoing related descriptions of "2. Architecture for enabling an edge application" and "Implementation 3". Details are not described again.

S808: The V-ECS sends a service provisioning response message #2 to the EEC, and correspondingly, the EEC receives the service provisioning response message #2 from the V-ECS.

The service provisioning response message #2 may be a message protected based on the secure connection. The service provisioning response message #2 may carry EES information of an available EES. The available EES may be an EES located in the visited network and near the UE. For a specific principle of S808, refer to the foregoing related descriptions of "2. Architecture for enabling an edge application", "Implementation 3", and S708. Details are not described again.

S809: The EEC obtains a candidate authentication mechanism #4 or a target authentication mechanism #4 between the EEC and the EES.

The candidate authentication mechanism #4 may be the same as the candidate authentication mechanism #3. In this case, the EEC may re-determine the candidate authentication mechanism #4. A specific implementation is similar to that of the candidate authentication mechanism #3. Details are not described again. Alternatively, the EEC may reuse the candidate authentication mechanism #4 as the candidate authentication mechanism #3, to reduce overheads. For example, after determining the candidate authentication mechanism #3, the EEC may store the candidate authentication mechanism #3, to reuse the candidate authentication mechanism #4.

The target authentication mechanism #4 may be an authentication mechanism supported by all of the EES, the home network, and the visited network. That is, the EEC and the UE support, by default, the mechanism supported by all of the EES, the home network, and the visited network, or the EEC and the UE support, by default, all possible authentication mechanisms. Alternatively, the target authentication mechanism #4 may be an authentication mechanism supported by all of the UE, the EES, the home network, and the visited network. That is, the EEC supports, by default, the authentication mechanism supported by all of the UE, the EES, the home network, and the visited network, or the EEC supports, by default, all possible authentication mechanisms. Alternatively, the target authentication mechanism #4 may be an authentication mechanism supported by all of the EEC, the EES, the home network, and the visited network. That is, the UE supports, by default, the authentication mechanism supported by all of the EEC, the EES, the home network, and the visited network, or the UE supports, by default, all possible authentication mechanisms. Alternatively, the target authentication mechanism #4 may be an authentication mechanism supported by all of the UE, the EEC, the EES, the home network, and the visited network. The target authentication mechanism #4 may be specifically at least one of the following: gpp-gba, 3gpp-gba-uicc, 3gpp-gba-digest, 3gpp-akma, or the like, or may be any other possible authentication mechanism. This is not limited.

The target authentication mechanism #4 may be determined based on the candidate authentication mechanism #4. For example, the target authentication mechanism #4 may be determined from the candidate authentication mechanism #4, that is, the candidate authentication mechanism #4 may include the target authentication mechanism #4. For a specific implementation, refer to the foregoing related descriptions in S802. Details are not described again.

S810: The EEC provides the candidate authentication mechanism #4 for the EES.

The candidate authentication mechanism #4 may be carried in a third message. For a specific implementation, refer to the related descriptions in S710. Details are not described again.

S811: The EES determines the target authentication mechanism #4.

The EES may determine the target authentication mechanism #4 based on the candidate authentication mechanism #4 and the authentication mechanism supported by the EES. A specific implementation is similar to that in S809. For details, reference may be made for understanding. The details are not described again.

S812: The EES provides the target authentication mechanism #4 for the EEC.

The target authentication mechanism #2 may be carried in a fourth message. For a specific implementation, refer to the related descriptions in S712. Details are not described again.

S813: The EEC and the EES establish a secure connection based on the target authentication mechanism #4.

If the target authentication mechanism #4 is AKMA, the secure connection may be an AKMA-based secure connection. For a specific implementation, refer to the foregoing related descriptions of AKMA. Details are not described again. Alternatively, if the target authentication mechanism #4 is GBA, the secure connection may be a GBA-based secure connection. For a specific implementation, refer to the foregoing related descriptions of GBA. Details are not described again. Certainly, the target authentication mechanism #4 may alternatively be any other possible mechanism, and the secure connection may alternatively be any other possible connection. This is not limited.

In conclusion, the AMF network element provides the UE with an authentication mechanism supported by the network, so that the EEC and the V-ECS/EES can complete authentication with support of the network and establish a secure connection. In this way, a problem that authentication cannot be completed between the EEC and the V-ECS/EES without support of the network can be resolved, thereby ensuring communication security between the EEC and the V-ECS/EES.

Case 3: A network on which the UE currently camps is not a home network, that is, the network on which the UE currently camps is a visited network. In this case, the UE initiates interaction with the H-ECS/V-ECS/EES.

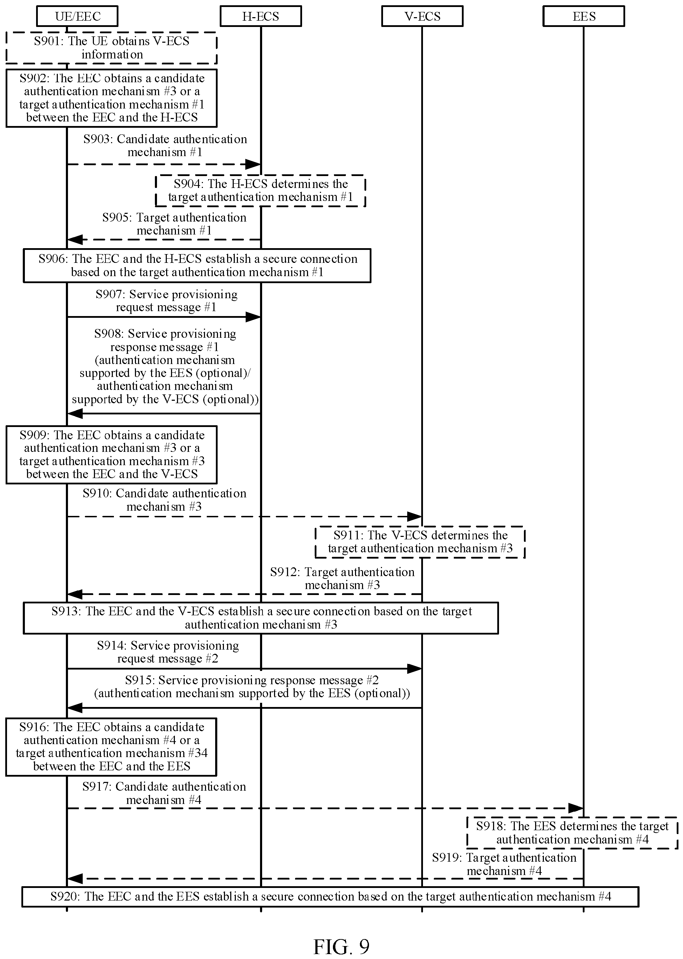

As shown in FIG. 9, an interaction procedure between the UE and the H-ECS/EES is as follows:

S901: The UE obtains H-ECS information.

S902: The EEC obtains a candidate authentication mechanism #1 or a target authentication mechanism #1 between the EEC and the H-ECS.

S903: The EEC provides the candidate authentication mechanism #1 for the H-ECS.

S904: The H-ECS determines a target authentication mechanism #1.

S905: The H-ECS provides the target authentication mechanism #1 for the EEC.

S906: The EEC and the H-ECS establish a secure connection based on the target authentication mechanism #1.

S907: The EEC sends a service provisioning request message #1 to the H-ECS, and correspondingly, the H-ECS receives the service provisioning request message #1 from the EEC.

A specific implementation of S901 is similar to a specific implementation of S701, a specific implementation of S902 is similar to specific implementations of S702 and S802, and specific implementations of S903 to S907 are similar to specific implementations of S703 to S707. For details, reference may be made for understanding. The details are not described again.

S908: The H-ECS sends a service provisioning response message #1 to the EEC, and correspondingly, the EEC receives the service provisioning response message #1 from the H-ECS.

The service provisioning response message #1 may be a message protected based on the secure connection. The service provisioning response message #1 may be used to provide EES information of an available EES, for example, carry the EES information. Alternatively, the service provisioning response message #1 may be used to provide V-ECS information of the V-ECS, for example, the V-ECS information. For a specific implementation of the EES information, refer to the related descriptions in S808. Details are not described again.

For example, if the EES information of the EES in the visited network is preconfigured for the H-ECS, the H-ECS may independently determine the available EES based on the service provisioning request message #1 and the EES information, to use the service provisioning response message #1 to carry the EES information. However, if the EES information of the EES in the visited network is not configured for the H-ECS, the H-ECS may determine whether the H-ECS has permission to request the V-ECS to provide the EES information of the available EES. If the H-ECS has permission to request the V-ECS to provide the EES information of the available EES, the H-ECS may obtain the EES information of the available EES from the V-ECS, to use the service provisioning response message #1 to carry the EES information. If the H-ECS does not have permission to request the V-ECS to provide the EES information of the available EES, the H-ECS may use the service provisioning response message #1 to carry the V-ECS information of the V-ECS. The V-ECS information may be preconfigured in the H-ECS, or the H-ECS obtains the V-ECS information from the V-ECS in advance. This is not limited.

For the EEC, if the service provisioning response message #1 provides the V-ECS information, the EEC triggers execution of S909 to S920. If the service provisioning response message #1 provides the EES information, the EEC skips S909 to S915, and triggers execution of S916 to S920.

In addition, for a specific principle of S908, refer to the foregoing related descriptions of "2. Architecture for enabling an edge application" and "Implementation 3". Details are not described again.

S909: The EEC obtains a candidate authentication mechanism #3 or a target authentication mechanism #3 between the EEC and the V-ECS.

S910: The EEC provides the candidate authentication mechanism #3 for the V-ECS.

S911: The V-ECS determines a target authentication mechanism #3.

S912: The V-ECS provides the target authentication mechanism #3 for the EEC.

S913: The EEC and the V-ECS establish a secure connection based on the target authentication mechanism #3.

S914: The EEC sends a service provisioning request message #2 to the V-ECS, and correspondingly, the V-ECS receives the service provisioning request message #2 from the EEC.

S915: The V-ECS sends a service provisioning response message #2 to the EEC, and correspondingly, the EEC receives the service provisioning response message #2 from the V-ECS.

S916: The EEC obtains a candidate authentication mechanism #4 or a target authentication mechanism #4 between the EEC and the EES.

S917: The EEC provides the candidate authentication mechanism #4 for the EES.

S918: The EES determines the target authentication mechanism #4.

S919: The EES provides the target authentication mechanism #4 for the EEC.

S920: The EEC and the EES establish a secure connection based on the target authentication mechanism #4.

For specific implementations of S909 to S920, refer to the foregoing related descriptions in S802 to S813. Details are not described again.

In conclusion, the AMF network element provides the UE with an authentication mechanism supported by the network, so that the EEC and the H-ECS/V-ECS/EES can complete authentication with support of the network and establish a secure connection. In this way, a problem that authentication cannot be completed between the EEC and the H-ECS/V-ECS/EES without support of the network can be resolved, thereby ensuring communication security between the EEC and the H-ECS/V-ECS/EES.

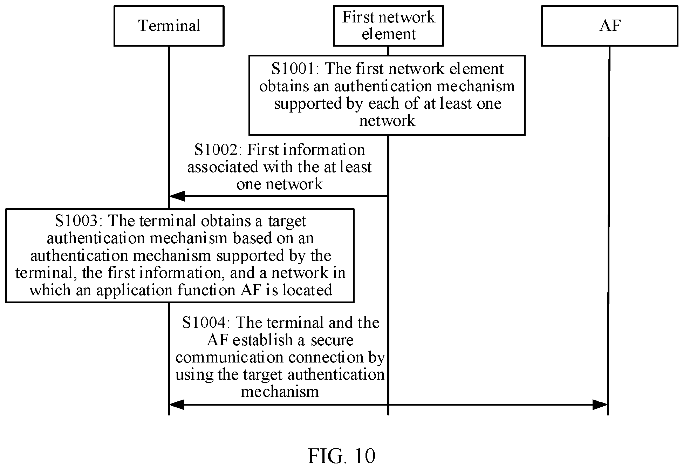

The foregoing describes, in detail with reference to FIG. 6 to FIG. 9, a procedure of the communication method provided in embodiments of this application in a specific scenario. The following describes, with reference to FIG. 10, an overall procedure of the communication method provided in embodiments of this application. The communication method mainly relates to interaction between a first network element, a terminal, and an AF. The first network element may be understood as the UDM network element or the AMF network element in Embodiment 1, the terminal may be understood as the UE in Embodiment 1, and the AF may be understood as the H-ECS/V-ECS/EES in Embodiment 1.

Specifically, a procedure of the communication method is as follows:

S1001: The first network element obtains an authentication mechanism supported by each of at least one network.

The at least one network may include a network in which the AF is located. The first information (the authentication capability #1 of the network or the authentication capability #2 of the network) may include the authentication mechanism supported by each of the at least one network. The authentication mechanism supported by each of the at least one network includes at least one of the following: a client certificate, an AKMA mechanism, a GBA mechanism, or any other possible authentication mechanism. This is not limited. Optionally, the GBA mechanism may include a mobile equipment-based GBA mechanism, a universal integrated circuit card-based GBA mechanism, a GBA digest, or the like. The network may support all GBA mechanisms, or only one or more of the GBA mechanisms. Optionally, the first information further includes an identifier of each of the at least one network, so that the terminal can subsequently identify each network.

The at least one network may include a network on which the terminal currently camps, and the first network element may obtain an authentication mechanism supported by the network on which the terminal currently camps. The terminal is associated with the first network element. For example, the terminal and the first network element may communicate with each other.

Optionally, the network on which the terminal currently camps is a home network of the terminal. The first network element may obtain an authentication mechanism supported by the home network of the terminal. That is, the first information may include the authentication mechanism supported by the home network of the terminal. Alternatively, optionally, the network on which the terminal currently camps is not a home network (for example, a visited network) of the terminal, and the at least one network further includes the home network of the terminal. The first network element may obtain an authentication mechanism supported by both the network on which the terminal currently camps and the home network of the terminal. That is, the first information may include the authentication mechanism supported by both the network on which the terminal currently camps and the home network of the terminal. That is, the first information may include only an authentication mechanism associated with the network on which the terminal currently camps. This can avoid obtaining an authentication mechanism corresponding to an unrelated network, thereby reducing communication overheads. Further, when the network on which the terminal currently camps is not the home network of the terminal, the first network element may further obtain an authentication mechanism supported by the home network of the terminal. That is, the first information further includes the authentication mechanism supported by the home network of the terminal. It may be understood that, because authentication between the terminal and the AF usually needs support of the home network of the terminal, when the network in which the AF is located is not the home network of the terminal, whether the network in which the AF is located supports the authentication mechanism and whether the home network of the terminal supports the authentication mechanism both need to be considered, so that the terminal and the AF can complete authentication with support of the network in which the AF is located and the home network of the terminal. In addition, when the network on which the terminal currently camps is not the home network of the terminal, the network in which the AF is located may also be the home network of the terminal. In this case, only authentication supported by the home network of the terminal needs to be considered.

Specifically, the first network element is a data management network element, and the data management network element may obtain, from subscription data of the terminal, the authentication mechanism supported by each of the at least one network. It may be understood that an authentication mechanism supported by each of a plurality of networks may be stored in the subscription data of the terminal, and the at least one network is one or more of the plurality of networks. That is, the first network element may selectively obtain, from the subscription data of the terminal, an authentication mechanism supported by each of the one or more networks, to avoid obtaining an authentication mechanism corresponding to an unrelated network, thereby reducing communication overheads. In addition, the authentication mechanism supported by each of the at least one network may also be stored in common information of the data management network element. This is not limited. For example, the data management network element may receive a subscription data obtaining request message from a mobility management network element, and obtain, from the subscription data of the terminal based on the subscription data obtaining request message, the authentication mechanism supported by each of the at least one network. For example, the subscription data obtaining request message includes an identifier of the network on which the terminal currently camps, and the data management network element may obtain, from the subscription data of the terminal based on the identifier of the network on which the terminal currently camps, the authentication mechanism supported by each of the at least one network. If the identifier of the network on which the terminal currently camps indicates that the network on which the terminal currently camps is the home network of the terminal, the data management network element obtains an authentication mechanism supported by the home network of the terminal. If the identifier of the network on which the terminal currently camps indicates that the network on which the terminal currently camps is not the home network of the terminal, the data management network element obtains an authentication mechanism supported by the home network of the terminal and the network on which the terminal currently camps.

Alternatively, the first network element is a mobility management network element, and the mobility management network element may obtain, from a data management network element, the authentication mechanism supported by each of the at least one network. For example, the mobility management network element may receive a registration request message from the terminal, and obtain subscription data of the terminal from the data management network element based on the registration request message, where the registration request message is used by the terminal to request to register with a network in which the mobility management network element is located, and the subscription data of the terminal includes the authentication mechanism supported by each of the at least one network. That is, the mobility management network element may reuse a subscription data procedure, and when obtaining the subscription data of the terminal from the data management network element, also obtain the authentication mechanism supported by each of the at least one network. In this way, a quantity of times of unnecessary interaction between the mobility management network element and the data management network element can be reduced, thereby reducing overheads.

It may be understood that the mobility management network element may further obtain, from the data management network element, an authentication mechanism supported by each of a plurality of networks. That is, the subscription data of the terminal may include the authentication mechanism supported by each of the plurality of networks. In this case, the mobility management network element may select, from the authentication mechanism supported by each of the plurality of networks, the authentication mechanism supported by each of the at least one network, to avoid obtaining an authentication mechanism corresponding to an unrelated network, thereby reducing communication overheads. For example, the mobility management network element obtains, from the authentication mechanism supported by each of the plurality of networks and based on the identifier of the network on which the terminal currently camps, the authentication mechanism supported by each of the at least one network. If the identifier of the network on which the terminal currently camps indicates that the network on which the terminal currently camps is the home network of the terminal, the mobility management network element obtains an authentication mechanism supported by the home network of the terminal. If the identifier of the network on which the terminal currently camps indicates that the network on which the terminal currently camps is not the home network of the terminal, the mobility management network element obtains an authentication mechanism supported by the home network of the terminal and the network on which the terminal currently camps.

S1002: The first network element sends, to the terminal, first information associated with the at least one network, and the terminal obtains the first information associated with the at least one network.

The first network element is a data management network element, and the data management network element may send a subscription data obtaining response message to a mobility management network element corresponding to the terminal, where the subscription data obtaining response message includes the first information. That is, the data management network element may reuse a subscription data procedure, and when providing the subscription data of the terminal for the mobility management network element, also provide the authentication mechanism supported by each of the at least one network. In this way, a quantity of times of unnecessary interaction between the mobility management network element and the data management network element can be reduced, thereby reducing overheads.

Alternatively, the first network element is a mobility management network element. In a process of registering with the first network, that is, a network in which the mobility management network element is located, or after registering with the first network, the terminal may receive the first information from the first network, that is, receive the first information from the mobility management network element. When the first network and the network in which the AF is located are different networks, the at least one network may further include the first network. It may be understood that after the terminal registers with the first network, the first network is the network on which the terminal currently camps.

For example, the terminal may send a registration request message to the first network (for example, the mobility management network element in the first network). After receiving the registration request message, the mobility management network element may send, to the terminal, a registration accept message that carries the first information. Correspondingly, in a process of registering with the first network, the terminal may receive, from the first network (for example, the mobility management network element in the first network), the registration accept message that carries the first information. Alternatively, after the terminal registers with the first network, the mobility management network obtains, from the data management network element or another network element, the authentication mechanism supported by each of the at least one network, and sends the first information to the terminal by using any one of the following messages: a user equipment UE configuration update command message, a downlink non-access stratum transport message, or a session management message. Correspondingly, after registering with the first network, the terminal receives, from the first network (for example, the mobility management network element in the first network), any one of the following messages that carry the first information: a UE configuration update command message, a downlink non-access stratum transport message, or a session management message. That is, the first information may be carried in existing signaling, or may be implemented by reusing existing signaling. In this way, implementation difficulty of the solution can be reduced. In addition, the signaling may be encrypted and integrity-protected signaling, to ensure communication security.

That is, the terminal may obtain the first information by using a registration procedure or by reusing a registration procedure, to reduce implementation difficulty of the solution. Certainly, that the terminal obtains the first information by using the registration procedure is merely an example, and is not limited. For example, the terminal may also obtain the first information by using a handover procedure or a reselection procedure. In addition, after the terminal registers with the first network, the first network may be understood as the network on which the terminal currently camps. Subsequently, if the terminal roams to another network, the another network may be understood as the network on which the terminal currently camps.

In addition, the terminal may further obtain the first information from an access network device. That is, if the terminal expects to access a network, the terminal may obtain the first information through the access network device in the network, to implement on-demand obtaining. For example, the terminal receives a system information block SIB from the access network device, where the SIB may include the first information. That is, an authentication mechanism supported by a network in which the access network device is located may be carried in existing signaling, or may be implemented by reusing existing signaling. In this way, implementation difficulty of the solution can be reduced. It should be noted that, in this case, the first information may include an authentication mechanism supported by the network that the terminal expects to access, that is, the network on which the terminal currently camps below, and the terminal may further obtain, from the home network of the terminal, an authentication mechanism supported by the home network of the terminal.

It may be understood that for specific implementations of S1001 and S1002, refer to the foregoing related descriptions in S601 to S605. Details are not described again.

S1003: The terminal obtains a target authentication mechanism based on an authentication mechanism supported by the terminal, the first information, and the network in which the AF is located.

In a possible design solution, the network in which the AF is located is a home network of the terminal, and the terminal may obtain the target authentication mechanism based on the authentication mechanism supported by the terminal and the authentication mechanism supported by the network in which the AF is located. In this case, the target authentication mechanism may be an authentication mechanism supported by both the terminal and the home network of the terminal. That is, if the AF is located in the home network of the terminal, whether the home network of the terminal supports the authentication mechanism needs to be considered, so that the terminal and the AF can complete authentication with support of the home network of the terminal. The AF is the foregoing H-ECS, and the target authentication mechanism may be the foregoing target authentication mechanism #1. The AF is an EES associated with the H-ECS, and the target authentication mechanism may be the foregoing target authentication mechanism #2.

For example, the terminal may determine a candidate authentication mechanism based on the authentication mechanism supported by the terminal and the authentication mechanism supported by the network in which the AF is located, and send the candidate authentication mechanism to the AF. The AF is the H-ECS, and the candidate authentication mechanism may be the foregoing candidate authentication mechanism #1. The AF is the EES associated with the H-ECS, and the candidate authentication mechanism may be the foregoing candidate authentication mechanism #2. In this way, the terminal can receive the target authentication mechanism from the AF. The candidate authentication mechanism is an authentication mechanism supported by both the terminal and the home network of the terminal. The candidate authentication mechanism includes a target authentication mechanism, and the target authentication mechanism is an authentication mechanism supported by all of the AF, the terminal, and the home network of the terminal. That is, when the terminal does not know which authentication mechanism is supported by the AF, the terminal may consider only an authentication mechanism supported by the terminal and the network in which the AF is located, that is, the candidate authentication mechanism, and the AF determines the target authentication mechanism based on the authentication mechanism supported by the AF and the candidate authentication mechanism. In this case, because support of the AF is further considered in a process of determining the target authentication mechanism, a procedure failure caused by nonsupport of the AF can be avoided. Certainly, if the AF supports, by default, the authentication mechanism supported by each of the at least one network, support of the AF may not be considered. This is not limited herein.

Further, a client (for example, the foregoing EEC) is deployed on the terminal, and a NAS of the terminal may send a first authentication mechanism (for example, an authentication mechanism included in the foregoing authentication capability of the related network) to the client, so that the client determines the candidate authentication mechanism based on the first authentication mechanism. The first authentication mechanism includes an authentication mechanism supported by both the terminal and the home network of the terminal. It may be understood that interaction between the terminal and the AF specifically includes interaction between the client of the terminal and the AF. For example, the client and the AF complete authentication, and establish a secure communication connection. In this case, the NAS needs to provide the client with the authentication mechanism supported by the terminal and the home network of the terminal, that is, the first authentication mechanism, so that the client determines the candidate authentication mechanism.

It may be understood that, that the NAS provides the first authentication mechanism for the client is merely an example, and is not limited. For example, the NAS directly provides the candidate authentication mechanism for the client. Specifically, the NAS determines the candidate authentication mechanism based on the network in which the AF is located, the first information, and the authentication mechanism supported by the terminal that are provided by the client. Optionally, the client may further provide an authentication mechanism supported by the client, so that the NAS determines the candidate authentication mechanism based on the network in which the AF is located, the authentication mechanism supported by the client, the first information, and the authentication mechanism supported by the terminal that are provided by the client. Alternatively, the NAS provides the client with an authentication mechanism supported by the home network of the terminal, and the client determines the candidate authentication mechanism based on the authentication mechanism supported by the terminal and the authentication mechanism supported by the home network of the terminal. Alternatively, the NAS provides the client with the first information and the authentication mechanism supported by the terminal, so that the client determines the candidate authentication mechanism based on the first information, the authentication mechanism supported by the terminal, and the network in which the AF is located. Alternatively, there is any other possible implementation. This is not limited.

Further, the client may determine the candidate authentication mechanism based on the authentication mechanism supported by the client and the first authentication mechanism. The candidate authentication mechanism is an authentication mechanism supported by all of the client, the terminal, and the home network of the terminal. That is, the client further considers support of the client in a process of determining the candidate authentication mechanism, so that a procedure failure caused by nonsupport of the client can be avoided. Certainly, if the client supports, by default, the authentication mechanism supported by each of the at least one network, support of the client may not be considered, that is, the client does not need to perform determining based on the authentication mechanism supported by the client. Alternatively, the client may determine the candidate authentication mechanism based on the authentication mechanism supported by the client, the network in which the AF is located, and the first authentication mechanism. The candidate authentication mechanism is an authentication mechanism supported by the client, the terminal, and the home network of the terminal. That is, the client obtains, from the first authentication mechanism based on the network in which the AF is located, the authentication mechanism supported by both the terminal and the home network of the terminal.

For another example, the terminal may determine the target authentication mechanism based on the authentication mechanism supported by the AF, the authentication mechanism supported by the terminal, and the authentication mechanism supported by the network in which the AF is located. The target authentication mechanism is an authentication mechanism supported by all of the AF, the terminal, and the home network of the terminal. That is, when the terminal knows which authentication mechanism is supported by the AF, the terminal may directly determine the target authentication mechanism, to reduce a quantity of times of unnecessary interaction with the AF, thereby reducing overheads.

Further, a client (for example, the foregoing EEC) is deployed on the terminal, and a NAS of the terminal may send a first authentication mechanism (for example, an authentication mechanism included in the foregoing authentication capability of the related network) to the client, so that the client determines the target authentication mechanism based on the authentication mechanism supported by the AF and the first authentication mechanism. The first authentication mechanism includes an authentication mechanism supported by both the terminal and the home network of the terminal. It may be understood that the terminal does not directly interact with the AF, but the client of the terminal interacts with the AF. For example, the client and the AF complete authentication, and establish a secure communication connection. In this case, the NAS needs to provide the client with the authentication mechanism supported by the terminal and the home network of the terminal, that is, the first authentication mechanism, so that the client determines the target authentication mechanism.

It may be understood that, that the NAS provides the first authentication mechanism for the client is merely an example, and is not limited. For example, the NAS directly provides the target authentication mechanism for the client. Specifically, the NAS determines the target authentication mechanism based on the network in which the AF is located, the authentication mechanism supported by the AF, the first information, and the authentication mechanism supported by the terminal that are provided by the client. Optionally, the client may further provide an authentication mechanism supported by the client, so that the NAS determines the target authentication mechanism based on the network in which the AF is located, the authentication mechanism supported by the AF, the authentication mechanism supported by the client, the first information, and the authentication mechanism supported by the terminal. Alternatively, the NAS provides the client with an authentication mechanism supported by the home network of the terminal, and the client determines the target authentication mechanism based on the authentication mechanism supported by the AF, the authentication mechanism supported by the terminal, and the authentication mechanism supported by the home network of the terminal. The NAS provides the client with the first information and the authentication mechanism supported by the terminal, so that the client determines the target authentication mechanism based on the first information, the authentication mechanism supported by the terminal, the network in which the AF is located, and the authentication mechanism supported by the AF. Alternatively, there is any other possible implementation. This is not limited.

Further, the client may determine the target authentication mechanism based on the authentication mechanism supported by the client, the authentication mechanism supported by the AF, and the first authentication mechanism. The target authentication mechanism is an authentication mechanism supported by all of the client, the AF, the terminal, and the home network of the terminal. That is, the client further considers support of the client in a process of determining the target authentication mechanism, so that a procedure failure caused by nonsupport of the client can be avoided. Certainly, if the client supports, by default, the authentication mechanism supported by each of the at least one network, support of the client may not be considered. This is not limited. Alternatively, the client may determine the target authentication mechanism based on the authentication mechanism supported by the client, the network in which the AF is located, the authentication mechanism supported by the AF, and the first authentication mechanism. The target authentication mechanism is an authentication mechanism supported by all of the client, the AF, the terminal, and the home network of the terminal. That is, the client obtains, from the first authentication mechanism based on the network in which the AF is located and the authentication mechanism supported by the AF, the authentication mechanism supported by all of the AF, the terminal, and the home network of the terminal.

In addition, for a specific implementation of the design solution, refer to the foregoing related descriptions in S702 to S705, S709 to S712, and S902 to S905. Details are not described again.

Alternatively, in another possible design solution, the network in which the AF is located is a network on which the terminal currently camps, the network on which the terminal currently camps is not a home network of the terminal, and the at least one network further includes the home network of the terminal. Based on this, the terminal may obtain the target authentication mechanism based on the authentication mechanism supported by the terminal, the authentication mechanism supported by the network in which the AF is located, and the authentication mechanism supported by the home network of the terminal. In this case, the target authentication mechanism may be an authentication mechanism supported by all of the terminal, the network in which the AF is located, and the home network of the terminal. It may be understood that, because authentication between the terminal and the AF usually needs support of the home network of the terminal, when the network in which the AF is located is not the home network of the terminal, whether the network in which the AF is located supports the authentication mechanism and whether the home network of the terminal supports the authentication mechanism both need to be considered, so that the terminal and the AF can complete authentication with support of the network in which the AF is located and the home network of the terminal.

The AF is a V-ECS, and the target authentication mechanism may be the foregoing target authentication mechanism #3. The AF is an EES associated with the V-ECS, and the target authentication mechanism may be the foregoing target authentication mechanism #4.

For example, the terminal may determine a candidate authentication mechanism based on the authentication mechanism supported by the terminal, an authentication mechanism supported by the network in which the AF is located, and an authentication mechanism supported by the home network of the terminal, and send the candidate authentication mechanism to the AF. The AF is the V-ECS, and the candidate authentication mechanism may be the foregoing candidate authentication mechanism #3. The AF is the EES associated with the V-ECS, and the candidate authentication mechanism may be the foregoing candidate authentication mechanism #4. In this way, the terminal can receive the target authentication mechanism from the AF. The candidate authentication mechanism is an authentication mechanism supported by all of the terminal, the network on which the terminal currently camps, and the home network of the terminal. The candidate authentication mechanism includes a target authentication mechanism. The target authentication mechanism is an authentication mechanism supported by all of the AF, the terminal, the network on which the terminal currently camps, and the home network of the terminal. That is, when the terminal does not know which authentication mechanism is supported by the AF, the terminal may consider only the authentication mechanism supported by the terminal, the network in which the AF is located, and the home network of the terminal, that is, the candidate authentication mechanism, and the AF determines the target authentication mechanism based on the authentication mechanism supported by the AF and the candidate authentication mechanism. In this case, because support of the AF is further considered in a process of determining the target authentication mechanism, a procedure failure caused by nonsupport of the AF can be avoided. Certainly, if the AF supports, by default, the authentication mechanism supported by each of the at least one network, support of the AF may not be considered. This is not limited herein.

Further, a client (for example, the foregoing EEC) is deployed on the terminal, and a NAS of the terminal may send a first authentication mechanism (for example, an authentication mechanism included in the foregoing authentication capability of the related network) to the client, so that the client determines the candidate authentication mechanism based on the first authentication mechanism. The first authentication mechanism includes an authentication mechanism supported by all of the terminal, the network on which the terminal currently camps, and the home network of the terminal. It may be understood that the terminal does not directly interact with the AF, but the client of the terminal interacts with the AF. For example, the client and the AF complete authentication, and establish a secure communication connection. In this case, the NAS needs to provide the client with the authentication mechanism supported by the terminal, the network on which the terminal currently camps, and the home network of the terminal, that is, the first authentication mechanism, so that the client determines the candidate authentication mechanism.

It may be understood that, that the NAS provides the first authentication mechanism for the client is merely an example, and is not limited. For example, the NAS directly provides the candidate authentication mechanism for the client. Specifically, the NAS determines the candidate authentication mechanism based on the network in which the AF is located, the first information, and the authentication mechanism supported by the terminal that are provided by the client. Optionally, the client may further provide an authentication mechanism supported by the client, so that the NAS determines the candidate authentication mechanism based on the network in which the AF is located, the authentication mechanism supported by the client, the first information, and the authentication mechanism supported by the terminal that are provided by the client. Alternatively, the NAS provides the client with an authentication mechanism supported by both the network on which the terminal currently camps and the home network of the terminal, and the client determines the candidate authentication mechanism based on the authentication mechanism supported by the terminal and the authentication mechanism supported by both the network on which the terminal currently camps and the home network of the terminal. Alternatively, the NAS provides the client with the first information and the authentication mechanism supported by the terminal, so that the client determines the candidate authentication mechanism based on the first information, the authentication mechanism supported by the terminal, and the network in which the AF is located. Alternatively, there is any other possible implementation. This is not limited.

Further, the client may determine the candidate authentication mechanism based on the authentication mechanism supported by the client and the first authentication mechanism. The candidate authentication mechanism is an authentication mechanism supported by all of the client, the terminal, the network on which the terminal currently camps, and the home network of the terminal. That is, the client further considers support of the client in a process of determining the candidate authentication mechanism, so that a procedure failure caused by nonsupport of the client can be avoided. Certainly, if the client supports, by default, the authentication mechanism supported by each of the at least one network, support of the client may not be considered. This is not limited. Alternatively, the client may determine the candidate authentication mechanism based on the network in which the AF is located, the authentication mechanism supported by the client, and the first authentication mechanism. The candidate authentication mechanism is an authentication mechanism supported by all of the client, the terminal, the network on which the terminal currently camps, and the home network of the terminal.

For another example, the terminal may determine the target authentication mechanism based on the authentication mechanism supported by the AF, the authentication mechanism supported by the terminal, the authentication mechanism supported by the network in which the AF is located, and the authentication mechanism supported by the home network of the terminal. The target authentication mechanism is an authentication mechanism supported by all of the AF, the terminal, the network on which the terminal currently camps, and the home network of the terminal. That is, when the terminal knows which authentication mechanism is supported by the AF, the terminal may directly determine the target authentication mechanism, to reduce a quantity of times of unnecessary interaction with the AF, thereby reducing overheads.

Further, a client (for example, the foregoing EEC) is deployed on the terminal, and a NAS of the terminal sends a first authentication mechanism (for example, an authentication mechanism included in the foregoing authentication capability of the related network) to the client, so that the client determines the target authentication mechanism based on the authentication mechanism supported by the AF and the first authentication mechanism. The first authentication mechanism includes an authentication mechanism supported by all of the terminal, the network on which the terminal currently camps, and the home network of the terminal. It may be understood that the terminal does not directly interact with the AF, but the client of the terminal interacts with the AF. For example, the client and the AF complete authentication, and establish a secure communication connection. In this case, the NAS needs to provide the client with the authentication mechanism supported by all of the terminal, the network on which the terminal currently camps, and the home network of the terminal, that is, the first authentication mechanism, so that the client determines the target authentication mechanism.

It may be understood that, that the NAS provides the first authentication mechanism for the client is merely an example, and is not limited. For example, the NAS directly provides the target authentication mechanism for the client. Specifically, the NAS determines the target authentication mechanism based on the network in which the AF is located, the authentication mechanism supported by the AF, the first information, and the authentication mechanism supported by the terminal that are provided by the client. Optionally, the client may further provide an authentication mechanism supported by the client, so that the NAS determines the target authentication mechanism based on the network in which the AF is located, the authentication mechanism supported by the AF, the authentication mechanism supported by the client, the first information, and the authentication mechanism supported by the terminal. Alternatively, the NAS provides the client with an authentication mechanism supported by the network on which the terminal currently camps and the home network of the terminal, and the client determines the target authentication mechanism based on the authentication mechanism supported by the AF, the authentication mechanism supported by the terminal, and the authentication mechanism supported by the network on which the terminal currently camps and the home network of the terminal. Alternatively, the NAS provides the client with the first information and the authentication mechanism supported by the terminal, so that the client determines the target authentication mechanism based on the first information, the authentication mechanism supported by the terminal, the network in which the AF is located, and the authentication mechanism supported by the AF. Alternatively, there is any other possible implementation. This is not limited.

Further, the client may determine the target authentication mechanism based on the authentication mechanism supported by the client, the authentication mechanism supported by the AF, and the first authentication mechanism. The target authentication mechanism is an authentication mechanism supported by all of the client, the AF, the terminal, the network on which the terminal currently camps, and the home network of the terminal. That is, the client further considers support of the client in a process of determining the target authentication mechanism, so that a procedure failure caused by nonsupport of the client can be avoided. Certainly, if the client supports, by default, the authentication mechanism supported by each of the at least one network, support of the client may not be considered. This is not limited. Alternatively, the client may determine the target authentication mechanism based on the authentication mechanism supported by the client, the network in which the AF is located, the authentication mechanism supported by the AF, and the first authentication mechanism. The target authentication mechanism is an authentication mechanism supported by all of the client, the AF, the terminal, the network on which the terminal currently camps, and the home network of the terminal.

It may be understood that an example in which the authentication mechanism supported by the terminal is considered is used above. This is not limited. For example, when the terminal supports, by default, the authentication mechanism supported by each of the at least one network, the authentication mechanism supported by the terminal may not be considered. In this case, the terminal may obtain the target authentication mechanism based on the first information and the network in which the application function AF is located. For a specific implementation, refer to the foregoing related descriptions. Details are not described again.

In addition, for a specific implementation of the design solution, refer to the foregoing related descriptions in S802 to S805, S809 to S812, S909 to S912, and S916 to S919. Details are not described again.

S1004: The terminal and the AF establish a secure communication connection by using the target authentication mechanism.

If the target authentication mechanism is AKMA, the secure connection may be an AKMA-based secure connection. For a specific implementation, refer to the foregoing related descriptions of AKMA. Details are not described again. Alternatively, if the target authentication mechanism is GBA, the secure connection may be a GBA-based secure connection. For a specific implementation, refer to the foregoing related descriptions of GBA. Details are not described again. Certainly, the target authentication mechanism may alternatively be any other possible mechanism, and the secure connection may alternatively be any other possible connection. This is not limited.

In conclusion, the first network may provide, by using the first information, the terminal with the authentication mechanism supported by each of the at least one network. For example, the first network may directly send the first information to the terminal, or send the first information to the terminal through another network. In this way, the terminal may obtain, based on the authentication mechanism supported by the terminal, the authentication mechanism supported by each of the at least one network, and the network in which the AF is located, the authentication mechanism supported by both the terminal and the network in which the AF is located, that is, the target authentication mechanism, so that the terminal and the AF can complete authentication with support of the network and establish the secure connection, thereby ensuring communication security.

With reference to the foregoing embodiment, in some possible design solutions, the terminal may further obtain the authentication mechanism supported by the AF.

In a possible manner, the AF is an EES. Based on this, the terminal may receive second information from an ECS. For example, the terminal receives the second information from the ECS through a secure communication connection between the terminal and the ECS. In this way, communication security can be ensured, and information leakage can be avoided. The ECS can be a V-ECS or an H-ECS. This is not limited. The ECS is associated with the EES. The EES is managed by the ECS, and the ECS stores configuration information of the EES. The second information may include an authentication mechanism supported by the EES. That is, the terminal may obtain, from the ECS, the authentication mechanism supported by the EES, and does not need to interact with the EES, to reduce a quantity of times of unnecessary interaction with the EES, thereby reducing overheads. Optionally, the second information may further include an identifier of a network in which the EES is located, so that the terminal determines the network in which the EES is located.

In addition, for a specific implementation of this manner, refer to the foregoing related descriptions in S707 and S708, S807 and S808, and S907 and S908. Details are not described again.

In another possible manner, the AF is an ECS in a home network of the terminal. Based on this, the terminal may receive second information from the home network of the terminal. The second information may include an authentication mechanism supported by the ECS in the home network of the terminal. That is, the terminal may obtain, from the home network of the terminal, the authentication mechanism supported by the ECS in the home network, and does not need to interact with the ECS, to reduce a quantity of times of unnecessary interaction with the ECS, thereby reducing overheads. Optionally, the second information may further include an identifier of the home network of the terminal, so that the terminal determines a network in which the ECS is located.

It may be understood that, that the terminal obtains, from the home network of the terminal, the authentication mechanism supported by the ECS in the home network is merely an example, and is not limited. For example, the AF is the ECS in the home network of the terminal, and a network on which the terminal currently camps is not the home network of the terminal. In this case, the terminal may also obtain, from the network on which the terminal currently camps, the authentication mechanism supported by the ECS in the home network of the terminal. Alternatively, the AF is an ECS in a network on which the terminal currently camps, and the network on which the terminal currently camps is not the home network of the terminal. In this case, the terminal may also obtain, from the network on which the terminal currently camps, an authentication mechanism supported by the ECS in the network on which the terminal currently camps. Alternatively, there is any other possible implementation. This is not limited.

In addition, for a specific implementation of this manner, refer to the foregoing related descriptions in S701, S801, and S901. Details are not described again.

In another possible manner, the AF is an ECS in a network on which the terminal currently camps, and the network on which the terminal currently camps is not a home network of the terminal. Based on this, the terminal may receive second information from an ECS in the home network of the terminal. For example, the terminal receives the second information from the ECS in the home network of the terminal through a secure communication connection between the terminal and the ECS in the home network of the terminal. In this way, communication security can be ensured, and information leakage can be avoided. The second information includes an authentication mechanism supported by the ECS in the network on which the terminal currently camps, and the ECS in the network on which the terminal currently camps is associated with the ECS in the home network of the terminal. That is, the terminal may obtain, from the ECS in the home network of the terminal, the authentication mechanism supported by the ECS in the network on which the terminal currently camps, and does not need to interact with the ECS in the network on which the terminal currently camps, to reduce a quantity of times of unnecessary interaction with the ECS, thereby reducing overheads. Optionally, the second information includes an identifier of the network on which the terminal currently camps, so that the terminal determines a network in which the ECS is located.

In addition, for a specific implementation of this manner, refer to the foregoing related descriptions in S907 and S908. Details are not described again.

### Embodiment 2

Different from Embodiment 1, in Embodiment 2, the ECS/EES may store an authentication capability of a network. The UE may provide the ECS/EES with information about a home network of the UE and/or information about a network in which the ECS/EES is located, so that the UE and the ECS/EES complete authentication with support of the network and establish a secure connection.

Case 1: The communication method relates to interaction between the UE/EEC, the H-ECS, and the EES. A network on which the UE currently camps is a home network.

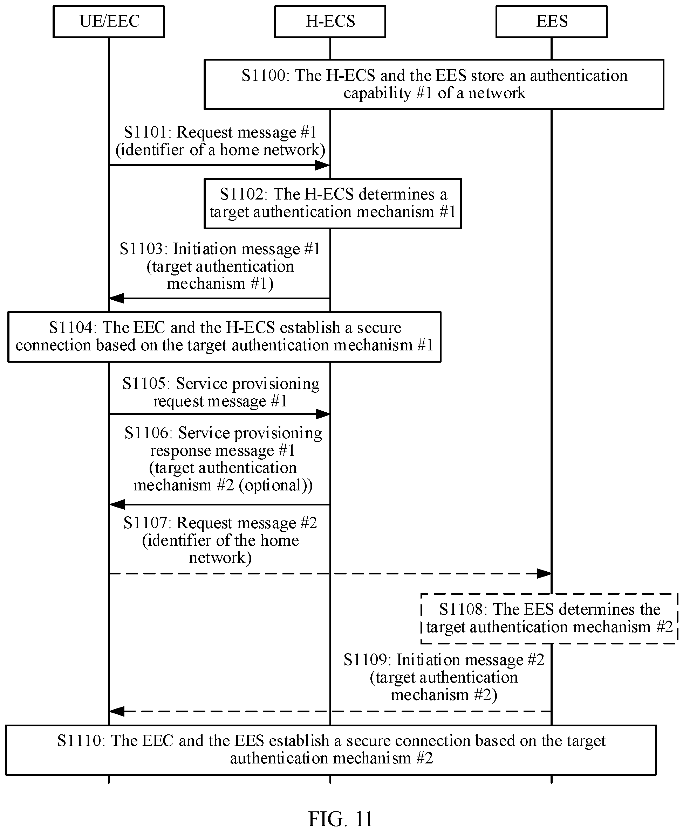

As shown in FIG. 11, a procedure of the method is specifically as follows:

S1100: The H-ECS and the EES store an authentication capability #3 of a network.

The authentication capability #3 of the network may include an authentication capability of each of at least one network. The at least one network includes a network in which the H-ECS and the EES are located. The at least one network may further include a network that has a roaming agreement with the network in which the H-ECS and the EES are located. An authentication capability of each network includes an authentication mechanism supported by the network and an identifier of the network (optional). The authentication mechanism supported by the network may be specifically at least one of the following: an AKMA mechanism, a GBA mechanism, or any other authentication mechanism that needs to be supported by the network during evolution. The GBA mechanism may specifically include at least one of the following: an ME-based GBA, a UICC-based GBA, or a GBA digest. The identifier of the network usually has a correspondence with the authentication mechanism supported by the network, and indicates that the authentication mechanism is the authentication mechanism supported by the network. The identifier of the network may be a PLMN ID, a NID, or a combination of a PLMN ID and a NID. This is not limited. The network is used as a home network of the UE, and the authentication mechanism supported by the network may also be understood as an authentication mechanism supported by the home network. For a specific implementation, refer to the foregoing related descriptions in S600. Details are not described again. Alternatively, the network is used as a visited network of the UE, and the authentication mechanism supported by the network may also be understood as an authentication mechanism supported by the visited network, for example, an authentication mechanism supported by the visited network that has a roaming agreement with the home network. For a specific implementation, refer to the foregoing related descriptions in S600. Details are not described again.

S1101: The UE sends a request message #1 to the H-ECS, and correspondingly, the H-ECS receives the request message #1 from the UE.

The request message #1 may be an HTTP request message, or may be any other possible message. This is not limited. The request message #1 may be carried in a PDU session of the UE. The request message #1 may be used to provide the H-ECS with information about the home network of the terminal. For example, the request message #1 may include an identifier of the home network. Alternatively, the request message #1 may directly provide an identifier of a network in which the H-ECS is located. In a non-roaming scenario, the identifier of the network in which the H-ECS is located is an identifier of the home network of the UE.

Optionally, the request message #1 may be further used to provide the H-ECS with an authentication mechanism supported by the UE, for example, including an authentication mechanism supported by the UE. For example, the EEC may request a NAS of the UE to provide the authentication mechanism supported by the UE, so that the EEC encapsulates the authentication mechanism supported by the UE into the request message #1, and then sends the request message #1 to the H-ECS. In this case, the H-ECS considers, by default, that the EEC supports an authentication mechanism in the authentication capability #3 of the network.

Alternatively, the request message #1 may be used to provide the H-ECS with an authentication mechanism supported by the EEC, for example, including an authentication mechanism supported by all EECs. For example, the EEC may locally obtain the authentication mechanism supported by the EEC, encapsulate the authentication mechanism supported by the EEC into the request message #1, and then send the request message #1 to the H-ECS. In this case, the H-ECS considers, by default, that the EEC supports an authentication mechanism in the authentication capability #3 of the network. In this case, the H-ECS considers, by default, that the UE supports an authentication mechanism in the authentication capability #3 of the network.

Alternatively, the request message #1 may be used to provide the H-ECS with an authentication mechanism supported by both the UE and the EEC, for example, including an authentication mechanism supported by both the UE and the EEC. For example, the EEC may request a NAS of the UE to provide an authentication mechanism supported by the UE. The EEC determines, based on the authentication mechanism supported by the UE and an authentication mechanism supported by the EEC, the authentication mechanism supported by both the UE and the EEC. The EEC may encapsulate the authentication mechanism supported by both the UE and the EEC into the request message #1, and then send the request message #1 to the H-ECS. Certainly, the request message #1 may not provide the authentication mechanism supported by both the UE and the EEC. For example, the H-ECS may configure, by default, the authentication mechanism supported by both the UE and the EEC, or the H-ECS considers, by default, that the EEC and the UE support the authentication mechanism in the authentication capability #3 of the network. This is not limited.

It may be understood that if there are a plurality of authentication mechanisms supported by the UE, a plurality of authentication mechanisms supported by the EEC, or a plurality of authentication mechanisms supported by both the UE and the EEC, the request message #1 may further include priority information of the plurality of authentication mechanisms.

S1102: The H-ECS determines a target authentication mechanism #1.

For a definition of the target authentication mechanism #1, refer to the foregoing related descriptions of the target authentication mechanism #1. Details are not described again.

The H-ECS may determine the target authentication mechanism #1 based on the identifier of the home network in the request message #1, the authentication capability #3 of the network, and the authentication mechanism supported by the H-ECS. The H-ECS may determine that a locally stored identifier of a network (that is, a network to which the H-ECS belongs) is the same as the identifier of the home network in the request message #1, and determine that the network in which the H-ECS is located is the home network of the UE, to determine to use the authentication mechanism supported by the home network in the authentication capability #3 of the network, so as to determine the target authentication mechanism #1. Alternatively, the H-ECS may determine, based on the identifier of the home network, the target authentication mechanism from the authentication mechanism supported by the home network in the authentication capability #3 of the network. For example, the H-ECS may determine the target authentication mechanism #1 based on the authentication mechanism supported by the home network and the authentication mechanism supported by the H-ECS. Alternatively, the H-ECS may determine the target authentication mechanism #1 based on the authentication mechanism supported by the EEC, the authentication mechanism supported by the home network, and the authentication mechanism supported by the H-ECS. Alternatively, the H-ECS may determine the target authentication mechanism #1 based on the authentication mechanism supported by the UE, the authentication mechanism supported by the home network, and the authentication mechanism supported by the H-ECS. Alternatively, the H-ECS may determine the target authentication mechanism #1 based on the authentication mechanism supported by both the UE and the EEC, the authentication mechanism supported by the home network, and the authentication mechanism supported by the H-ECS.

In addition, when the authentication mechanism supported by the UE and/or the EEC is considered, if a plurality of authentication mechanisms can be used as the target authentication mechanism #1, the H-ECS may determine, based on priority information provided by the UE, that an authentication mechanism with a highest priority in the plurality of authentication mechanisms is the target authentication mechanism #1. Alternatively, when the authentication mechanism supported by the UE and/or the EEC is not considered, if a plurality of authentication mechanisms can be used as the target authentication mechanism #1, the H-ECS may determine, based on priority information preconfigured for the H-ECS, that an authentication mechanism with a highest priority in the plurality of authentication mechanisms is the target authentication mechanism #1.

S1103: The H-ECS sends an initiation message #1 to the UE, and correspondingly, the UE receives the initiation message #1 from the H-ECS.

The initiation message #1 may be an HTTP response message, or may be any other possible message. This is not limited. The initiation message #1 may be used to trigger an authentication procedure between the EEC and the H-ECS. For example, the initiation message #1 may carry the target authentication mechanism #1.

S1104: The EEC and the H-ECS establish a secure connection based on the target authentication mechanism determined by the H-ECS.

If the target authentication mechanism #1 is AKMA, the secure connection may be an AKMA-based secure connection. For a specific implementation, refer to the foregoing related descriptions of AKMA. Details are not described again. Alternatively, if the target authentication mechanism #1 is GBA, the secure connection may be a GBA-based secure connection. For a specific implementation, refer to the foregoing related descriptions of GBA. Details are not described again. Certainly, the target authentication mechanism #1 may alternatively be any other possible mechanism, and the secure connection may alternatively be any other possible connection. This is not limited.

S1105: The EEC sends a service provisioning request message #1 to the H-ECS, and correspondingly, the H-ECS receives the service provisioning request message #1 from the EEC.

The service provisioning request message #1 may be a message protected based on the secure connection. In addition, for a specific principle of S1105, refer to the foregoing related descriptions of "2. Architecture for enabling an edge application" and "Implementation 3". Details are not described again.

S1106: The H-ECS sends a service provisioning response message #1 to the EEC, and correspondingly, the EEC receives the service provisioning response message #1 from the H-ECS.

The service provisioning response message #1 may be a message protected based on the secure connection. The service provisioning response message #1 may be used to provide EES information of an available EES, for example, carry the EES information. The available EES may be an EES located in the home network and near the UE. The EES information may include an EES address. In addition, the EES information may further include another parameter. For a specific implementation, refer to the foregoing related descriptions of "2. Architecture for enabling an edge application" and "Implementation 3". Details are not described again.

Optionally, the EES information may further include a target authentication mechanism #2. For a definition of the target authentication mechanism #2, refer to the foregoing related descriptions of the target authentication mechanism #2. Details are not described again.

The target authentication mechanism #2 may be determined by the H-ECS. The H-ECS may determine the target authentication mechanism #2 based on the identifier of the home network (that is, the network in which the EES is located) in the request message #1, the authentication capability #3 of the network, and the authentication mechanism supported by the EES. Specifically, the H-ECS may determine, based on that the identifier of the network in which the EES is located is the same as the identifier of the home network in the request message #1, that the network in which the EES is located is the home network of the UE, to determine to use the authentication mechanism supported by the home network in the authentication capability #3 of the network and the authentication mechanism supported by the EES, so as to determine the target authentication mechanism #2. Alternatively, the H-ECS obtains, based on the identifier of the home network and the authentication capability #3 of the network, the authentication mechanism supported by the home network, to determine the target authentication mechanism #2. Alternatively, the H-ECS may determine the target authentication mechanism #2 based on the authentication mechanism supported by the EEC, the network in which the EES is located, the authentication capability #3 of the network, and the authentication mechanism supported by the EES. Alternatively, the H-ECS may determine the target authentication mechanism #2 based on the authentication mechanism supported by the UE, the network in which the EES is located, the authentication capability #3 of the network, and the authentication mechanism supported by the EES. Alternatively, the H-ECS may determine the target authentication mechanism #2 based on the authentication mechanism supported by both the UE and the EEC, the network in which the EES is located, the authentication capability #3 of the network, and the authentication mechanism supported by the EES. The H-ECS may obtain, from the EES in advance, the authentication mechanism supported by the EES. Alternatively, the authentication mechanism supported by the EES is preconfigured for the H-ECS. This is not limited. In addition, if a plurality of authentication mechanisms can be used as the target authentication mechanism #2, the H-ECS may also determine the target authentication mechanism #2 based on priority information. For a specific implementation, refer to the foregoing related descriptions in S1102. Details are not described again.

Alternatively, if the H-ECS and the EES are in a same network, for example, the home network of the UE, and the EES supports an authentication mechanism supported by the H-ECS, the H-ECS may use the target authentication mechanism #1 as the target authentication mechanism #2.

Alternatively, the target authentication mechanism #2 may be obtained by the H-ECS from the EES. For example, the H-ECS may provide an identifier of the home network for the EES, so that the EES determines whether a network in which the H-ECS is located is the home network of the UE. The EES also stores the authentication capability #3 of the network. In this way, the EES may determine the target authentication mechanism #2 by using logic similar to that of the H-ECS, and return the target authentication mechanism #2 to the H-ECS. For a specific implementation, refer to the foregoing related descriptions of the H-ECS. Details are not described again.

S1107: The UE sends a request message #2 to the EES, and correspondingly, the EES receives the request message #2 from the UE.

The request message #2 may be used to provide the EES with information about the home network. For a specific implementation, refer to the foregoing related descriptions of the request message #1. Details are not described again.

S1108: The EES determines the target authentication mechanism #2.

For a specific implementation in which the EES determines the target authentication mechanism #2, refer to the foregoing related descriptions in S1106. Details are not described again.

S1109: The EES sends an initiation message #2 to the UE, and correspondingly, the UE receives the initiation message #2 from the EES.

The initiation message #2 may be used to trigger an authentication procedure between the EEC and the H-ECS, for example, carry the target authentication mechanism #2. For a specific implementation, refer to the foregoing related descriptions of the initiation message #1. Details are not described again.

It may be understood that S1107 to S1109 are optional. If the service provisioning response message #1 does not provide the target authentication mechanism #2, the EEC triggers execution of S1107 to S1109. If the service provisioning response message #1 provides the target authentication mechanism #2, the EEC skips S1107 to S1109 and triggers execution of S1110.

S1110: The EEC and the EES establish a secure connection based on the target authentication mechanism #2.

If the target authentication mechanism #2 is AKMA, the secure connection may be an AKMA-based secure connection. For a specific implementation, refer to the foregoing related descriptions of AKMA. Details are not described again. Alternatively, if the target authentication mechanism #2 is GBA, the secure connection may be a GBA-based secure connection. For a specific implementation, refer to the foregoing related descriptions of GBA. Details are not described again. Certainly, the target authentication mechanism #2 may alternatively be any other possible mechanism, and the secure connection may alternatively be any other possible connection. This is not limited.

In conclusion, the H-ECS/EES pre-stores the authentication mechanism supported by the network, so that the EEC and the H-ECS/EES can complete authentication with support of the network, and establish the secure connection. In this way, a problem that authentication cannot be completed between the EEC and the H-ECS/EES without support of the network can be resolved, thereby ensuring communication security between the EEC and the H-ECS/EES.

Case 2: The communication method relates to interaction between the UE/EEC, the V-ECS, and the EES. A network on which the UE currently camps is not a home network, that is, the network on which the UE currently camps is a visited network.

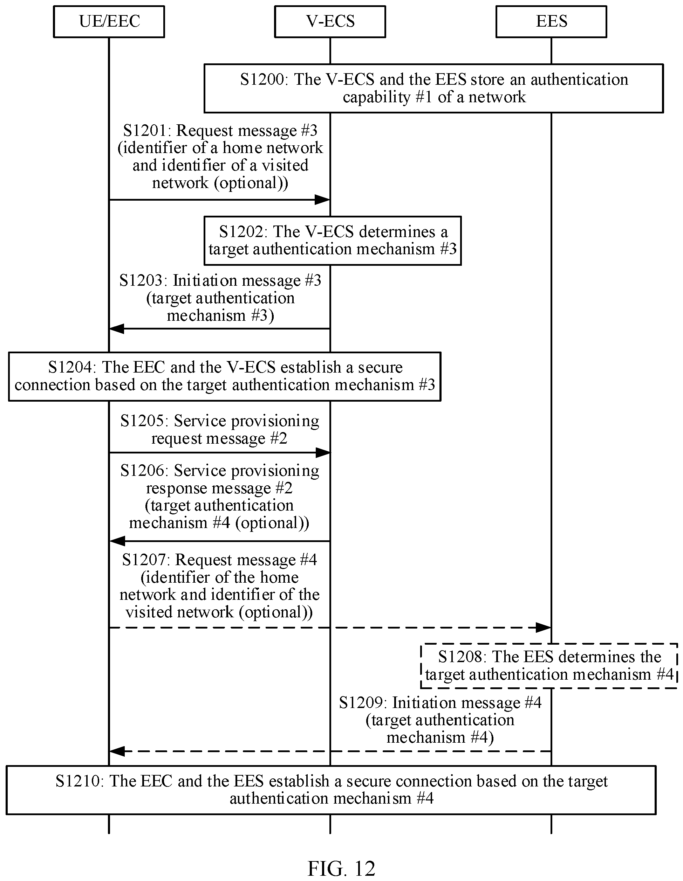

As shown in FIG. 12, a procedure of the method is specifically as follows:

S1200: The V-ECS and the EES store an authentication capability #3 of a network.

For a specific implementation of the authentication capability #3 of the network, refer to the foregoing related descriptions in S1100. Details are not described again.

S1201: The UE sends a request message #3 to the V-ECS, and correspondingly, the V-ECS receives the request message #3 from the UE.

The request message #3 may be an HTTP request message, or may be any other possible message. This is not limited. The request message #3 may be carried in a PDU session of the UE. The request message #3 may be used to provide the V-ECS with information about a home network of the terminal, for example, including an identifier of the home network. Optionally, because a network on which the UE currently camps is a visited network, the request message #3 may be further used to provide the V-ECS with information about the visited network, for example, including an identifier of the visited network. Alternatively, the request message #3 may directly provide an identifier of a network in which the V-ECS is located, that is, the identifier of the visited network.

Optionally, the request message #3 may be further used to provide the V-ECS with an authentication mechanism supported by the UE, an authentication mechanism supported by the EEC, or an authentication mechanism supported by both the UE and the EEC. For a specific implementation, refer to the foregoing related descriptions of S1101. Details are not described again. In addition, if there are a plurality of authentication mechanisms supported by the UE, a plurality of authentication mechanisms supported by the EEC, or a plurality of authentication mechanisms supported by both the UE and the EEC, the request message #3 may further include priority information of the plurality of authentication mechanisms.

S1202: The V-ECS determines a target authentication mechanism #3.

For a definition of the target authentication mechanism #3, refer to the foregoing related descriptions of the target authentication mechanism #3. Details are not described again.

The H-ECS may determine the target authentication mechanism #3 based on the identifier of the home network in the request message #3, the identifier of the visited network in the request message #3 (optional), the authentication capability #3 of the network, and the authentication mechanism supported by the V-ECS. The V-ECS determines that a locally stored network identifier (the identifier of the visited network) is different from the identifier of the home network, and the locally stored network identifier is the same as the identifier of the visited network (optional), to determine that the network in which the V-ECS is located is the visited network of the UE, thereby determining to use an authentication mechanism supported by both the home network and the visited network in the authentication capability #3 of the network, so as to determine the target authentication mechanism #3. Alternatively, the V-ECS obtains, from the authentication capability #3 of the network based on the identifier of the home network and the identifier of the visited network, an authentication mechanism supported by both the home network and the visited network. For example, the V-ECS may determine the target authentication mechanism #3 based on the authentication mechanism supported by both the home network and the visited network and the authentication mechanism supported by the V-ECS. Alternatively, the V-ECS may determine the target authentication mechanism #3 based on the authentication mechanism supported by the EEC, an authentication mechanism supported by both the home network and the visited network, and the authentication mechanism supported by the V-ECS. Alternatively, the H-ECS may determine the target authentication mechanism #3 based on the authentication mechanism supported by the UE, an authentication mechanism supported by both the home network and the visited network, and the authentication mechanism supported by the H-ECS. Alternatively, the V-ECS may determine the target authentication mechanism #3 based on an authentication mechanism supported by both the UE and the EEC, an authentication mechanism supported by both the home network and the visited network, and the authentication mechanism supported by the H-ECS. In addition, if a plurality of authentication mechanisms can be used as the target authentication mechanism #3, the V-ECS may also determine the target authentication mechanism #3 based on priority information. A specific implementation is similar to that in S1102. For details, reference may be made for understanding. The details are not described again.

S1203: The V-ECS sends an initiation message #3 to the UE, and correspondingly, the UE receives the initiation message #3 from the V-ECS.

The initiation message #3 may be used to trigger an authentication procedure between the EEC and the V-ECS, for example, carry the target authentication mechanism #3. For a specific implementation, refer to the foregoing related descriptions of the initiation message #1. Details are not described again.

S1204: The EEC and the V-ECS establish a secure connection based on the target authentication mechanism determined by the V-ECS.

If the target authentication mechanism #3 is AKMA, the secure connection may be an AKMA-based secure connection. For a specific implementation, refer to the foregoing related descriptions of AKMA. Details are not described again. Alternatively, if the target authentication mechanism #3 is GBA, the secure connection may be a GBA-based secure connection. For a specific implementation, refer to the foregoing related descriptions of GBA. Details are not described again. Certainly, the target authentication mechanism #3 may alternatively be any other possible mechanism, and the secure connection may alternatively be any other possible connection. This is not limited.

S1205: The EEC sends a service provisioning request message #2 to the V-ECS, and correspondingly, the V-ECS receives the service provisioning request message #2 from the EEC.

The service provisioning request message #2 may be a message protected based on the secure connection. In addition, for a specific principle of S1205, refer to the foregoing related descriptions of "2. Architecture for enabling an edge application" and "Implementation 3". Details are not described again.

S1206: The V-ECS sends a service provisioning response message #2 to the EEC, and correspondingly, the EEC receives the service provisioning response message #2 from the V-ECS.

The service provisioning response message #2 may be a message protected based on the secure connection. The service provisioning response message #2 may be used to provide EES information of an available EES, for example, carry the EES information. The available EES may be an EES located in the visited network and near the UE. The EES information may include an EES address. In addition, the EES information may further include another parameter. For a specific implementation, refer to the foregoing related descriptions of "2. Architecture for enabling an edge application" and "Implementation 3". Details are not described again.

Optionally, the EES information may further include a target authentication mechanism #4. For a definition of the target authentication mechanism #4, refer to the foregoing related descriptions of the target authentication mechanism #4. Details are not described again.

The target authentication mechanism #4 may be determined by the V-ECS. The V-ECS may determine the target authentication mechanism #4 based on the identifier of the home network in the request message #3, the identifier of the visited network, that is, the network in which the EES is located, in the request message #3 (optional), the authentication capability #3 of the network, and the authentication mechanism supported by the EES. Specifically, the V-ECS may determine, based on that the identifier of the network in which the EES is located is different from the identifier of the home network in the request message #3 and the identifier of the network in which the EES is located is the same as the identifier of the visited network in the request message #3 (optional), that the network in which the EES is located is the visited network of the UE, to determine to use an authentication mechanism supported by both the home network and the visited network in the authentication capability #3 of the network and the authentication mechanism supported by the EES, so as to determine the target authentication mechanism #4. Alternatively, the V-ECS obtains, based on the identifier of the home network, the identifier of the visited network, and the authentication capability #4 of the network, an authentication mechanism supported by both the home network and the visited network, and determines the target authentication mechanism #4 based on the authentication mechanism supported by the EES. Alternatively, the V-ECS may determine the target authentication mechanism #4 based on the authentication mechanism supported by the EEC, the network in which the EES is located, the authentication capability #3 of the network, and the authentication mechanism supported by the EES. Alternatively, the V-ECS may determine the target authentication mechanism #4 based on the authentication mechanism supported by the UE, the network in which the EES is located, the authentication capability #3 of the network, and the authentication mechanism supported by the EES. Alternatively, the V-ECS may determine the target authentication mechanism #4 based on an authentication mechanism supported by both the UE and the EEC, the network in which the EES is located, the authentication capability #3 of the network, and the authentication mechanism supported by the EES. The V-ECS may obtain, from the EES in advance, the authentication mechanism supported by the EES. Alternatively, the authentication mechanism supported by the EES is preconfigured for the V-ECS. This is not limited. In addition, in a process in which the V-ECS determines the target authentication mechanism #4, if a plurality of authentication mechanisms can be used as the target authentication mechanism #4, the V-ECS may further determine the target authentication mechanism #4 based on priority information. A specific implementation is similar to that in S1102. For details, reference may be made for understanding. The details are not described again.

Alternatively, if the V-ECS and the EES are in a same network, for example, the visited network of the UE, and the EES supports the authentication mechanism supported by the V-ECS, the V-ECS may use the target authentication mechanism #3 as the target authentication mechanism #4.

Alternatively, the target authentication mechanism #4 may be obtained by the V-ECS from the EES. For example, the V-ECS may provide the EES with the identifier of the home network and the identifier of the visited network (optional), so that the EES determines whether the network in which the V-ECS is located is the home network of the UE. The EES also stores the authentication capability #3 of the network. In this way, the EES may determine the target authentication mechanism #4 by using logic similar to that of the V-ECS, and return the target authentication mechanism #2 to the V-ECS. For a specific implementation, refer to the related descriptions of the V-ECS. Details are not described again.

S1207: The UE sends a request message #4 to the EES, and correspondingly, the EES receives the request message #4 from the UE.

The request message #4 may be used to provide the EES with information about the home network and information about the visited network (optional). For a specific implementation, refer to the foregoing related descriptions of the request message #3. Details are not described again.

S1208: The EES determines the target authentication mechanism #4.

For a specific implementation in which the EES determines the target authentication mechanism #4, refer to the foregoing related descriptions in S1206. Details are not described again.

S1209: The EES sends an initiation message #4 to the UE, and correspondingly, the UE receives the initiation message #4 from the EES.

The initiation message #4 may be used to trigger an authentication procedure between the EEC and the V-ECS, for example, carry the target authentication mechanism #4. For a specific implementation, refer to the foregoing related descriptions of the initiation message #1. Details are not described again.

It may be understood that S1207 to S1209 are optional. If the service provisioning response message #2 does not provide the target authentication mechanism #4, the EEC triggers execution of S1207 to S1209. If the service provisioning response message #2 provides the target authentication mechanism #4, the EEC skips S1207 to S1209, and triggers execution of S1210.

S1210: The EEC and the EES establish a secure connection based on the target authentication mechanism #4.

If the target authentication mechanism #4 is AKMA, the secure connection may be an AKMA-based secure connection. For a specific implementation, refer to the foregoing related descriptions of AKMA. Details are not described again. Alternatively, if the target authentication mechanism #4 is GBA, the secure connection may be a GBA-based secure connection. For a specific implementation, refer to the foregoing related descriptions of GBA. Details are not described again. Certainly, the target authentication mechanism #4 may alternatively be any other possible mechanism, and the secure connection may alternatively be any other possible connection. This is not limited.

In conclusion, the V-ECS/EES pre-stores the authentication mechanism supported by the network, so that the EEC and the V-ECS/EES can complete authentication with support of the network, and establish the secure connection. In this way, a problem that authentication cannot be completed between the EEC and the V-ECS/EES without support of the network can be resolved, thereby ensuring communication security between the EEC and the V-ECS/EES.

Case 3: The communication method relates to interaction between the UE/EEC, the H-ECS, the V-ECS, and the EES. A network on which the UE currently camps is not a home network, that is, the network on which the UE currently camps is a visited network.

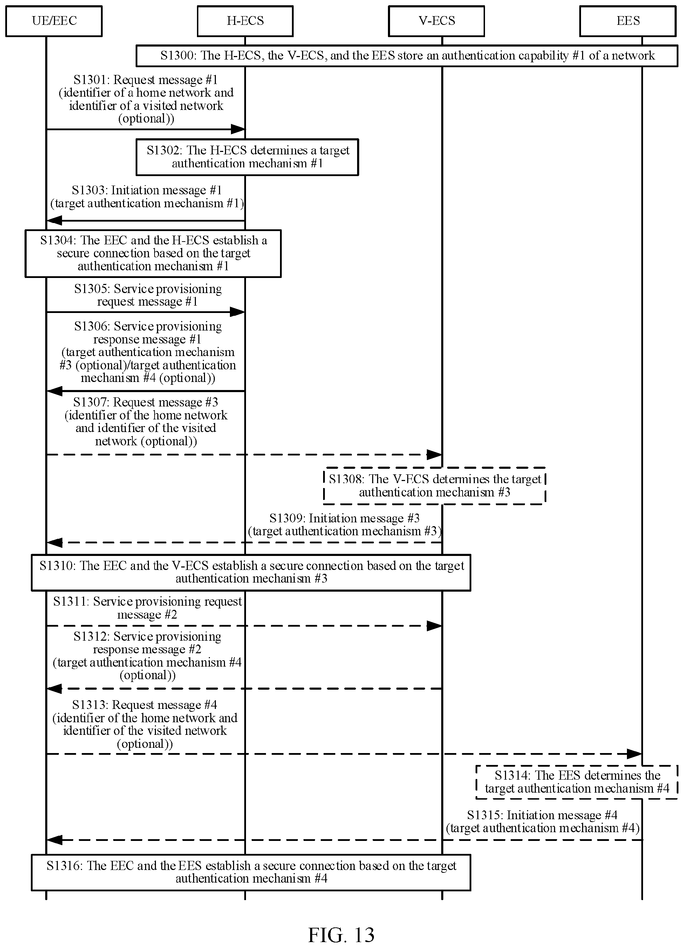

As shown in FIG. 13, a procedure of the method is specifically as follows:

S1300: The H-ECS, the V-ECS, and the EES store an authentication capability #3 of a network.

For a specific implementation of the authentication capability #3 of the network, refer to the foregoing related descriptions in S1100. Details are not described again.

S1301: The UE sends a request message #1 to the H-ECS, and correspondingly, the H-ECS receives the request message #1 from the UE.

S1302: The H-ECS determines a target authentication mechanism #1.

For a specific implementation of S1301, refer to the foregoing related descriptions in S1101. For a specific implementation of S1302, refer to the foregoing related descriptions in S1102. Details are not described again.

S1303: The H-ECS sends an initiation message #1 to the UE, and correspondingly, the UE receives the initiation message #1 from the H-ECS.

The initiation message #1 may be used to trigger an authentication procedure between the EEC and the H-ECS, for example, carry the target authentication mechanism #1. For a specific implementation, refer to the foregoing related descriptions of the initiation message #1. Details are not described again.

S1304: The EEC and the H-ECS establish a secure connection based on the target authentication mechanism #1.

S1305: The EEC sends a service provisioning request message #1 to the H-ECS, and correspondingly, the H-ECS receives the service provisioning request message #1 from the EEC.

For specific implementations of S1304 and S1305, refer to the foregoing related descriptions in S906 and S907. Details are not described again.

S1306: The H-ECS sends a service provisioning response message #1 to the EEC, and correspondingly, the EEC receives the service provisioning response message #1 from the H-ECS.

The service provisioning response message #1 may be a message protected based on the secure connection. The service provisioning response message #1 may be used to provide EES information of an available EES, for example, carry the EES information. The available EES may be an EES located in the home network and near the UE. The EES information may include an EES address. Optionally, the EES information may further include a target authentication mechanism #4. The target authentication mechanism #4 may be determined by the H-ECS or determined by the EES at a request of the H-ECS. For a specific implementation, refer to the foregoing related descriptions of the target authentication mechanism #4. Details are not described again. Alternatively, the service provisioning response message #1 may be used to provide V-ECS information of an available V-ECS, for example, carry the V-ECS information. The V-ECS information may include a V-ECS address. Optionally, the V-ECS information may further include a target authentication mechanism #3. The target authentication mechanism #3 may be determined by the H-ECS or determined by the V-ECS at a request of the H-ECS. For a specific implementation, refer to the foregoing related descriptions of the target authentication mechanism #3. Details are not described again.

For the EEC, if the service provisioning response message #1 provides the V-ECS information, the EEC triggers execution of S1307 to S1316. If the service provisioning response message #1 provides the EES information, the EEC skips S1307 to S1312, and triggers execution of S1313 to S1316.

In addition, for a specific principle of S1306, refer to the foregoing related descriptions of "2. Architecture for enabling an edge application" and "Implementation 3". Details are not described again.

S1307: The UE sends a request message #3 to the V-ECS, and correspondingly, the V-ECS receives the request message #3 from the UE.

S1308: The V-ECS determines a target authentication mechanism #3.

S1309: The V-ECS sends an initiation message #3 to the UE, and correspondingly, the UE receives the initiation message #3 from the V-ECS.

S1310: The EEC and the V-ECS establish a secure connection based on the target authentication mechanism #3.

S1311: The EEC sends a service provisioning request message #2 to the V-ECS, and correspondingly, the V-ECS receives the service provisioning request message #2 from the EEC.

S1312: The V-ECS sends a service provisioning response message #2 to the EEC, and correspondingly, the EEC receives the service provisioning response message #2 from the V-ECS.

S1313: The UE sends a request message #4 to the EES, and correspondingly, the EES receives the request message #4 from the UE.

S1314: The EES determines a target authentication mechanism #4.

S1315: The EES sends an initiation message #4 to the UE, and correspondingly, the UE receives the initiation message #4 from the EES.

S1316: The EEC and the EES establish a secure connection based on the target authentication mechanism #4.

For specific implementations of S1307 to S1316, refer to the foregoing related descriptions of S1201 to S1210. Details are not described again.

In conclusion, the V-ECS/EES pre-stores the authentication mechanism supported by the network, so that the EEC and the H-ECS/V-ECS/EES can complete authentication with support of the network, and establish the secure connection. In this way, a problem that authentication cannot be completed between the EEC and the H-ECS/V-ECS/EES without support of the network can be resolved, thereby ensuring communication security between the EEC and the H-ECS/V-ECS/EES.

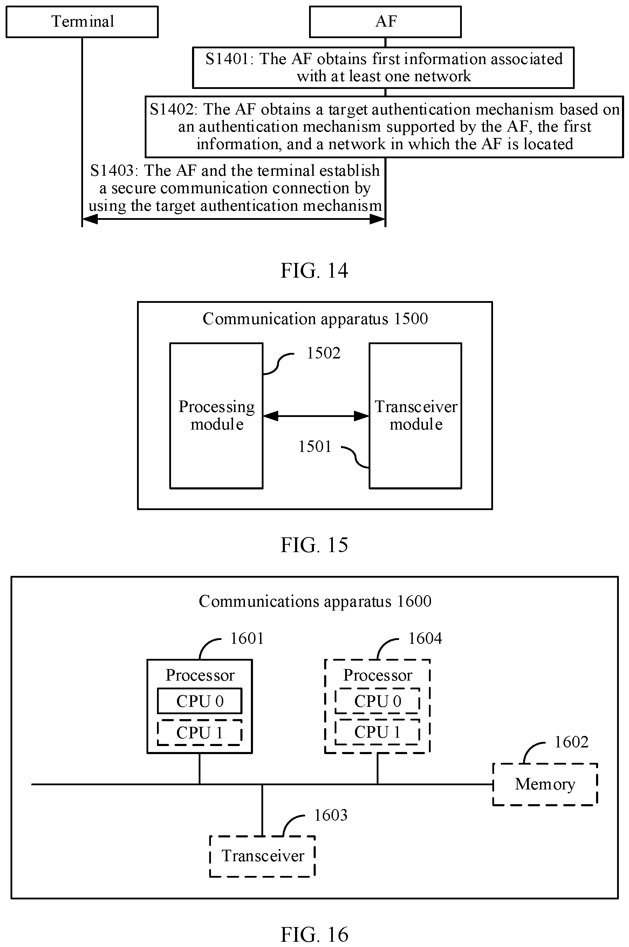

The foregoing describes, in detail with reference to FIG. 11 to FIG. 13, a procedure of the communication method provided in embodiments of this application in a specific scenario. The following describes, with reference to FIG. 14, an overall procedure of the communication method provided in embodiments of this application. The communication method mainly relates to interaction between a terminal and an AF. The terminal may be understood as the UE in Embodiment 2, and the AF may be understood as the H-ECS/V-ECS/EES in Embodiment 2.

Specifically, a procedure of the communication method is as follows:

S1401: The AF obtains first information associated with at least one network.

The at least one network may include a network in which the AF is located. The first information (the authentication capability #3 of the network) may include an authentication mechanism supported by each of the at least one network. The authentication mechanism supported by each of the at least one network includes at least one of the following: a client certificate, an AKMA mechanism, a GBA mechanism, or any other possible authentication mechanism. This is not limited. Optionally, the first information further includes an identifier of each of the at least one network, so that the terminal can subsequently identify each network.

In addition, for a specific implementation of S1401, refer to the foregoing related descriptions in S1101, S1201, or S1301. Details are not described again.

S1402: The AF obtains a target authentication mechanism based on an authentication mechanism supported by the AF, the first information, and the network in which the AF is located.

In a possible manner, the network in which the AF is located is a home network of the terminal. In this case, the AF may obtain the target authentication mechanism based on the authentication mechanism supported by the AF and an authentication mechanism supported by the home network of the terminal. The target authentication mechanism is an authentication mechanism supported by both the AF and the home network of the terminal. The AF may receive an identifier of the home network of the terminal. That is, the AF obtains the target authentication mechanism based on the authentication mechanism supported by the AF, the first information, and the identifier of the home network of the terminal. For example, the AF may receive a first message from the terminal, to determine, based on the first message, that the network in which the AF is located is the home network of the terminal, so as to further determine the target authentication mechanism. The AF is an H-ECS, and the first message may be the foregoing request message #1. Alternatively, the AF is an EES associated with the H-ECS, and the first message may be the foregoing request message #2. For example, the first message may be carried in a PDU session of the terminal. The first message may include the identifier of the home network of the terminal. That is, the AF may determine, by using the home network of the terminal as a reference, a relationship between the network in which the AF is located and the home network of the terminal, to determine that the network in which the AF is located is the home network of the terminal. Certainly, the AF may also know, by default, that the AF is located in the home network of the terminal. For example, the AF allows only a user of a non-roaming terminal to access the AF. Alternatively, the first message may directly provide an identifier of the network in which the AF is located, and the AF obtains the target authentication mechanism based on the authentication mechanism supported by the AF, the first information, and the identifier of the network in which the AF is located (that is, the network in which the AF is located). This is not limited.

Optionally, a client (for example, the foregoing EEC) is deployed on the terminal, and the AF may further obtain the target authentication mechanism based on an authentication mechanism supported by the client, the authentication mechanism supported by the AF, and the authentication mechanism supported by the home network of the terminal. The target authentication mechanism is an authentication mechanism supported by all of the client, the AF, and the home network of the terminal. Based on this, the first message may further include the authentication mechanism supported by the client. It may be understood that because the client is usually deployed on the terminal, the AF may obtain, from the terminal, the authentication mechanism supported by the client. Certainly, the AF may also be configured, by default, with the authentication mechanism supported by the client. This is not limited. In this case, there are a plurality of authentication mechanisms supported by the client, and the first message may further include priority information of the plurality of authentication mechanisms supported by the client, so that the AF can determine a target authentication mechanism with a high priority. Alternatively, the AF may be locally configured with priority information of a plurality of authentication mechanisms. When a plurality of available authentication mechanisms are determined, the AF may determine an authentication mechanism with a highest priority as the target authentication mechanism. Alternatively, when an authentication mechanism is determined, whether the authentication mechanism meets the foregoing condition (and the authentication mechanism supported by all of the client, the AF, and the network) is determined in descending order of configured priorities of authentication mechanisms. If the authentication mechanism meets the foregoing condition (and the authentication mechanism supported by all of the client, the AF, and the network), the authentication mechanism is used as the target authentication mechanism, and determining is stopped. This is not specifically limited.

Further, the AF may obtain the target authentication mechanism based on an authentication mechanism supported by the terminal and the client, the authentication mechanism supported by the AF, and the authentication mechanism supported by the home network of the terminal. The target authentication mechanism is an authentication mechanism supported by all of the terminal, the client, the AF, and the home network of the terminal. Based on this, the first message may further include the authentication mechanism supported by the terminal and the client. In this case, there are a plurality of authentication mechanisms supported by the terminal and the client, and the first message may further include priority information of the plurality of authentication mechanisms supported by the terminal and the client, so that the AF can determine a target authentication mechanism with a high priority.

In addition, the AF is the H-ECS. For a specific implementation of this manner, refer to the foregoing related descriptions in S1101 and S1102 or S1301 and S1302. Alternatively, the AF is the EES associated with the H-ECS. For a specific implementation of this manner, refer to the foregoing related descriptions in S1107 and S1108. Details are not described again.

Alternatively, in another possible design solution, the network in which the AF is located is a network on which the terminal currently camps, and the network on which the terminal currently camps is not the home network of the terminal, that is, the network in which the AF is located is a visited network of the terminal. In this case, the AF may obtain the target authentication mechanism based on the authentication mechanism supported by the AF, an authentication mechanism supported by the network on which the terminal currently camps, and the authentication mechanism supported by the home network of the terminal. The target authentication mechanism may be an authentication mechanism supported by all of the AF, the network on which the terminal currently camps, and the home network of the terminal. The AF may receive an identifier of the home network of the terminal. That is, the AF obtains the target authentication mechanism based on the authentication mechanism supported by the AF, the first information, and the identifier of the home network of the terminal. For example, the AF receives a first message from the terminal, to determine, based on the first message, that the network in which the AF is located is the network on which the terminal currently camps, and the network on which the terminal currently camps is not the home network of the terminal, so as to further determine the target authentication mechanism. The AF is a V-ECS, and the first message may be the foregoing request message #3. Alternatively, the AF is an EES associated with the V-ECS, and the first message may be the foregoing request message #4. For example, the first message is carried in a PDU session of the terminal. The first message may include the identifier of the home network of the terminal. That is, the AF may determine, by using the home network of the terminal as a reference, a relationship between the network in which the AF is located and the home network of the terminal, to determine that the network in which the AF is located is not the home network of the terminal. Optionally, the first message may further include an identifier of the network on which the terminal currently camps, so that the AF learns that the AF is located in the network on which the terminal currently camps. That is, in this case, the AF may obtain the target authentication mechanism based on the authentication mechanism supported by the AF, the first information, the identifier of the home network of the terminal, and the identifier of the network in which the AF is located. The network in which the AF is located is not the home network of the terminal. Certainly, the AF may also know, by default, that the AF is located in the network on which the terminal currently camps. For example, the AF allows only a user of a non-roaming terminal to access the AF. Alternatively, the first message may directly provide the identifier of the network in which the AF is located. This is not limited.

Optionally, a client (for example, the foregoing EEC) is deployed on the terminal. The AF may obtain the target authentication mechanism based on an authentication mechanism supported by the client, the authentication mechanism supported by the AF, the authentication mechanism supported by the network on which the terminal currently camps, and the authentication mechanism supported by the home network of the terminal. The target authentication mechanism is an authentication mechanism supported by all of the client, the AF, the home network of the terminal, and the network on which the terminal currently camps. Based on this, the first message may further include the authentication mechanism supported by the client. In this case, there are a plurality of authentication mechanisms supported by the client, and the first message may further include priority information of the plurality of authentication mechanisms supported by the client.

Further, the AF may obtain the target authentication mechanism based on an authentication mechanism supported by the terminal and the client, the authentication mechanism supported by the AF, the authentication mechanism supported by the network on which the terminal currently camps, and the authentication mechanism supported by the home network of the terminal. The target authentication mechanism is an authentication mechanism supported by all of the terminal, the client, the AF, the home network of the terminal, and the network on which the terminal currently camps. Based on this, the first message may further include the authentication mechanism supported by the terminal and the client. In this case, there are a plurality of authentication mechanisms supported by the terminal and the client, and the first message may further include priority information of the plurality of authentication mechanisms supported by the terminal and the client.

In addition, the AF is the V-ECS. For a specific implementation of this manner, refer to the foregoing related descriptions in S1201 and S1202 or S1307 and S1308. Alternatively, the AF is the EES associated with the V-ECS. For a specific implementation of this manner, refer to the foregoing related descriptions in S1207 and S1208 or S1313 and S1314. Details are not described again.

S1403: The AF and the terminal establish a secure communication connection by using the target authentication mechanism.

The AF is the H-ECS. For a specific implementation of S1403, refer to the foregoing related descriptions in S1104 or S1304. Alternatively, the AF is the EES associated with the H-ECS. For a specific implementation of S1403, refer to the foregoing related descriptions in S1110. Details are not described again. Alternatively, the AF is the V-ECS. For a specific implementation of S1403, refer to the foregoing related descriptions in S1204 or S1310. Alternatively, the AF is the EES associated with the V-ECS. For a specific implementation of S1403, refer to the foregoing related descriptions in S1210 or S1316. Details are not described again.

In conclusion, the AF may obtain, based on the authentication mechanism supported by the AF, the authentication mechanism supported by each of the at least one network, and the network in which the AF is located, an authentication mechanism supported by both the AF and the network in which the AF is located, to determine the target authentication mechanism, so that the AF and the terminal can complete authentication with support of the network and establish the secure connection, thereby ensuring communication security.

With reference to the foregoing embodiments, in some possible design solutions, the AF is a first ECS, and the first ECS may further receive a second message from the terminal. The first ECS is an H-ECS, and the second message may be the foregoing service provisioning request message #1. Alternatively, the first ECS is a V-ECS, and the second message may be the foregoing service provisioning request message #2. The second message may be used to discover an EES associated with the first ECS, for example, an available EES managed by the first ECS. For details, refer to the related descriptions in S1306. The details are not described again.

Specifically, in a possible scenario, the first ECS is an H-ECS, and the first ECS may discover an available EES in a home network. Alternatively, the first ECS is a V-ECS, and the first ECS may discover an available EES in a visited network. In this case, the first ECS may send a third message to the terminal. The third message may be used to respond to the first message. For example, the first ECS is the H-ECS, and the third message may be the foregoing service provisioning response message #1. Alternatively, the first ECS is the V-ECS, and the third message may be the foregoing service provisioning response message #2. The third information may include a second target authentication mechanism, and the second target authentication mechanism is an authentication mechanism associated with the EES, for example, the foregoing target authentication mechanism #2 or target authentication mechanism #4. That is, when an available EES is discovered, the first ECS may provide the terminal with an authentication mechanism associated with the EES, so that the terminal can complete authentication with the EES by using the authentication mechanism and establish a secure connection, thereby ensuring communication security.

The first ECS may independently determine the second target authentication mechanism, or obtain the second target authentication mechanism from the EES. Descriptions are separately provided below.

For example, the first ECS may obtain the second target authentication mechanism based on an authentication mechanism supported by the EES, the first information, and a network in which the EES is located. That is, when knowing in advance the authentication mechanism supported by the EES, the first ECS may independently determine the second target authentication mechanism, and does not need to interact with the EES, to reduce a quantity of times of unnecessary interaction, thereby reducing overheads. Specifically, the network in which the EES is located is a network on which the terminal currently camps, and a home network of the terminal is not the network on which the terminal currently camps. The first ECS may obtain the second target authentication mechanism based on the authentication mechanism supported by the EES, the authentication mechanism supported by the network on which the terminal currently camps, and the authentication mechanism supported by the home network of the terminal. The second target authentication mechanism is an authentication mechanism supported by all of the EES, the network on which the terminal currently camps, and the home network of the terminal.

Further, a client (the foregoing EEC) is deployed on the terminal, and the first ECS may obtain the second target authentication mechanism based on an authentication mechanism supported by the client, the authentication mechanism supported by the EES, the authentication mechanism supported by the network on which the terminal currently camps, and the authentication mechanism supported by the home network of the terminal. The second target authentication mechanism is an authentication mechanism supported by all of the client, the EES, the network on which the terminal currently camps, and the home network of the terminal.

Further, the first ECS may obtain the second target authentication mechanism based on an authentication mechanism supported by the terminal and the client, the authentication mechanism supported by the EES, the authentication mechanism supported by the network on which the terminal currently camps, and the authentication mechanism supported by the home network of the terminal. The second target authentication mechanism is an authentication mechanism supported by all of the terminal, the client, the EES, the network on which the terminal currently camps, and the home network of the terminal.

It may be understood that, in a process of determining the second target authentication mechanism, if the first ECS determines that a plurality of authentication mechanisms can be used as the second target authentication mechanism, the first ECS may determine the second target authentication mechanism based on priority information of the plurality of authentication mechanisms, for example, use an authentication mechanism with a highest priority as the second target authentication mechanism. In addition, a principle of determining the second target authentication mechanism by the first ECS is similar to that of determining the target authentication mechanism #2 by the EES. For details, refer to S1108 for understanding. The details are not described again.

For another example, the first ECS obtains the second target authentication mechanism from the EES. That is, the first ECS does not need to independently determine the second target authentication mechanism, to reduce overheads of the first ECS and improve running efficiency. For example, the first ECS may send an identifier of the home network of the terminal to the EES, so that the EES can determine the second target authentication mechanism based on the authentication mechanism supported by the home network of the terminal. Certainly, if the EES knows the home network of the terminal by default, the first ECS may not provide the identifier of the home network of the terminal. This is not limited.

In addition, for a specific implementation of this scenario, refer to the foregoing related descriptions in S1108 and S1208. Details are not described again.

In another possible scenario, the first ECS is an H-ECS, and the first ECS may discover an available EES in the visited network. In this case, the first ECS may send a third message to the terminal. The third message may be used to respond to the first message. For example, the third message may be the foregoing service provisioning response message #2. The third information may include a second target authentication mechanism, and the second target authentication mechanism is an authentication mechanism associated with the EES, for example, the foregoing target authentication mechanism #4.

The first ECS may also independently determine the second target authentication mechanism. For a specific implementation, refer to the foregoing related descriptions. Details are not described again. Alternatively, the first ECS may obtain the second target authentication mechanism from the second ECS. The second ECS may be an ECS associated with the EES, for example, a V-ECS. That is, when the EES is located in the visited network, the EES may be associated with the V-ECS in the visited network. In this way, the H-ECS in the home network may obtain, through the V-ECS in the visited network, the second target authentication mechanism associated with the EES. For example, the first ECS may send an identifier of the home network of the terminal to the second ECS, and the first ECS may further send an identifier of the network on which the terminal currently camps to the second ECS, so that the second ECS independently determines the second target authentication mechanism based on these identifiers, or obtains the second target authentication mechanism from the EES. For a specific implementation, refer to the foregoing related descriptions in S1206. Details are not described again.

In another possible scenario, the first ECS is an H-ECS, and the H-ECS cannot discover an available EES in the visited network. In this case, the first ECS may send a third message to the terminal. The third message may be used to respond to the first message, for example, the foregoing service provisioning response message #1. The third message may include a first target authentication mechanism. The first target authentication mechanism may be an authentication mechanism associated with the second ECS, and the second ECS is associated with the first ECS and the EES. For example, the second ECS is a V-ECS, and the first target authentication mechanism is the foregoing target authentication mechanism #3. That is, when the EES is not discovered, the first ECS may provide the terminal with the authentication mechanism associated with the second ECS, so that the terminal can complete authentication with the second ECS by using the authentication mechanism, thereby discovering the EES through the second ECS.

The first ECS may independently determine the first target authentication mechanism, or obtain the first target authentication mechanism from the second ECS. Descriptions are separately provided below.

For example, the first ECS may obtain the first target authentication mechanism based on the authentication mechanism supported by the second ECS, the first information, and the network in which the second ECS is located. That is, when knowing in advance the authentication mechanism supported by the second ECS, the first ECS may independently determine the first target authentication mechanism, and does not need to interact with the second ECS, to reduce a quantity of times of unnecessary interaction, thereby reducing overheads. Specifically, a network in which the first ECS is located is a home network of the terminal, the network in which the second ECS is located is a network on which the terminal currently camps, and the home network of the terminal is different from the network on which the terminal currently camps. The first ECS may obtain the first target authentication mechanism based on the authentication mechanism supported by the second ECS, the authentication mechanism supported by the network on which the terminal currently camps, and the authentication mechanism supported by the home network of the terminal. The first target authentication mechanism is an authentication mechanism supported by all of the second ECS, the network on which the terminal currently camps, and the home network of the terminal.

Further, a client (the foregoing EEC) is deployed on the terminal, and the first ECS may obtain the first target authentication mechanism based on an authentication mechanism supported by the client, the authentication mechanism supported by the second ECS, the authentication mechanism supported by the network on which the terminal currently camps, and the authentication mechanism supported by the home network of the terminal. The first target authentication mechanism is an authentication mechanism supported by all of the client, the second ECS, the network on which the terminal currently camps, and the home network of the terminal.

Further, the first ECS may obtain the first target authentication mechanism based on an authentication mechanism supported by the terminal and the client, the authentication mechanism supported by the second ECS, the authentication mechanism supported by the network on which the terminal currently camps, and the authentication mechanism supported by the home network of the terminal. The first target authentication mechanism is an authentication mechanism supported by all of the terminal, the client, the second ECS, the network on which the terminal currently camps, and the home network of the terminal.

It may be understood that, in a process of determining the first target authentication mechanism, if the first ECS determines that a plurality of authentication mechanisms can be used as the first target authentication mechanism, the first ECS may determine the first target authentication mechanism based on priority information of the plurality of authentication mechanisms, for example, use an authentication mechanism with a highest priority as the first target authentication mechanism. In addition, a principle of determining the first target authentication mechanism by the first ECS is similar to that of determining the target authentication mechanism #3 by the V-ECS. For details, refer to S1202 for understanding. The details are not described again.

For another example, the first ECS obtains a first target authentication mechanism from the second ECS. That is, the first ECS does not need to independently determine the first target authentication mechanism, to reduce overheads of the first ECS and improve running efficiency. The first ECS may further send an identifier of the home network of the terminal to the second ECS, so that the second ECS can determine the first target authentication mechanism based on the authentication mechanism supported by the home network of the terminal. Certainly, if the second ECS knows the home network of the terminal by default, the first ECS may not provide the identifier of the home network of the terminal. This is not limited. Optionally, the first ECS may further send an identifier of the network on which the terminal currently camps to the second ECS, so that the second ECS can determine the first target authentication mechanism based on an authentication mechanism supported by both the network on which the terminal currently camps and the home network of the terminal. Certainly, if the second ECS knows, by default, that the network on which the terminal currently camps is not the home network of the terminal, the first ECS may not provide the identifier of the network on which the terminal currently camps. This is not limited.

**In** addition, for a specific implementation of this scenario, refer to the foregoing related descriptions in S1202. Details are not described again.

The communication methods according to embodiments of this application are described above in detail with reference to FIG. 6 to FIG. 14. Communication apparatuses configured to perform the communication methods according to embodiments of this application are described below in detail with reference to FIG. 15 and FIG. 16.

For example, FIG. 15 is a diagram 1 of a structure of a communication apparatus according to an embodiment of this application. As shown in FIG. 15, the communication apparatus 1500 mainly includes a transceiver module 1501 and a processing module 1502. For ease of description, FIG. 15 shows only main components of the communication apparatus. The apparatus may further include another component, for example, a storage module. This is not limited in this application.

In some embodiments, the communication apparatus 1500 may be applied to the communication system shown in FIG. 5, and perform a function of the foregoing terminal/UE.

The transceiver module 1501 may be configured to perform a function of receiving and sending a message by the terminal, for example, a function in step S1002. The processing module 1502 may perform a function of the terminal other than receiving and sending a message, for example, a function in step S1003.

For example, the transceiver module 1501 is configured to obtain first information associated with at least one network; and the processing module 1502 is configured to obtain a target authentication mechanism based on an authentication mechanism supported by the communication apparatus 1500, the first information, and a network in which an application function AF is located, to establish a secure communication connection to the AF by using the target authentication mechanism. The first information includes an authentication mechanism supported by each of the at least one network, and the at least one network includes the network in which the AF is located.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a terminal, may be a chip (system) or another part or component that may be disposed in a terminal, or may be an apparatus including a terminal. This is not limited in this application.

In addition, for technical effects of the communication apparatus 1500, refer to the technical effects of the foregoing communication method. Details are not described herein again.

In some other embodiments, the communication apparatus 1500 may be applied to the communication system shown in FIG. 5, and perform a function of the first network element such as a UDM network element/AMF network element.

The transceiver module 1501 may be configured to perform a function of receiving and sending a message by the first network element, for example, receiving and sending functions in step S1002. The processing module 1502 may be configured to perform a function of the first network element other than receiving and sending a message, for example, a processing function in step as S1001.

For example, the processing module 1502 is configured to obtain an authentication mechanism supported by each of at least one network; and the transceiver module 1501 is configured to send, to a terminal, first information associated with the at least one network. The first information includes the authentication mechanism supported by each of the at least one network.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the foregoing communication method. Details are not described herein again.

In some other embodiments, the communication apparatus 1500 may be applied to the communication system shown in FIG. 5, and perform a function of the AF such as an H-ECS/V-ECS/EES.

The transceiver module 1501 may be configured to perform a function of receiving and sending a message by the AF, for example, a function in step S1401. The processing module 1502 may perform a function of the AF other than receiving and sending a message, for example, functions in steps S1402 and S1403.

For example, the transceiver module 1501 is configured to obtain first information associated with at least one network; and the processing module 1502 is configured to obtain a target authentication mechanism based on an authentication mechanism supported by the communication apparatus 1500, the first information, and a network in which the communication apparatus 1500 is located, to establish a secure communication connection to a terminal by using the target authentication mechanism. The first information includes an authentication mechanism supported by each of the at least one network, and the at least one network includes the network in which the communication apparatus 1500 is located.

Optionally, the transceiver module 1501 may include a sending module and a receiving module. The sending module is configured to implement a sending function of the communication apparatus 1500, and the receiving module is configured to implement a receiving function of the communication apparatus 1500.

Optionally, the communication apparatus 1500 may further include a storage module. The storage module stores a program or instructions. When the processing module 1502 executes the program or the instructions, the communication apparatus 1500 is enabled to perform the foregoing communication method.

It should be noted that the communication apparatus 1500 may be a network device, may be a chip (system) or another part or component that may be disposed in a network device, or may be an apparatus including a network device. This is not limited in this application.

In addition, for technical effects of the communication apparatus 1500, refer to the technical effects of the foregoing communication method. Details are not described herein again.

For example, FIG. 16 is a diagram 2 of a structure of a communication apparatus according to an embodiment of this application. For example, the communication apparatus may be a terminal, or may be a chip (system) or another part or component that may be disposed in a terminal. As shown in FIG. 16, the communication apparatus 1600 may include a processor 1601. Optionally, the communication apparatus 1600 may further include a memory 1602 and/or a transceiver 1603. The processor 1601 is coupled to the memory 1602 and the transceiver 1603, for example, may be connected through a communication bus.

The following describes components of the communication apparatus 1600 in detail with reference to FIG. 16.

The processor 1601 is a control center of the communication apparatus 1600, and may be one processor, or may be a collective name of a plurality of processing elements. For example, the processor 1601 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1601 may perform various functions of the communication apparatus 1600 by running or executing a software program stored in the memory 1602 and invoking data stored in the memory 1602, for example, perform the communication methods shown in FIG. 6 to FIG. 14.

During specific implementation, in an embodiment, the processor 1601 may include one or more CPUs, for example, a CPU 0 and a CPU 1 shown in FIG. 16.

During specific implementation, in an embodiment, the communication apparatus 1600 may alternatively include a plurality of processors, for example, the processor 1601 and a processor 1604 shown in FIG. 16. Each of the processors may be a single-core processor (single-CPU), or may be a multi-core processor (multi-CPU). The processor herein may be one or more devices, circuits, and/or processing cores configured to process data (for example, computer program instructions).

The memory 1602 is configured to store the software program for executing the solutions of this application, and the processor 1601 controls the execution. For a specific implementation, refer to the foregoing method embodiments. Details are not described herein again.

Optionally, the memory 1602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1602 may be integrated with the processor 1601, or may exist independently, and is coupled to the processor 1601 through an interface circuit (not shown in FIG. 16) of the communication apparatus 1600. This is not specifically limited in this embodiment of this application.

The transceiver 1603 is configured to communicate with another communication apparatus. For example, the communication apparatus 1600 is a terminal, and the transceiver 1603 may be configured to communicate with a network device or communicate with another terminal device. For another example, the communication apparatus 1600 is a network device, and the transceiver 1603 may be configured to communicate with a terminal or communicate with another network device.

Optionally, the transceiver 1603 may include a receiver and a transmitter (not separately shown in FIG. 16). The receiver is configured to implement a receiving function, and the transmitter is configured to implement a sending function.

Optionally, the transceiver 1603 may be integrated with the processor 1601, or may exist independently, and is coupled to the processor 1601 through an interface circuit (not shown in FIG. 16) of the communication apparatus 1600. This is not specifically limited in this embodiment of this application.

It should be noted that the structure of the communication apparatus 1600 shown in FIG. 16 does not constitute a limitation on the communication apparatus. An actual communication apparatus may include more or fewer components than those shown in the figure, combine some components, or have different component arrangements.

In addition, for technical effects of the communication apparatus 1600, refer to the technical effects of the communication method in the foregoing method embodiments. Details are not described herein again.

An embodiment of this application provides a communication system. The communication system includes one or more terminals shown in FIG. 6 to FIG. 8.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a communication apparatus, first information associated with at least one network, wherein the first information comprises an authentication mechanism supported by each of the at least one network;
obtaining, by the communication apparatus, a target authentication mechanism based on an authentication mechanism supported by the communication apparatus, the first information, and a network in which an application function AF is located, wherein the at least one network comprises the network in which the AF is located; and
establishing, by the communication apparatus, a secure communication connection to the AF by using the target authentication mechanism.

2. The method according to claim 1, wherein the communication apparatus is a terminal or a chip of a terminal.

3. The method according to claim 2, wherein the network in which the AF is located is a home network of the communication apparatus, and the obtaining, by the communication apparatus, a target authentication mechanism based on an authentication mechanism supported by the communication apparatus, the first information, and a network in which an AF is located comprises:
obtaining, by the communication apparatus, the target authentication mechanism based on the authentication mechanism supported by the communication apparatus and an authentication mechanism supported by the network in which the AF is located.

4. The method according to claim 3, wherein the obtaining, by the communication apparatus, the target authentication mechanism based on the authentication mechanism supported by the communication apparatus and an authentication mechanism supported by the network in which the AF is located comprises:
determining, by the communication apparatus, a candidate authentication mechanism based on the authentication mechanism supported by the communication apparatus and the authentication mechanism supported by the network in which the AF is located, wherein the candidate authentication mechanism is an authentication mechanism supported by both the communication apparatus and the home network of the communication apparatus;
sending, by the communication apparatus, the candidate authentication mechanism to the AF; and
receiving, by the communication apparatus, the target authentication mechanism from the AF, wherein the candidate authentication mechanism comprises the target authentication mechanism, and the target authentication mechanism is an authentication mechanism supported by all of the AF, the communication apparatus, and the home network of the communication apparatus.

5. The method according to claim 4, wherein a client is deployed in the communication apparatus, and the determining, by the communication apparatus, a candidate authentication mechanism based on the authentication mechanism supported by the communication apparatus and the authentication mechanism supported by the network in which the AF is located comprises:
sending, by a non-access stratum NAS of the communication apparatus, a first authentication mechanism to the client, wherein the first authentication mechanism comprises an authentication mechanism supported by both the communication apparatus and the home network of the communication apparatus; and
determining, by the client, the candidate authentication mechanism based on the first authentication mechanism.

6. The method according to claim 5, wherein the determining, by the client, the candidate authentication mechanism based on the first authentication mechanism comprises:
determining, by the client, the candidate authentication mechanism based on an authentication mechanism supported by the client and the first authentication mechanism, wherein the candidate authentication mechanism is an authentication mechanism supported by all of the client, the communication apparatus, and the home network of the communication apparatus.

7. The method according to claim 3, wherein the obtaining, by the communication apparatus, the target authentication mechanism based on the authentication mechanism supported by the communication apparatus and an authentication mechanism supported by the network in which the AF is located comprises:
determining, by the communication apparatus, the target authentication mechanism based on an authentication mechanism supported by the AF, the authentication mechanism supported by the communication apparatus, and the authentication mechanism supported by the network in which the AF is located, wherein the target authentication mechanism is an authentication mechanism supported by all of the AF, the communication apparatus, and the home network of the communication apparatus.

8. The method according to claim 7, wherein the determining, by the communication apparatus, the target authentication mechanism based on an authentication mechanism supported by the AF, the authentication mechanism supported by the communication apparatus, and the authentication mechanism supported by the network in which the AF is located comprises:
sending, by a NAS of the communication apparatus, a first authentication mechanism to a client, wherein the first authentication mechanism comprises an authentication mechanism supported by both the communication apparatus and the home network of the communication apparatus; and
determining, by the client, the target authentication mechanism based on the authentication mechanism supported by the AF and the first authentication mechanism.

9. The method according to claim 8, wherein the determining, by the client, the target authentication mechanism based on the authentication mechanism supported by the AF and the first authentication mechanism comprises:
determining, by the client, the target authentication mechanism based on an authentication mechanism supported by the client, the authentication mechanism supported by the AF, and the first authentication mechanism, wherein the target authentication mechanism is an authentication mechanism supported by all of the client, the AF, the communication apparatus, and the home network of the communication apparatus.

10. The method according to claim 2, wherein the network in which the AF is located is a network on which the communication apparatus currently camps, the network on which the communication apparatus currently camps is not a home network of the communication apparatus, the at least one network further comprises the home network of the communication apparatus, and the obtaining, by the communication apparatus, a target authentication mechanism based on an authentication mechanism supported by the communication apparatus, the first information, and a network in which an AF is located comprises:
obtaining, by the communication apparatus, the target authentication mechanism based on the authentication mechanism supported by the communication apparatus, an authentication mechanism supported by the network in which the AF is located, and an authentication mechanism supported by the home network of the communication apparatus.

11. The method according to claim 10, wherein the obtaining, by the communication apparatus, the target authentication mechanism based on the authentication mechanism supported by the communication apparatus, an authentication mechanism supported by the network in which the AF is located, and an authentication mechanism supported by the home network of the communication apparatus comprises:
determining, by the communication apparatus, a candidate authentication mechanism based on the authentication mechanism supported by the communication apparatus, the authentication mechanism supported by the network in which the AF is located, and the authentication mechanism supported by the home network of the communication apparatus, wherein the candidate authentication mechanism is an authentication mechanism supported by all of the communication apparatus, the network on which the communication apparatus currently camps, and the home network of the communication apparatus;
sending, by the communication apparatus, the candidate authentication mechanism to the AF; and
receiving, by the communication apparatus, the target authentication mechanism from the AF, wherein the candidate authentication mechanism comprises the target authentication mechanism, and the target authentication mechanism is an authentication mechanism supported by all of the AF, the communication apparatus, the network on which the communication apparatus currently camps, and the home network of the communication apparatus.

12. The method according to claim 11, wherein the determining, by the communication apparatus, a candidate authentication mechanism based on the authentication mechanism supported by the communication apparatus, the authentication mechanism supported by the network in which the AF is located, and the authentication mechanism supported by the home network of the communication apparatus comprises:
sending, by a NAS of the communication apparatus, a first authentication mechanism to a client, wherein the first authentication mechanism comprises an authentication mechanism supported by all of the communication apparatus, the network on which the communication apparatus currently camps, and the home network of the communication apparatus; and
determining, by the client, the candidate authentication mechanism based on the first authentication mechanism.

13. The method according to claim 12, wherein the determining, by the client, the candidate authentication mechanism based on the first authentication mechanism comprises:
determining, by the client, the candidate authentication mechanism based on an authentication mechanism supported by the client and the first authentication mechanism, wherein the candidate authentication mechanism is an authentication mechanism supported by all of the client, the communication apparatus, the network on which the communication apparatus currently camps, and the home network of the communication apparatus.

14. The method according to claim 10, wherein the obtaining, by the communication apparatus, the target authentication mechanism based on the authentication mechanism supported by the communication apparatus, an authentication mechanism supported by the network in which the AF is located, and an authentication mechanism supported by the home network of the communication apparatus comprises:
determining, by the communication apparatus, the target authentication mechanism based on an authentication mechanism supported by the AF, the authentication mechanism supported by the communication apparatus, the authentication mechanism supported by the network in which the AF is located, and the authentication mechanism supported by the home network of the communication apparatus, wherein the target authentication mechanism is an authentication mechanism supported by all of the AF, the communication apparatus, the network on which the communication apparatus currently camps, and the home network of the communication apparatus.

15. The method according to claim 14, wherein the determining, by the communication apparatus, the target authentication mechanism based on an authentication mechanism supported by the AF, the authentication mechanism supported by the communication apparatus, the authentication mechanism supported by the network in which the AF is located, and the authentication mechanism supported by the home network of the communication apparatus comprises:
sending, by a NAS of the communication apparatus, a first authentication mechanism to a client, wherein the first authentication mechanism comprises an authentication mechanism supported by all of the communication apparatus, the network on which the communication apparatus currently camps, and the home network of the communication apparatus; and
determining, by the client, the target authentication mechanism based on the authentication mechanism supported by the AF and the first authentication mechanism.

16. The method according to claim 15, wherein the determining, by the client, the target authentication mechanism based on the authentication mechanism supported by the AF and the first authentication mechanism comprises:
determining, by the client, the target authentication mechanism based on an authentication mechanism supported by the client, the authentication mechanism supported by the AF, and the first authentication mechanism, wherein the target authentication mechanism is an authentication mechanism supported by all of the client, the AF, the communication apparatus, the network on which the communication apparatus currently camps, and the home network of the communication apparatus.

17. The method according to claim 7 or 14, wherein the method further comprises:
obtaining, by the communication apparatus, the authentication mechanism supported by the AF.

18. The method according to claim 17, wherein the AF is an edge enabler server EES, and the obtaining, by the communication apparatus, the authentication mechanism supported by the AF comprises:
receiving, by the communication apparatus, second information from an edge configuration server ECS, wherein the ECS is associated with the EES, and the second information comprises an authentication mechanism supported by the EES.

19. The method according to claim 17, wherein the AF is an ECS in the home network of the communication apparatus, and the obtaining, by the communication apparatus, the authentication mechanism supported by the AF comprises:
receiving, by the communication apparatus, second information from the home network of the communication apparatus, wherein the second information comprises an authentication mechanism supported by the ECS in the home network of the communication apparatus.

20. The method according to claim 17, wherein the AF is an ECS in the network on which the communication apparatus currently camps, the network on which the communication apparatus currently camps is not the home network of the communication apparatus, and the obtaining, by the communication apparatus, the authentication mechanism supported by the AF comprises:
receiving, by the communication apparatus, second information from an ECS in the home network of the communication apparatus, wherein the second information comprises an authentication mechanism supported by the ECS in the network on which the communication apparatus currently camps, and the ECS in the network on which the communication apparatus currently camps is associated with the ECS in the home network of the communication apparatus.

21. The method according to any one of claims 2 to 20, wherein the obtaining, by a communication apparatus, first information associated with at least one network comprises:
sending, by the communication apparatus, a registration request to a first network, wherein the registration request is used by the communication apparatus to request to register with the first network; and
receiving, by the communication apparatus, the first information from the first network in a process of registering with the first network or after registering with the first network.

22. The method according to claim 21, wherein when the first network and the network in which the AF is located are different networks, the at least one network further comprises the first network.

23. The method according to claim 21 or 22, wherein the receiving, by the communication apparatus, the first information from the first network in a process of registering with the first network or after registering with the first network comprises:
in the process of registering with the first network, receiving, by the communication apparatus from the first network, a registration accept message that carries the first information; or
after registering with the first network, receiving, by the communication apparatus from the first network, at least one of the following messages that carry the first information: a user equipment UE configuration update command message, a downlink non-access stratum transport message, or a session management message.

24. The method according to any one of claims 2 to 23, wherein the at least one network comprises a network on which the communication apparatus currently camps, and the network on which the communication apparatus currently camps is the home network of the communication apparatus; or the at least one network comprises a network on which the communication apparatus currently camps, and the network on which the communication apparatus currently camps is not the home network of the communication apparatus.

25. The method according to claim 24, wherein when the network on which the communication apparatus currently camps is not the home network of the communication apparatus, the at least one network further comprises the home network of the communication apparatus.

26. The method according to any one of claims 1 to 25, wherein the first information comprises an identifier of each of the at least one network.

27. The method according to any one of claims 2 to 26, wherein the obtaining, by a communication apparatus, first information associated with at least one network comprises:
obtaining, by the communication apparatus, the first information from an access network device.

28. The method according to any one of claims 1 to 27, wherein the authentication mechanism supported by each of the at least one network comprises one or more of the following: an authentication and key management for applications AKMA mechanism or a generic bootstrapping architecture GBA mechanism.

29. A communication method, wherein the method comprises:
obtaining, by a first network element, an authentication mechanism supported by each of at least one network; and
sending, by the first network element to a terminal, first information associated with the at least one network, wherein the first information comprises the authentication mechanism supported by each of the at least one network.

30. The method according to claim 29, wherein the obtaining, by a first network element, an authentication mechanism supported by each of at least one network comprises:
obtaining, by the first network element, an authentication mechanism supported by a network on which the terminal currently camps, wherein the terminal is associated with the first network element, and the at least one network comprises the network on which the terminal currently camps.

31. The method according to claim 30, wherein the network on which the terminal currently camps is a home network of the terminal; and the obtaining, by the first network element, an authentication mechanism supported by a network on which the terminal currently camps comprises: obtaining, by the first network element, an authentication mechanism supported by the home network of the terminal.

32. The method according to claim 30, wherein the network on which the terminal currently camps is not a home network of the terminal, and the at least one network further comprises the home network of the terminal; and the obtaining, by the first network element, an authentication mechanism supported by a network on which the terminal currently camps comprises: obtaining, by the first network element, an authentication mechanism supported by both the network on which the terminal currently camps and the home network of the terminal.

33. The method according to any one of claims 29 to 32, wherein the method further comprises:
obtaining, by the first network element, the authentication mechanism supported by the home network of the terminal.

34. The method according to claim 29, wherein the first network element is a data management network element; and the obtaining, by a first network element, an authentication mechanism supported by each of at least one network comprises: obtaining, by the data management network element from subscription data of the terminal, the authentication mechanism supported by each of the at least one network.

35. The method according to claim 34, wherein the obtaining, by the data management network element from subscription data of the terminal, the authentication mechanism supported by each of the at least one network comprises:
receiving, by the data management network element, a subscription data obtaining request message from a mobility management network element, and obtaining, from the subscription data of the terminal based on the subscription data obtaining request message, the authentication mechanism supported by each of the at least one network; and
correspondingly, the sending, by the first network element to a terminal, first information associated with the at least one network comprises:
sending, by the data management network element, a subscription data obtaining response message to the mobility management network element corresponding to the terminal, wherein the subscription data obtaining response message comprises the first information.

36. The method according to claim 35, wherein the subscription data obtaining request message comprises an identifier of a network on which the terminal currently camps; and the receiving, by the data management network element, a subscription data obtaining request message from a mobility management network element, and obtaining, from the subscription data of the terminal based on the subscription data obtaining request message, the authentication mechanism supported by each of the at least one network comprises:
obtaining, by the data management network element from the subscription data of the terminal based on the identifier of the network on which the terminal currently camps, the authentication mechanism supported by each of the at least one network.

37. The method according to claim 29, wherein the first network element is a mobility management network element, and the obtaining, by a first network element, an authentication mechanism supported by each of at least one network comprises:
obtaining, by the mobility management network element from a data management network element, the authentication mechanism supported by each of the at least one network.

38. The method according to claim 37, wherein the obtaining, by the mobility management network element from a data management network element, the authentication mechanism supported by each of the at least one network comprises:
receiving, by the mobility management network element, a registration request message from the terminal, and obtaining subscription data of the terminal from the data management network element based on the registration request message, wherein the registration request message is used by the terminal to request to register with a network in which the mobility management network element is located, and the subscription data of the terminal comprises the authentication mechanism supported by each of the at least one network.

39. The method according to claim 38, wherein the sending, by the first network element to a terminal, first information associated with the at least one network comprises:
in a process in which the terminal registers with the network in which the mobility management network element is located, sending, by the mobility management network element to the terminal, a registration accept message that carries the first information.

40. A communication method, wherein the method comprises:
obtaining, by an application function AF, first information associated with at least one network, wherein the first information comprises an authentication mechanism supported by each of the at least one network, and the at least one network comprises a network in which the AF is located;
obtaining, by the AF, a target authentication mechanism based on an authentication mechanism supported by the AF, the first information, and the network in which the AF is located; and
establishing, by the AF, a secure communication connection to a terminal by using the target authentication mechanism.

41. The method according to claim 40, wherein the network in which the AF is located is a home network of the terminal; and the obtaining, by the AF, a target authentication mechanism based on an authentication mechanism supported by the AF, the first information, and the network in which the AF is located comprises:
obtaining, by the AF, the target authentication mechanism based on the authentication mechanism supported by the AF and an authentication mechanism supported by the home network of the terminal, wherein the target authentication mechanism is an authentication mechanism supported by both the AF and the home network of the terminal.

42. The method according to claim 41, wherein the method further comprises:
receiving, by the AF, an identifier of the home network of the terminal.

43. The method according to claim 41, wherein the method further comprises:
receiving, by the AF, a first message from the terminal, wherein the first message comprises an identifier of the home network of the terminal; and
determining, by the AF based on the first message, that the network in which the AF is located is the home network of the terminal.

44. The method according to claim 43, wherein the first message further comprises an identifier of the network in which the AF is located.

45. The method according to claim 41, wherein a client is deployed on the terminal, and the obtaining, by the AF, the target authentication mechanism based on the authentication mechanism supported by the AF and an authentication mechanism supported by the home network of the terminal comprises:
obtaining, by the AF, the target authentication mechanism based on an authentication mechanism supported by the client, the authentication mechanism supported by the AF, and the authentication mechanism supported by the home network of the terminal, wherein the target authentication mechanism is an authentication mechanism supported by all of the client, the AF, and the home network of the terminal.

46. The method according to claim 45, wherein the method further comprises:
receiving, by the AF, a first message from the terminal, wherein the first message comprises the authentication mechanism supported by the client.

47. The method according to claim 46, wherein there are a plurality of authentication mechanisms supported by the client, and the first message comprises priority information of the plurality of authentication mechanisms supported by the client.

48. The method according to claim 46 or 47, wherein the first message is carried in a protocol data unit PDU session of the terminal.

49. The method according to claim 45, wherein the obtaining, by the AF, the target authentication mechanism based on an authentication mechanism supported by the client, the authentication mechanism supported by the AF, and the authentication mechanism supported by the home network of the terminal comprises:
obtaining, by the AF, the target authentication mechanism based on an authentication mechanism supported by the terminal and the client, the authentication mechanism supported by the AF, and the authentication mechanism supported by the home network of the terminal, wherein the target authentication mechanism is an authentication mechanism supported by all of the terminal, the client, the AF, and the home network of the terminal.

50. The method according to claim 49, wherein the method further comprises:
receiving, by the AF, a first message from the terminal, wherein the first message comprises the authentication mechanism supported by the terminal and the client.

51. The method according to claim 50, wherein there are a plurality of authentication mechanisms supported by the terminal and the client, and the first message comprises priority information of the plurality of authentication mechanisms supported by the terminal and the client.

52. The method according to claim 50 or 51, wherein the first message is carried in a PDU session of the terminal.

53. The method according to claim 40, wherein the network in which the AF is located is a network on which the terminal currently camps, the network on which the terminal currently camps is not a home network of the terminal, and the obtaining, by the AF, a target authentication mechanism based on an authentication mechanism supported by the AF, the first information, and the network in which the AF is located comprises:
obtaining, by the AF, the target authentication mechanism based on the authentication mechanism supported by the AF, an authentication mechanism supported by the network on which the terminal currently camps, and an authentication mechanism supported by the home network of the terminal, wherein the target authentication mechanism is an authentication mechanism supported by all of the AF, the network on which the terminal currently camps, and the home network of the terminal.

54. The method according to claim 53, wherein the method further comprises:
receiving, by the AF, an identifier of the home network of the terminal.

55. The method according to claim 53, wherein the method further comprises:
receiving, by the AF, an identifier of the home network of the terminal and an identifier of the network in which the AF is located.

56. The method according to claim 53, wherein the method further comprises:
receiving, by the AF, a first message from the terminal, wherein the first message comprises an identifier of the home network of the terminal; and
determining, by the AF based on the first message, that the network in which the AF is located is the network on which the terminal currently camps, and the network on which the terminal currently camps is not the home network of the terminal.

57. The method according to claim 56, wherein the first message comprises an identifier of the network on which the terminal currently camps.

58. The method according to claim 56 or 57, wherein the first message is carried in a PDU session of the terminal.

59. The method according to any one of claims 56 to 58, wherein the first message further comprises an identifier of the network in which the AF is located.

60. The method according to claim 53, wherein a client is deployed on the terminal, and the obtaining, by the AF, the target authentication mechanism based on the authentication mechanism supported by the AF, an authentication mechanism supported by the network on which the terminal currently camps, and an authentication mechanism supported by the home network of the terminal comprises:
obtaining, by the AF, the target authentication mechanism based on an authentication mechanism supported by the client, the authentication mechanism supported by the AF, the authentication mechanism supported by the network on which the terminal currently camps, and the authentication mechanism supported by the home network of the terminal, wherein the target authentication mechanism is an authentication mechanism supported by all of the client, the AF, the home network of the terminal, and the network on which the terminal currently camps.

61. The method according to claim 60, wherein the method further comprises:
receiving, by the AF, a first message from the terminal, wherein the first message comprises the authentication mechanism supported by the client.

62. The method according to claim 61, wherein there are a plurality of authentication mechanisms supported by the client, and the first message comprises priority information of the plurality of authentication mechanisms supported by the client.

63. The method according to any one of claims 60 to 62, wherein the first message is carried in a PDU session of the terminal.

64. The method according to claim 53, wherein a client is deployed on the terminal, and the obtaining, by the AF, the target authentication mechanism based on the authentication mechanism supported by the AF, an authentication mechanism supported by the network on which the terminal currently camps, and an authentication mechanism supported by the home network of the terminal comprises:
obtaining, by the AF, the target authentication mechanism based on an authentication mechanism supported by the terminal and the client, the authentication mechanism supported by the AF, the authentication mechanism supported by the network on which the terminal currently camps, and the authentication mechanism supported by the home network of the terminal, wherein the target authentication mechanism is an authentication mechanism supported by all of the terminal, the client, the AF, the home network of the terminal, and the network on which the terminal currently camps.

65. The method according to claim 64, wherein the method further comprises:
receiving, by the AF, a first message from the terminal, wherein the first message comprises the authentication mechanism supported by the terminal and the client.

66. The method according to claim 65, wherein there are a plurality of authentication mechanisms supported by the terminal and the client, and the first message comprises priority information of the plurality of authentication mechanisms supported by the terminal and the client.

67. The method according to claim 65 or 66, wherein the first message is carried in a PDU session of the terminal.

68. The method according to claim 40, wherein the AF is a first ECS, and the method further comprises:
receiving, by the first ECS, a second message from the terminal, wherein the second message is used to discover an EES associated with the first ECS; and
when the first ECS does not discover an available EES, sending, by the first ECS, a third message to the terminal, wherein the third message comprises a first target authentication mechanism, the first target authentication mechanism is an authentication mechanism associated with a second ECS, and the second ECS is separately associated with the first ECS and the EES.

69. The method according to claim 68, wherein the method further comprises:
obtaining, by the first ECS, the first target authentication mechanism based on an authentication mechanism supported by the second ECS, the first information, and a network in which the second ECS is located.

70. The method according to claim 69, wherein a network in which the first ECS is located is a home network of the terminal, the network in which the second ECS is located is a network on which the terminal currently camps, and the home network of the terminal is different from the network on which the terminal currently camps; and the obtaining, by the first ECS, the first target authentication mechanism based on an authentication mechanism supported by the second ECS, the first information, and a network in which the second ECS is located comprises: obtaining, by the first ECS, the first target authentication mechanism based on the authentication mechanism supported by the second ECS, an authentication mechanism supported by the network on which the terminal currently camps, and an authentication mechanism supported by the home network of the terminal, wherein the first target authentication mechanism is an authentication mechanism supported by all of the second ECS, the network on which the terminal currently camps, and the home network of the terminal.

71. The method according to claim 70, wherein a client is deployed on the terminal, and the obtaining, by the first ECS, the first target authentication mechanism based on the authentication mechanism supported by the second ECS, an authentication mechanism supported by the network on which the terminal currently camps, and an authentication mechanism supported by the home network of the terminal comprises:
obtaining, by the first ECS, the first target authentication mechanism based on an authentication mechanism supported by the client, the authentication mechanism supported by the second ECS, the authentication mechanism supported by the network on which the terminal currently resides, and the authentication mechanism supported by the home network of the terminal, wherein the first target authentication mechanism is an authentication mechanism supported by all of the client, the second ECS, the network on which the terminal currently resides, and the home network of the terminal.

72. The method according to claim 71, wherein the obtaining, by the first ECS, the first target authentication mechanism based on an authentication mechanism supported by the client, the authentication mechanism supported by the second ECS, the authentication mechanism supported by the network on which the terminal currently resides, and the authentication mechanism supported by the home network of the terminal comprises:
obtaining, by the first ECS, the first target authentication mechanism based on an authentication mechanism supported by the terminal and the client, the authentication mechanism supported by the second ECS, the authentication mechanism supported by the network on which the terminal currently camps, and the authentication mechanism supported by the home network of the terminal, wherein the first target authentication mechanism is an authentication mechanism supported by all of the terminal, the client, the second ECS, the network on which the terminal currently camps, and the home network of the terminal.

73. The method according to claim 68, wherein the method further comprises:
obtaining, by the first ECS, the first target authentication mechanism from the second ECS.

74. The method according to claim 73, wherein before the obtaining, by the first ECS, the first target authentication mechanism from the second ECS, the method further comprises:
sending, by the first ECS, an identifier of the home network of the terminal to the second ECS.

75. The method according to claim 73 or 74, wherein the method further comprises:
sending, by the first ECS, an identifier of the network on which the terminal currently camps to the second ECS.

76. The method according to claim 40, wherein the AF is a first ECS, and the method further comprises:
receiving, by the first ECS, a second message from the terminal, wherein the second message is used to discover an EES associated with the first ECS; and
when the first ECS discovers an available EES, sending, by the first ECS, a third message to the terminal, wherein the third information comprises a second target authentication mechanism, and the second target authentication mechanism is an authentication mechanism associated with the EES.

77. The method according to claim 76, wherein the method further comprises:
obtaining, by the first ECS, the second target authentication mechanism based on an authentication mechanism supported by the EES, the first information, and a network in which the EES is located.

78. The method according to claim 77, wherein the network in which the EES is located is a network on which the terminal currently camps, and a home network of the terminal is not the network on which the terminal currently camps; and the obtaining, by the first ECS, the second target authentication mechanism based on an authentication mechanism supported by the EES, the first information, and a network on which the EES is located comprises:
obtaining, by the first ECS, the second target authentication mechanism based on the authentication mechanism supported by the EES, an authentication mechanism supported by the network on which the terminal currently camps, and an authentication mechanism supported by the home network of the terminal, wherein the second target authentication mechanism is an authentication mechanism supported by all of the EES, the network on which the terminal currently camps, and the home network of the terminal.

79. The method according to claim 78, wherein a client is deployed on the terminal, and the obtaining, by the first ECS, the second target authentication mechanism based on the authentication mechanism supported by the EES, an authentication mechanism supported by the network on which the terminal currently camps, and an authentication mechanism supported by the home network of the terminal comprises:
obtaining, by the first ECS, the second target authentication mechanism based on an authentication mechanism supported by the client, the authentication mechanism supported by the EES, the authentication mechanism supported by the network on which the terminal currently camps, and the authentication mechanism supported by the home network of the terminal, wherein the second target authentication mechanism is an authentication mechanism supported by all of the client, the EES, the network on which the terminal currently camps, and the home network of the terminal.

80. The method according to claim 79, wherein the obtaining, by the first ECS, the second target authentication mechanism based on an authentication mechanism supported by the client, the authentication mechanism supported by the EES, the authentication mechanism supported by the network on which the terminal currently camps, and the authentication mechanism supported by the home network of the terminal comprises:
obtaining, by the first ECS, the second target authentication mechanism based on an authentication mechanism supported by the terminal and the client, the authentication mechanism supported by the EES, the authentication mechanism supported by the network on which the terminal currently camps, and the authentication mechanism supported by the home network of the terminal, wherein the second target authentication mechanism is an authentication mechanism supported by all of the terminal, the client, the EES, the network on which the terminal currently camps, and the home network of the terminal.

81. The method according to claim 76, wherein the method further comprises:
obtaining, by the first ECS, the second target authentication mechanism from a second ECS, wherein the second ECS is an ECS associated with the EES.

82. The method according to claim 81, wherein a network in which the first ECS is located is a home network of the terminal, a network in which the second ECS is located is a network on which the terminal currently camps, and the home network of the terminal is not the network on which the terminal currently camps.

83. The method according to claim 81 or 82, wherein before the obtaining, by the first ECS, the second target authentication mechanism from a second ECS, the method further comprises:
sending, by the first ECS, an identifier of the home network of the terminal to the second ECS.

84. The method according to any one of claims 81 to 83, wherein the method further comprises:
sending, by the first ECS, an identifier of the network on which the terminal currently camps to the second ECS.

85. The method according to claim 76, wherein the method further comprises:
obtaining, by the first ECS, the second target authentication mechanism from the EES.

86. The method according to claim 85, wherein a network in which the first ECS is located and a network in which the EES is located are a home network of the terminal; or a network in which the first ECS is located and a network in which the EES is located are a network on which the terminal currently camps, and the home network of the terminal is not the network on which the terminal currently camps.

87. The method according to claim 85 or 86, wherein before the obtaining, by the first ECS, the second target authentication mechanism from the EES, the method further comprises:
sending, by the first ECS, an identifier of the home network of the terminal to the EES.

88. The method according to any one of claims 85 to 87, wherein the method further comprises:
sending, by the first ECS, an identifier of the network on which the terminal currently camps to the EES.

89. A communication apparatus, wherein the apparatus comprises a module configured to perform the method according to any one of claims 1 to 28, the method according to any one of claims 29 to 39, or the method according to any one of claims 40 to 88.

90. A communication apparatus, wherein the communication apparatus comprises a processor, and the processor is configured to execute instructions stored in a memory, so that the communication apparatus performs the communication method according to any one of claims 1 to 28, the communication method according to any one of claims 29 to 39, or the communication method according to any one of claims 40 to 88.

91. A computer-readable storage medium, wherein the computer-readable storage medium comprises a computer program or instructions, and when the computer program or the instructions are run on a computer, the computer is enabled to perform the communication method according to any one of claims 1 to 28, the communication method according to any one of claims 29 to 39, or the communication method according to any one of claims 40 to 88.

92. A communication method, wherein the method comprises:
obtaining, by a first network element, an authentication mechanism supported by each of at least one network;
sending, by the first network element to a terminal, first information associated with the at least one network, wherein the first information comprises an authentication mechanism supported by each of the at least one network, and the at least one network comprises a network in which an application function AF is located;
receiving, by the terminal, first information from the first network element;
obtaining, by the terminal, a target authentication mechanism based on an authentication mechanism supported by the terminal, the first information, and the network in which the AF is located; and
establishing, by the terminal, a secure communication connection to the AF by using the target authentication mechanism.

93. The method according to claim 92, wherein the method further comprises:
obtaining, by the AF, the first information;
obtaining, by the AF, the target authentication mechanism based on an authentication mechanism supported by the AF, the first information, and the network in which the AF is located; and
establishing, by the AF, a secure communication connection to the terminal by using the target authentication mechanism.

94. A communication system, wherein the communication system comprises at least one of a terminal, a first network element, or an application function AF, the terminal is configured to perform the method according to any one of claims 1 to 28, the first network element is configured to perform the method according to any one of claims 29 to 39, and the AF is configured to perform the method according to any one of claims 40 to 88.
